**Europäisches Patentamt**

**European Patent Office**

**Office européen des brevets**

(19)

(11) **EP 0 796 007 B1**

(12) **EUROPÄISCHE PATENTSCHRIFT**

(45) Veröffentlichungstag und Bekanntmachung des Hinweises auf die Patenterteilung:
**21.01.2004 Patentblatt 2004/04**

(51) Int Cl.⁷: **H04N 5/04**, H04N 5/937, H04N 5/932

(21) Anmeldenummer: **96103970.8**

(22) Anmeldetag: **13.03.1996**

(54) **Schaltung zur Zeilen- und Bildsynchronisation eines digitalisierten Videosignals**

Lines and frame synchronization circuit for a digital video signal

Circuit pour la synchronisation de lignes et d'image d'un signal vidéo numérisé

(84) Benannte Vertragsstaaten:
**DE FR GB IT**

(43) Veröffentlichungstag der Anmeldung:
**17.09.1997 Patentblatt 1997/38**

(73) Patentinhaber: **DEUTSCHE THOMSON-BRANDT GMBH**
**78048 Villingen-Schwenningen (DE)**

(72) Erfinder: **Koch, Michael, Dipl.-Ing.**
**81927 München (DE)**

(74) Vertreter: **Wördemann, Hermes, Dipl.-Ing.**
**Deutsche Thomson-Brandt GmbH,**
**Licensing & Intellectual Property,**
**Karl-Wiechert-Allee 74**
**30625 Hannover (DE)**

(56) Entgegenhaltungen:
EP-A- 0 220 007     DE-C- 4 301 258
US-A- 4 121 242     US-A- 4 368 492
US-A- 5 179 477

**Beschreibung**

Da die Digitaltechnik immer preiswerter und leistungsfähiger wird und somit auch zur Realisierung von Schaltungen in Massenprodukten, wie z. B. Fernsehgeräten, geeignet ist, verdrängt sie zunehmend die klassische analoge Technik, mit der heutige Fernsehempfänger das Videosignal noch größtenteils verarbeiten und in denen bisher nur Weniges, wie beispielsweise die 100-Hz-Bildfrequenz-Technik oder die Steuerung der Vertikal-Ablenkung, digital realisiert wurde.

Um die analoge Signalverarbeitung im Fernsehgerät zunehmend durch eine digitale zu ersetzen, müssen die dafür notwendigen Verfahren und Schaltungen entwickelt werden, wie z. B. eine digitale Synchronisationsschaltung, die das Thema dieser Diplomarbeit ist. Auch das bisherige analoge Fernsehbild-Übertragungsverfahren soll zukünftig durch ein digitales ersetzt werden, welches ein Fernsehbild höherer Qualität erzeugen wird. Die digitale Signalverarbeitung analoger Videosignale wird dann trotzdem noch von Bedeutung sein, denn aus Gründen der Kompatibilität müssen Aufnahmen von alten Videorecordern vom Fernsehgerät dargestellt werden können. Digitale Speichergeräte für Fernsehaufnahmen werden vermutlich noch lange für viele Käufer zu teuer im Vergleich zu herkömmlichen Videorecordern sein, so daß auf die analoge Speicherung auf dem Magnetband nicht verzichtet werden kann. Diese benötigt eine relativ aufwendige und teure Feinmechanik. Da Videorecorder für den normalen Benutzer preiswert sein müssen, spart der Hersteller u. a. an der Mechanik. Jeder, der schon einmal ein im Suchlauf erzeugtes Bild oder ein Standbild eines Videorecorders gesehen hat, kennt die horizontalen Störstreifen oder das vertikale Zittern, die durch ein nicht der Norm entsprechendes Videosignal entstehen.

Im Gegensatz zur analogen Technik bietet die digitale Technik deutlich mehr Möglichkeiten der Art der Verarbeitung, da die Suche nach einem physikalischen System für die Realisierung mathematischer Verfahren entfällt und man nur indirekt an die physikalischen Grenzen, wie z. B. die maximal mögliche Taktrate der integrierten Schaltkreise, stößt. Ist die digitale Realisierung aber zu teuer, wird man sich weiterhin für eine analoge entscheiden.

Das im Rahmen dieser Diplomarbeit entwickelte Synchronisationsverfahren macht Gebrauch von den erweiterten Möglichkeiten der digitalen Signalverarbeitung. Mit dem digitalen Synchronisationsverfahren kann man den Einfluß mancher Störungen, die analoge Videorecordersignale enthalten, erheblich verringern.

Im folgenden Kapitel 2 wird zunächst die analoge Fernseh-Bildübertragung beschrieben, die sich seit ihrer Erfindung nur wenig geändert hat. In Kapitel 3 befinden sich Erläuterungen über Videosignalquellen und die Störungen, die das Signal enthalten kann und die Synchronisation problematisch machen. Ferner sind einige Beispiele von Videosequenzen dargestellt, die charakteristische Fehler enthalten. Kapitel 4 enthält die Beschreibung der analogen Synchronsignalverarbeitung, wie sie in heutigen Fernsehempfängern realisiert ist. Das in dieser Arbeit erfundene Synchronisationsverfahren wird in Kapitel 5 beschrieben, dessen letzter Abschnitt die mit dem neuen Verfahren in Simulationen synchronisierten Videosequenzen aus Kapitel 3 enthält. Im Anhang sind die für die Simulation erstellten C-Programme aufgeführt und dokumentiert.

Aus der US-A-5 335 074 ist ein Gerät zur Formatumwandlung von Videosignalen bekannt, das die Videosignale vorliegend im sogenannten Studioformat CCIR 601 umsetzt in das PAL-Fernsehformat. Die Videozeilen im Studioformat werden zunächst mit einer Abtastfrequenz von 27 MHz abgetastet und digitalisiert. Die Abtastrate für das PAL-System beträgt idealerweise 17,7 MHz. Die Umsetzung in dieses Abtastraster erfolgt getrennt nach Luminanz- und Chrominanzkomponenten. Dazu ist ein Abtastratenwandler vorgesehen, der auch eine Interpolationsfilterstufe beinhaltet. Diese Interpolationsfilterstufe enthält separate Interpolationsstufen für das Luminanzsignal und die beiden Chrominanzsignale. Die Interpolatorsteuerung geschieht mit Koeffizienten-Adreßsignalen, die unterschiedliche Koeffizientensätze, z. B. für das $C_R$ und $C_B$ Signal auswählen.

1.1 Erfindung

Die Aufgabe der Erfindung besteht darin, eine Vorrichtung zur Zeilensynchronisation eines Videosignals anzugeben, die einfach mit digitalen Schaltungen realisierbar ist und die insbesondere in der Lage ist, bei Auftreten von Schwankungen in der Zeilendauer der Videozeilen dadurch bedingte Bildstörungen zu vermeiden.

Diese Aufgabe wird gelöst durch die in Anspruch 1 angegebenen Merkmale.

Vorteilhafte Weiterbildungen und Verbesserungen der in Anspruch 1 angegebenen Lösung sind in den abhängigen Ansprüchen aufgelistet.

1.3 Zeichnungen

Ausführungsbeispiele der Erfindung sind in den Zeichnungen dargestellt und werden in der nachfolgenden Beschreibung näher erläutert. Es zeigen:

Fig. 1    das Videozeilenraster und die Strahlrückführung beim Abtasten der Bildvorlage bzw. beim Schreiben des Bildes auf einen Bildschirm;

Fig. 2    die Aufteilung des Gesamtrasters (vergleiche Fig. 1) in zwei Halbraster beim Zeilensprungverfahren;

Fig. 3    das Horizontal- Synchronsignal innerhalb einer Videozeile nach CCIR-Norm B, G;

Fig. 4    ein Vertikal- Synchronsignal und seine Aufintegration über 160 µs mit ungleichen Flanken in Abhängigkeit von der Halbbildnummer;

Fig. 5    das Vertikal- Synchronsignal mit Vor- und Nachimpulsen zur Vermeidung ungleicher Flanken bei seiner Aufintegration;

Fig. 6    das Vertikal- Synchronsignal innerhalb einer Videosequenz;

Fig. 7    die Aufzeichnung des FBAS-Signals beim Videorekorder sowie verschiedene Wiedergabemodi;

Fig. 8    die Pegeländerung des FBAS-Signals bei Wechselspannungskopplung;

Fig. 9    ein Blockschaltbild für die Gewinnung des Komposit-Synchronsignals aus einem FBAS-Signal;

Fig. 10    ein Blockschaltbild für die Erzeugung des Steuersignals für die Horizontalablenkung;

Fig. 11    ein Blockschaltbild für eine Regelschaltung für die Horizontalablenkung;

Fig. 12    die Struktur eines Korrelationsfilters zur Bestimmung der Horizontal-Synchronimpulsposition;

Fig. 13    die Verschiebung eines Impulses um einen Bruchteil eines Pixels;

Fig. 14    die Korrelationsfunktion des Impulses aus Fig. 13, ihre Ableitung, ihre über M=8 Werte gemittelte Ableitung und deren Differenz;

Fig. 15    die Struktur eines Filters zur Bestimmung der Ableitung der Korrelationsfolge;

Fig. 16    die Struktur eines Filters zur Mittelung einer Abtastwertefolge über M-Werte;

Fig. 17    die Zeilenperiodendauerfolge am Ausgang des Synchronsignaldetektors;

Fig. 18    das mittlere Phasenrauschen bei der Synchronimpulsdetektion durch Korrelation in Abhängigkeit vom SNR des Synchronsignals;

Fig. 19    die Weiterverarbeitung der Zeilenperiodendauerfolge im Horizontal-Synchronsignalgenerator und die Ausnutzung der Phasen- und Frequenzmodulation der Synchronimpulse zur Vertikalsynchronisation;

Fig. 20    eine Videosequenz nach sechsfach kopierter Aufnahme, bei normaler Wiedergabe;

Fig. 21    die horizontal synchronisierte Videosequenz aus Fig. 20;

Fig. 22    die horizontal und vertikal synchronisierte Videosequenz aus Fig. 20;

Fig. 23    eine Videosequenz beim Suchlauf mit doppelter Geschwindigkeit, bei einem Zweikopfvideorekorder nach dem VHS Standard;

Fig. 24    die horizontal synchronisierte Videosequenz aus Fig. 23;

Fig. 25    die horizontal und vertikal synchronisierte Videosequenz aus Fig. 23;

Fig. 26    eine Videosequenz bei einem Suchlauf mit vierfacher Geschwindigkeit bei einem Vierkopf-SVHS Videorekorder;

Fig. 27    die horizontal synchronisierte Videosequenz aus Fig. 26;

Fig. 28    die horizontal und vertikal synchronisierte Videosequenz aus Fig. 26;

Fig. 29    eine Videosequenz nach zweifach kopierter Aufnahme im Standbildbetrieb;

Fig. 30    die horizontal synchronisierte Videosequenz aus Fig. 29;

Fig. 31    die horizontal und vertikal synchronisierte Videosequenz aus Fig. 29;

Fig. 32    eine Videosequenz nach sechsfach kopierter Aufnahme beim Zeitrafferbetrieb;

Fig. 33    die horizontal synchronisierte Videosequenz aus Fig. 32;

Fig. 34    die horizontal und vertikal synchronisierte Videosequenz aus Fig. 32;

Fig. 35    eine über Kabel empfangene Videosequenz im 16:9 Format;

Fig. 36    die horizontal und vertikal synchronisierte Videosequenz aus Fig. 35;

Fig. 37    ein Flußdiagramm für das Programm mkpgm.c (Headerwechsel);

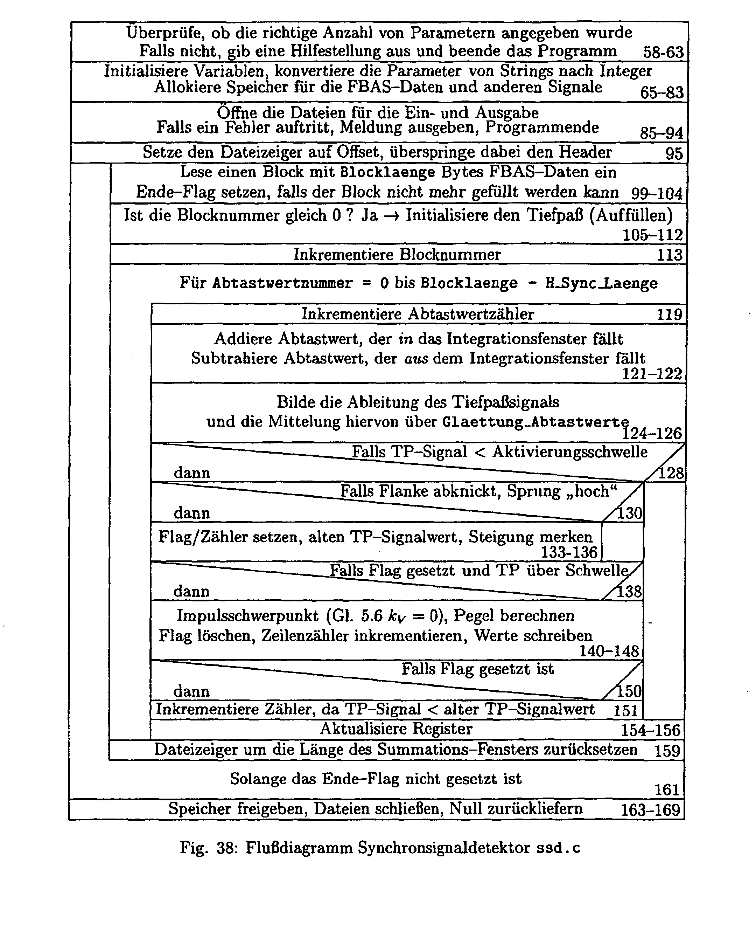

Fig. 38    ein Flußdiagramm für das Programm Synchronsignaldetektor ssd.c;

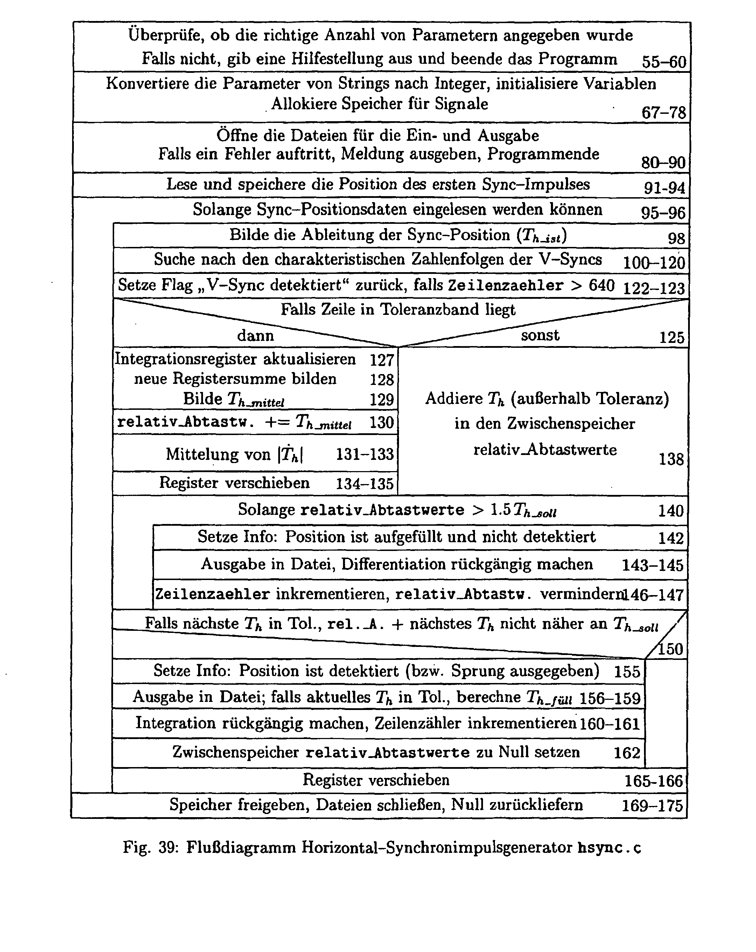

Fig. 39    ein Flußdiagramm für das Programm Horizontal- Synchronimpulsgenerator hsync.c;

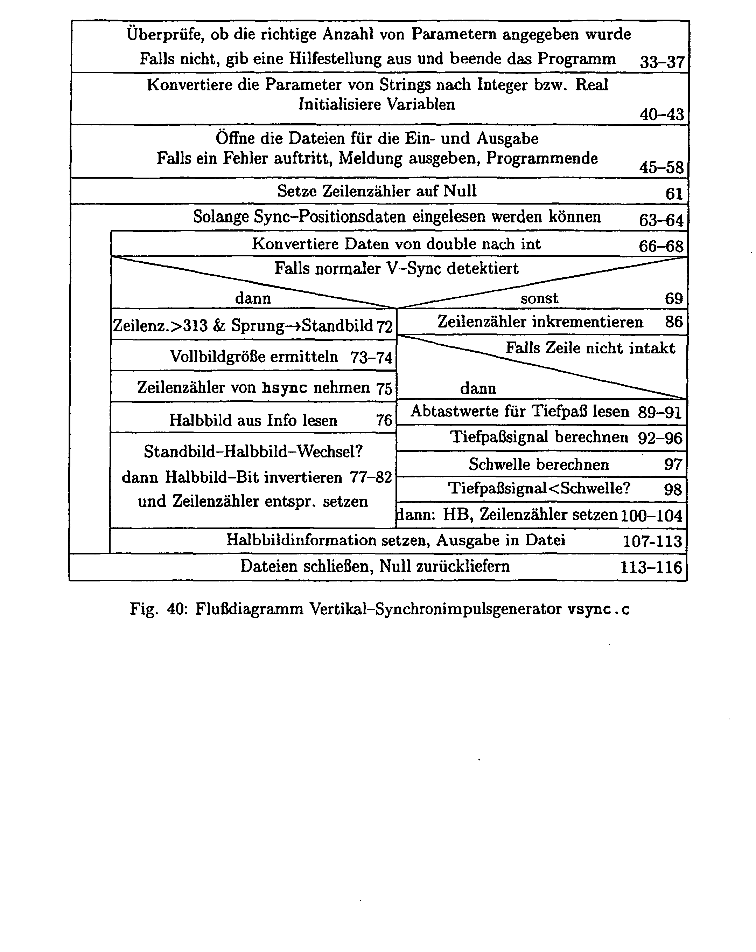

Fig. 40    ein Flußdiagramm für das Programm Vertikal-Synchronimpulsgenerator vsync.c;

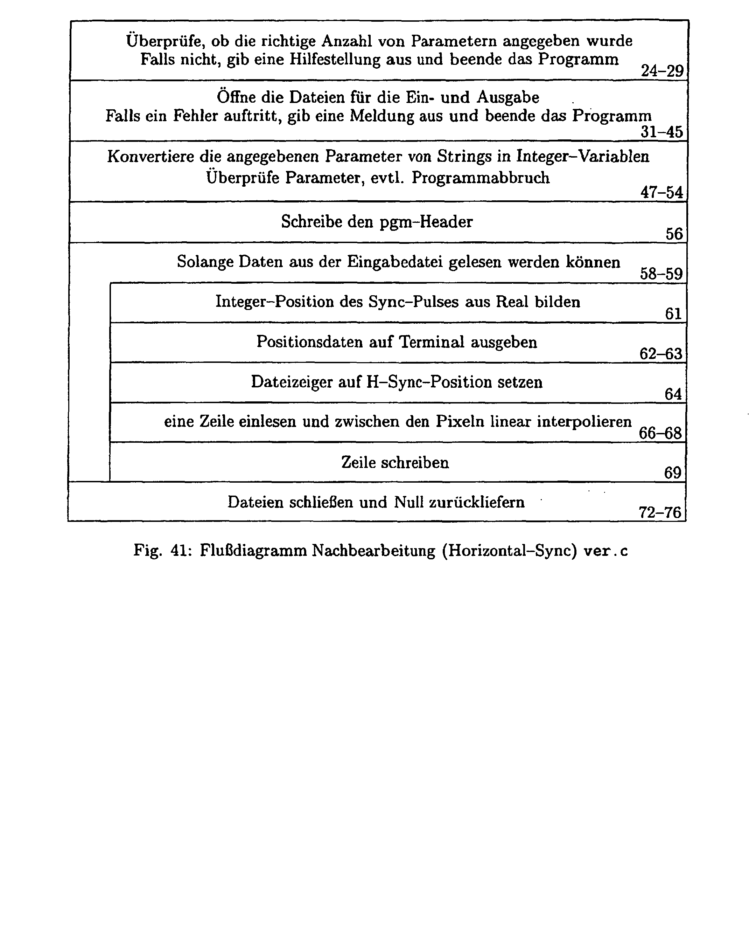

Fig. 41    ein Flußdiagramm für ein Programm zur Nachbearbeitung (Horizontal-Sync.) ver.c,

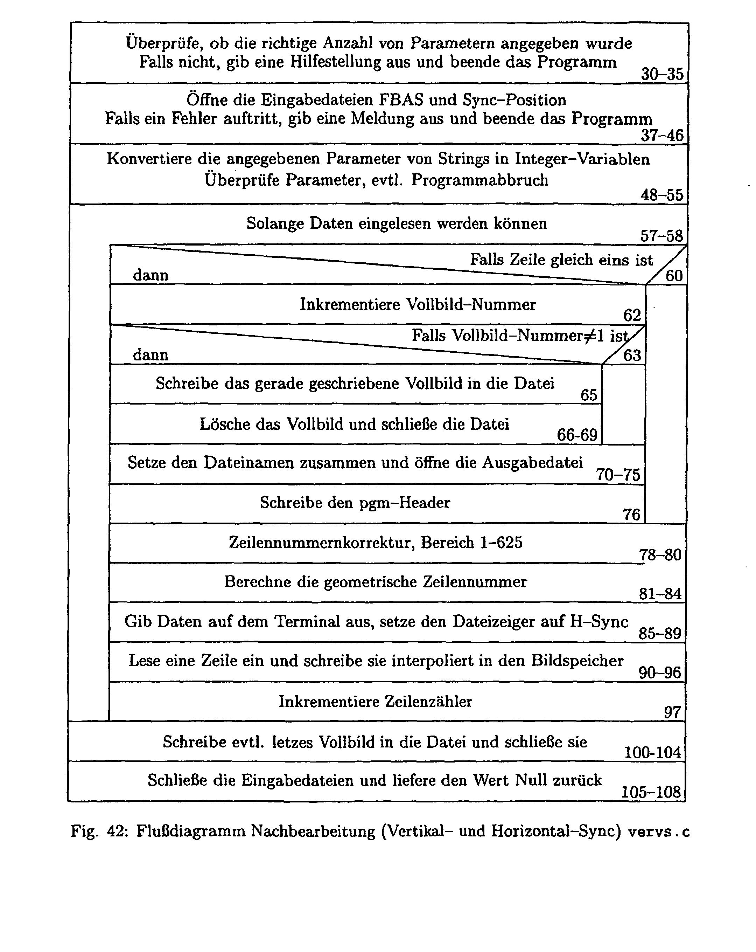

Fig. 42    ein Flußdiagramm zur Nachbearbeitung (Vertikal- und Horizontal-Sync.) vervs.c;

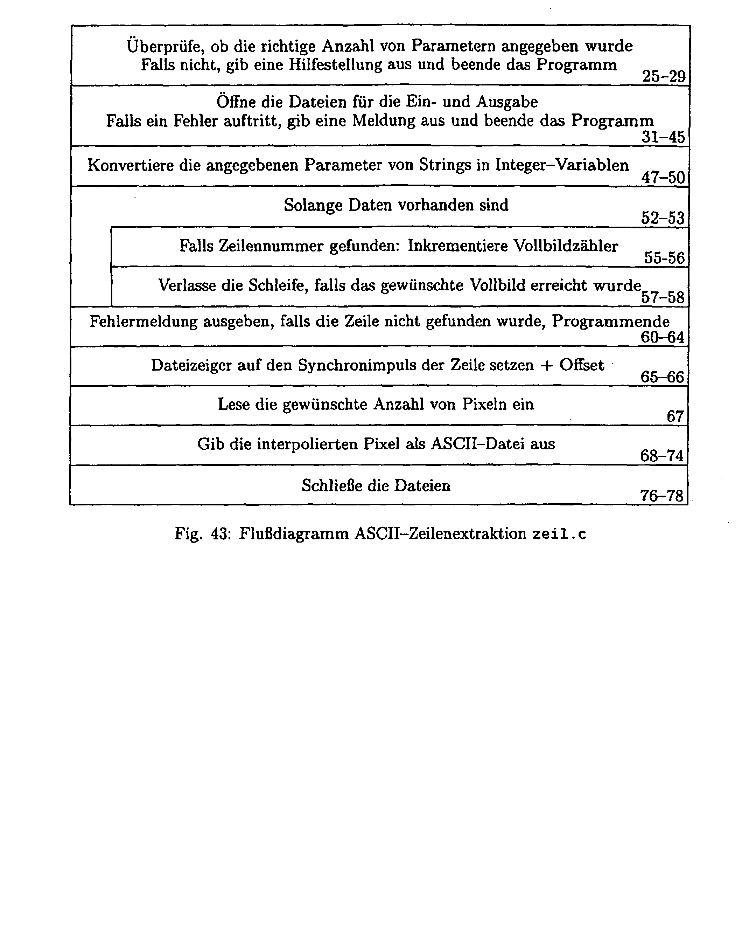

Fig. 43    ein Flußdiagramm für ein Programm zur ASCII-Zeilenextraktion zeil.c;

Fig. 44    ein Schaubild für die Aufteilung der FBAS-Datei in Blöcke und

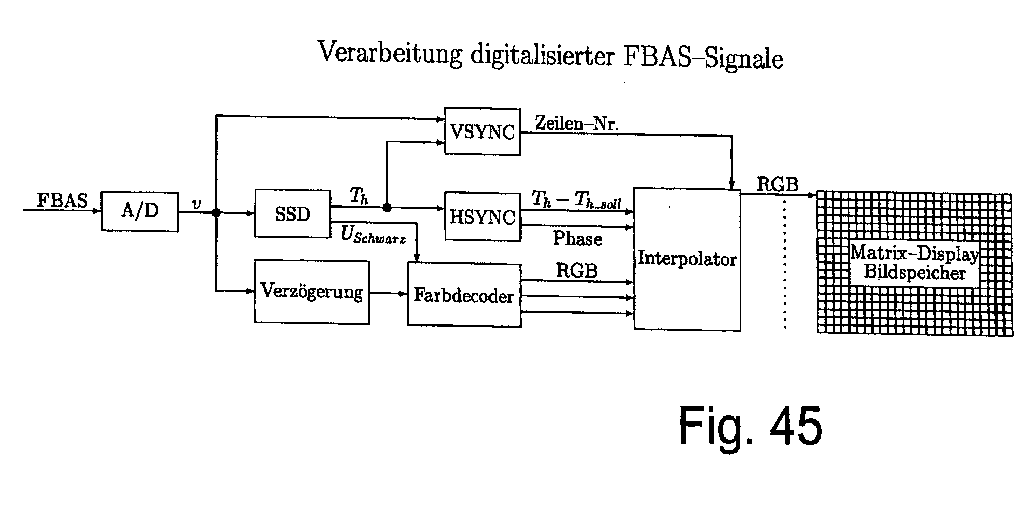

Fig. 45    ein Blockdiagramm für die Verarbeitung digitalisierter FBAS-Signale gemäß der Erfindung.

## 2. Das Prinzip der Fernseh-Bildübertragung

Das Fernsehen beruht auf der fortlaufenden Umwandlung der Helligkeits- und Farbverteilung einer Bildvorlage in ein elektrisches Signal, welches man über Leitungen oder Funk zum Empfänger überträgt, der daraus ein optisches Abbild der Vorlage erzeugt. Dieses Kapitel soll den genauen Aufbau dieses Signals erläutern, der u. a. auch historisch bedingt ist.

## 2.1 Bildabtastung

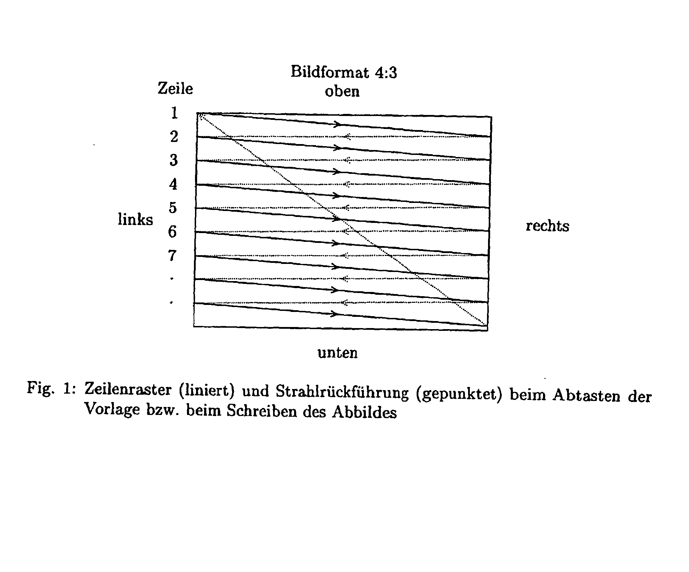

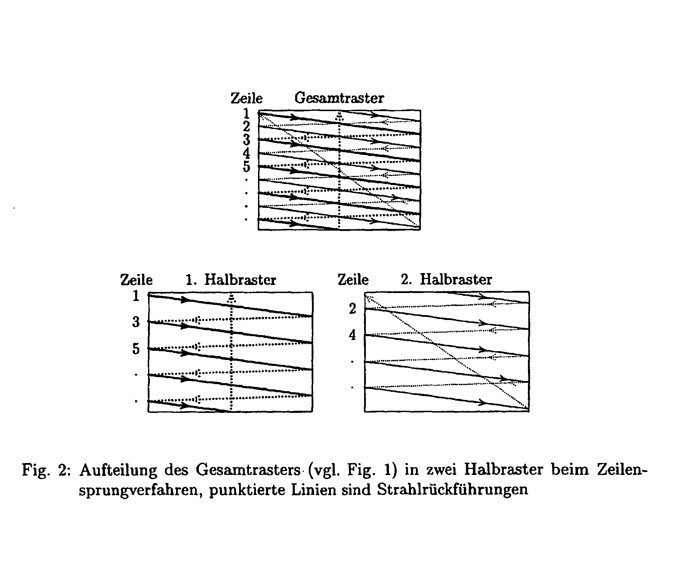

Zur folgenden Erklärung betrachte man Fig. 1. Die ersten Fernsehkameras enthielten Röhren, in denen ein Elektronenstrahl eine die Bildvorlage enthaltende lichtempfindliche Schicht zeilenweise horizontal von links nach rechts und vertikal von oben nach unten abtastete. Die an einem bestimmten Ort der Vorlage entstehende Signalspannung ist dessen Helligkeit nahezu proportional. Beim Empfänger läuft der Schreibstrahl in gleicher Weise über die Bildröhre und erzeugt darauf mit Hilfe der Spannung des empfangenen Signals das Abbild. Sind die Strahlen am Ende einer Zeile bzw. eines Bildes angelangt, springen sie zur nächsten Zeile bzw. zum nächsten Bild, was in Fig. 1 durch die Punktierung kenntlich gemacht ist.

Die Strahlen werden sowohl horizontal als auch vertikal kontinuierlich abgelenkt, was zu einer Schräglage der Zeilen führt, die aber bei einer höheren Anzahl von Zeilen kaum auffällt. Der Abtast- und der Schreibstrahl können bei Bildröhren aus physikalischen Gründen nicht beliebig schnell von Zeile zu Zeile und von Bild zu Bild springen. Der Zeitraum, in dem die Strahlen zurücklaufen und der deshalb nicht zur Übertragung von Bildinformation nutzbar ist, wird Austastlücke genannt. Während des Strahlrücklaufs wird die Signalspannung auf einem Wert festgehalten, der geringfügig niedriger als der Wert ist, den eine schwarze Vorlage hervorrufen würde, um die Strahlen am Abtasten bzw. Schreiben zu hindern. Dieser Wert wird Austastwert genannt, da der Strahl seine eigentliche Funktion kurzzeitig nicht ausführen muß. Zugunsten einer besseren Ausnutzung des Aussteuerbereiches sind der Austast- und der Schwarzwert bei der Signalübertragung identisch.

## 2.2 Örtliche und zeitliche Bildauflösung

Der optimale Blickwinkel für die Betrachtung eines Bildes, der die Augenmuskulatur nicht ermüden läßt, beträgt ca. 10°. Mit einem mittleren Auflösungsvermögen des menschlichen Auges von ca. 1' erhält man durch die Division dieser beiden Winkel eine untere Grenze der Zeilenanzahl von ca. 600. In der CCIR[1]-Norm wurde ein Wert von 625 Zeilen festgelegt. Wegen der vertikalen Austastlücke sind davon aber nur maximal 575 sichtbar. Der Bandbreitebedarf des Videosignals wächst quadratisch mit der Zeilenzahl, die daher nicht höher als unbedingt nötig gewählt wurde.

Die horizontale Auflösung ist durch die minimale Zeitdauer begrenzt, die das Bildsignal bei einer vorgegebenen Bandbreite benötigt, einer scharfen, vertikalen Helligkeitsstufe in der Bildvorlage so zu folgen, daß das Auge gerade noch keine Helligkeitsschwankungen in den beiden Flächen unterschiedlicher Helligkeit erkennen kann. Außerdem hängt die Auflösung vom Bildformat ab. Wird z. B. ein vertikales Liniengitter mit einem breiteren Format abgetastet, muß eine größere Anzahl von vertikalen Linien im gleichen Zeitintervall übertragen werden, was einer höheren Signalfrequenz entspricht. Das neuere 16:9-Format hat also bei der gleichen Signalbandbreite eine schlechtere horizontale Auflösung als das herkömmliche 4:3-Format.

Beim Fernsehen werden 25 (Voll-)Bilder pro Sekunde übertragen. Das Auge kann bei dieser Frequenz die Bilder nicht mehr einzeln wahrnehmen. Bewegungen in der Bildvorlage erscheinen ihm somit fließend. Diese Bildwiederholfrequenz ist jedoch zu gering, um bei Bildröhren eine flimmerfreie Bildwiedergabe zu erreichen, und sollte mindestens den doppelten Wert aufweisen. Dadurch würde aber die Bandbreite des Videosignals auf das Doppelte ansteigen, was zur Folge hätte, daß nur die halbe Anzahl von Übertragungskanälen im für dem Fernsehen zugewiesenen Frequenzbereich zur Verfügung stünden und auch die Anforderungen an die Schaltungstechnik in der Kamera und im Fernseher würden anwachsen. Mit einer Halbierung der Zeilenanzahl könnte man bei gleichbleibender Bandbreite die Bildwechselfrequenz ebenso verdoppeln, aber die vertikale Auflösung wäre dann unzureichend.

Eine Lösung dieses Problems ist das Zeilensprungverfahren, dessen Abtastraster in Fig. 2 dargestellt ist. Man teilt dazu das Gesamtraster in zwei ineinander verschachtelte Halbraster mit der halben Zeilenanzahl des Gesamtrasters auf. Die Halbbildfrequenz steigt auf den geforderten doppelten Wert von 50 Hz, ohne dabei die statische vertikale Auflösung des mit nur 25 Hz geschriebenen Vollbildes zu verringern oder die Bandbreite zu erhöhen. An kontrastreichen horizontalen Kanten bleibt aber ein Flimmern mit 25 Hz bestehen (Kantenflimmern).

Die ältere amerikanische FCC[2]-Norm schreibt eine Zeilenanzahl von 525 Zeilen pro Vollbild und eine Halbbildfrequenz von 60 Hz vor, was mit der Signalbandbreite und der dort verwendeten Stromnetzfrequenz zusammenhängt.

## 2.3 Synchronsignale

Um sicherstellen zu können, daß der Lese- und der Schreibstrahl gleichzeitig eine neue Zeile bzw. ein neues Bild zu schreiben beginnen, werden dem Signal in den Austastlücken zusätzliche Synchronzeichen hinzugefügt, die

---

[1]Comité Consultativ International des Radiocommunications
[2]Federal Communications Commission

den Beginn einer neuen Zeile bzw. eines neuen Bildes markieren. Die Synchronsignale werden mit einem Spannungspegel übertragen, der sich weit unterhalb des Schwarzwertes befindet, damit sie vom Bildsignal gut zu unterscheiden sind.

**Das Zeilen-Synchronsignal**

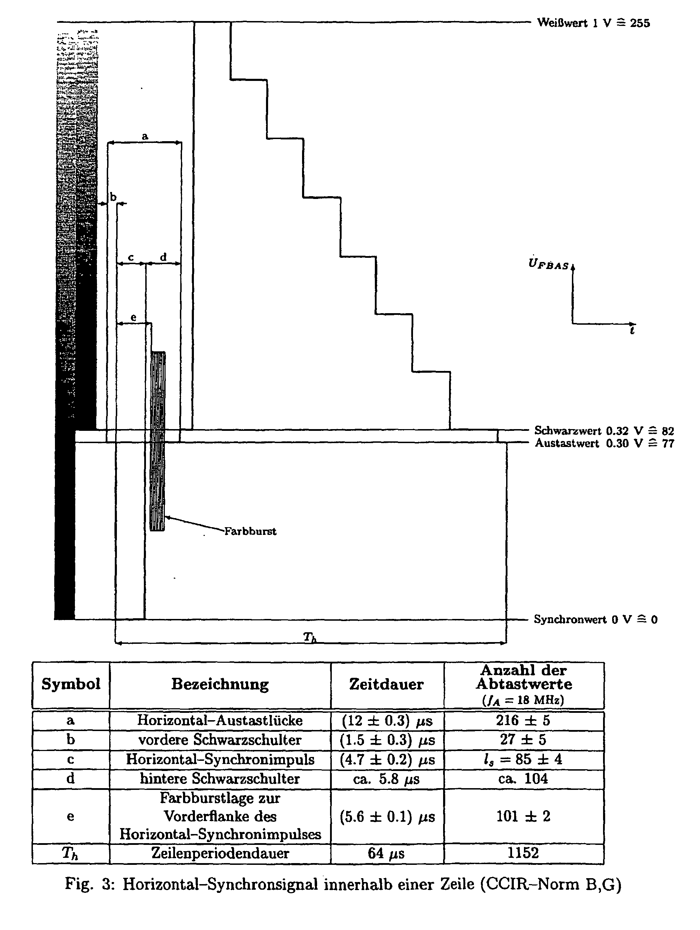

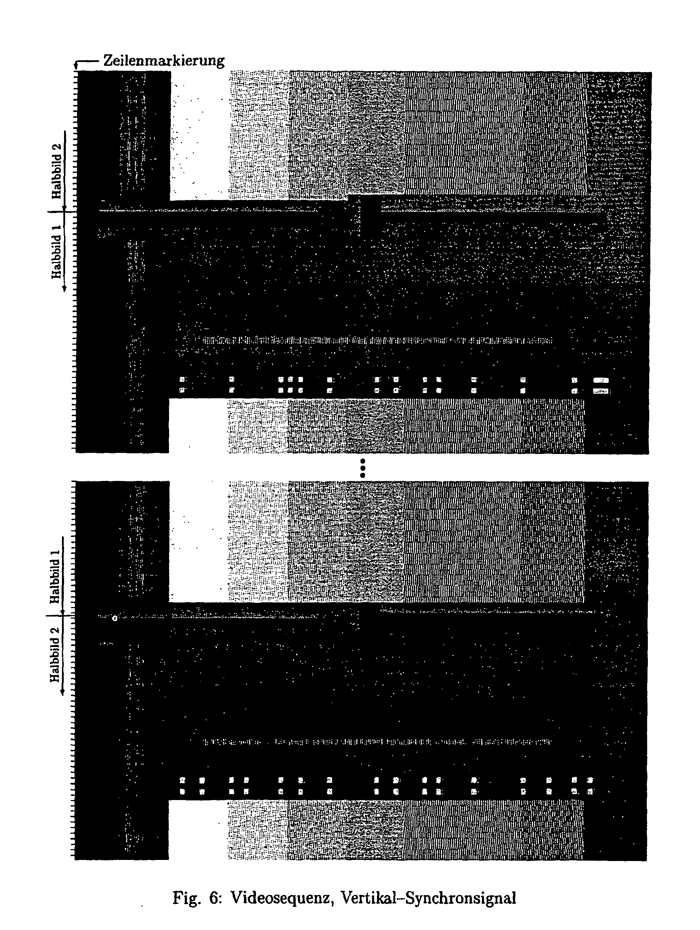

In Fig. 3 ist der Verlauf des FBAS[3]-Signals, das alle Informationen enthält, die der Fernsehempfänger benötigt, um ein farbiges Bild darstellen zu können, bei einer Grautreppenvorlage während einer Zeilenperiode dargestellt. Die Farbübertragung wird in Abschnitt 2.4 erklärt. Die rechte Grauskala gibt die Zuordnung zwischen Spannung und Grauwert auf dem Bildschirm an, die linke diejenige zwischen Abtastwert und dem Grauwert der graphischen Darstellungen der Videosequenzen wie z. B. in Fig. 6. Die Zahlenwerte rechts neben den Spannungswerten beziehen sich auf eine lineare Quantisierung des Signals mit acht bit (die Parameterwahl bei der Digitalisierung des Videosignals wird in Abschnitt 5.1 erläutert).

Damit der Strahlrücklauf sicher in der Horizontal-Austastlücke (a) stattfindet, beginnt der Horizontal-Synchronimpuls (c), dessen Schwerpunkt den Anfang einer neuen Zeile markiert, erst 1.5 μs (b) nach dem Ende der Bildinformation der vergangenen Zeile. Die hintere Schwarzschulter (d) dient als Bezugspegel und bei der PAL[4]- und NTSC[5]-Farbfernsehnorm zur Aufnahme des Farbbursts, dessen Funktion in Abschnitt 2.4 erläutert wird.

**Das Bild-Synchronsignal**

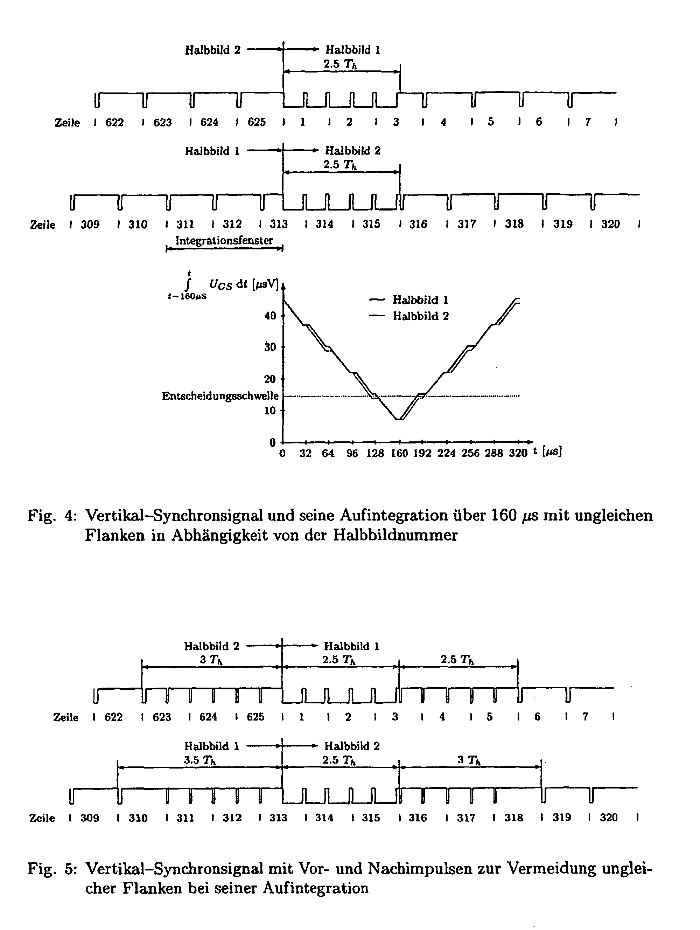

Der in Fig. 5 dargestellte Vertikal-Synchronimpuls wird in der Vertikal-Austastlücke übertragen, die 160 μs vor dem eigentlichen Vertikal-Synchronimpuls beginnt und deren Länge 25 Zeilenperioden und eine Horizontal-Austastdauer beträgt. Um den Bild-Synchronimpuls bei gleichem Pegel vom Zeilen-Synchronimpuls unterscheiden zu können, ist seine Zeitdauer mit 2.5 Zeilenperiodendauern ($\simeq$160 μs) wesentlich größer; er wird aber mehrfach kurz unterbrochen, um eine Zeilensynchronisierung zu ermöglichen. Wegen des zeitlichen Versatzes der Halbraster des Zeilensprungverfahrens um eine halbe Zeile (siehe Fig. 2) erfolgt diese Unterbrechung im Abstand einer halben Zeilendauer. Das Zeilensprungverfahren führt auch zur Verschiebung des Vertikal-Synchronimpulses um eine halbe Zeile in bezug auf den letzten Horizontal-Synchronimpuls von einem zum anderen Halbbild.

Aus einer Integration über 160 μs des vollständigen Synchronsignals (Composite-Synchronsignal $U_{CS}$, vgl. Abschnitt 4.1), die früher mit einem RC-Tiefpaß realisiert wurde, erhält man bei einer Unterschreitung eines Schwellwerts die Information, daß ein Vertikal-Synchronimpuls gesendet wurde. Befänden sich nun vor bzw. nach dem Bild-Synchronimpuls gewöhnliche Zeilen-Synchronimpulse wie in Fig. 4, so läge bei der Integration des Vertikal-Synchronimpulses bei den zwei Halbbildern zeitweise eine unterschiedliche Anzahl von Horizontal-Synchronimpulsen im Integrationsfenster, was je nach Lage des Schwellwertes zu einem unterschiedlichen Einsatz der Vertikal-Synchronisierung bei den einander zugeordneten Halbbildern und zu einem ungleichmäßigen Abstand der Zeilen ("Paarigkeit der Zeilen") im Gesamtraster führen könnte, das in Fig. 2 zu sehen ist. Daher hat man die Horizontal-Synchronimpulse vor und nach dem Vertikal-Synchronimpuls durch je fünf Vor- und Nachimpulse der halben Länge eines Horizontal-Synchronimpulses im Abstand einer halben Zeile ersetzt, wie es in Fig. 5 zu sehen ist, damit die Flanken des aufintegrierten Vertikal-Synchronimpulses bei beiden Halbbildern gleich sind. In Fig. 6 sind sämtliche im Videosignal auftretenden Austastlücken und Synchronsignale enthalten.

Die in der Fernsehtechnik übliche Zeilennumerierung in den Abbildungen 4 und 5 erfolgt durchlaufend von 1 bis 625, wobei die Zeilennummern 1 bis 313 zum Halbbild 1 und die weiteren Nummern zum Halbbild 2 gehören, entgegen der Aufteilung in gerade und ungerade Zeilennummern wie in Fig. 2.

**2.4 Farbfernsehen**

Das menschliche Auge nimmt die Farben über drei verschiedene Arten von farbempfindlichen Sinneszellen wahr, die die Wellenlängenverteilung bei verschiedenen Frequenzen bewerten. Auf dem Bildschirm muß also nicht die exakte Verteilung erzeugt werden, die die Bildvorlage abgibt, denn das Auge soll nur die Farben der Vorlage vermittelt bekommen. Es müssen also drei Signale übertragen werden, die durch Bildabtastung in verschiedenen Bereichen des Farbspektrums entstehen, z. B. im roten, grünen und blauen Bereich des Spektrums. Damit das Farbfernsehen mit dem Schwarzweißfernsehen kompatibel bleibt, werden diese Signale in das Helligkeitssignal umgerechnet. Der Empfänger muß neben dem Leuchtdichtesignal zwei Farbdifferenzsignale (üblicherweise Blau minus Leuchtdichte und Rot minus Leuchtdichte) erhalten, um sich die drei Farbsignale berechnen zu können.

Zur Übertragung der Farbinformation bietet sich die Quadraturamplitudenmodulation (QAM) an, da mit ihr

[3]Farb-Bild-Austast-Synchron
[4]Phase Alternating Line (europäische Farbfernsehnorm)
[5]National Television Standards Committee (amerikanische Farbfernsehnorm)

zwei Signale im gleichen Frequenzbereich übertragen werden können. Das Helligkeitssignal und die Farbsignale weisen wegen ihrer annähernden Periodizität ein Linienspektrum auf, so daß die Lücken des Leuchtdichtesignalspektrums unterhalb der Grenzfrequenz von 5 MHz mit den Spektrallinien des QAM-Farbsignalspektrums besetzt werden können und folglich die Bandbreite des Fernsehsignals durch die Farbinformation nicht erhöht wird. Die Helligkeit und die Farbe werden bei dieser Norm also im Frequenzmultiplex übertragen. In manchen Fällen stört die Farbinformation die Helligkeitsinformation und umgekehrt. Farbstörungen treten auf, falls die Leuchtdichte den Frequenzbereich belegt, der für die Übertragung der Farbe gewählt wurde, z. B. bei feinen Karomustern in der Bildvorlage. Helligkeitsstörungen entstehen durch den Farbträger, der an bewegten Farbkanten nur unzureichend unterdrückt werden kann.

Da es sich bei der Quadraturamplitudenmodulation um ein kohärentes Übertragungsverfahren handelt, muß der Oszillator im Demodulator mit dem Oszillator im Modulator synchronisiert werden. In der horizontalen Austastlücke ist auf der hinteren Schwarzschulter, vergleiche (d) in Fig. 3, ausreichend Platz vorhanden, um ca. zehn Schwingungen des Trägers für die Synchronisierung im Farbburst unterzubringen. Phasenfehler führen zu störenden Farbfehlern, weshalb bei der PAL-Norm ein Farbdifferenzsignal von Zeile zu Zeile in seiner Phase um 180° verändert wird, was dieser Farbfernsehnorm den Namen gegeben hat (Phase Alternating Line). Durch die Phasenumtastung von Zeile zu Zeile kann der Farbfehler in einen Farbsättigungsfehler umgerechnet werden, falls sich die Farbinformation von Zeile zu Zeile nicht zu sehr ändert.

Der Empfänger erzeugt aus dem Helligkeitssignal und den Farbdifferenzsignalen wieder die drei Farbauszugsignale Rot, Grün und Blau, mit denen jeweils ein Strahl angesteuert wird, der die richtige farberzeugende Schicht auf dem Bildschirm treffen muß, da sonst wiederum Farbfehler auftreten würden. In den in dieser Arbeit dargestellten Videosequenzen ist der die Farbinformationen enthaltende Hilfsträger als Muster erkennbar, wie z. B. in den Graustufen der Fig. 6. Für detailliertere Informationen sei auf [3] verwiesen.

### 3. Videosignalquellen

Im folgenden Text wird kurz die unterschiedliche Qualität der Videosignale von verschiedenen Quellen erläutert. Um die verminderte Qualität der Videorecordersignale verstehen zu können, werden auch das Aufzeichnungsverfahren und die Wiedergabeverfahren von Videorecordern erklärt. Ein weiterer Abschnitt befaßt sich mit den Problemen, die bei der Synchronisation von Videorecordersignalen entstehen.

Am Ende des Kapitels befindet sich eine Sammlung von Videosequenzen, die aus 1250 Zeilen, d. h. vier Halbbildern, und 1152 Pixeln pro Zeile bestehen, der Maßstab beträgt vertikal $62.5 \frac{\text{Zeilen}}{\text{cm}}$ und horizontal etwa $4 \frac{\mu\text{s}}{\text{cm}} = 73 \frac{\text{Pixel}}{\text{cm}}$.

### 3.1 Videosignale von Fernsehsendern

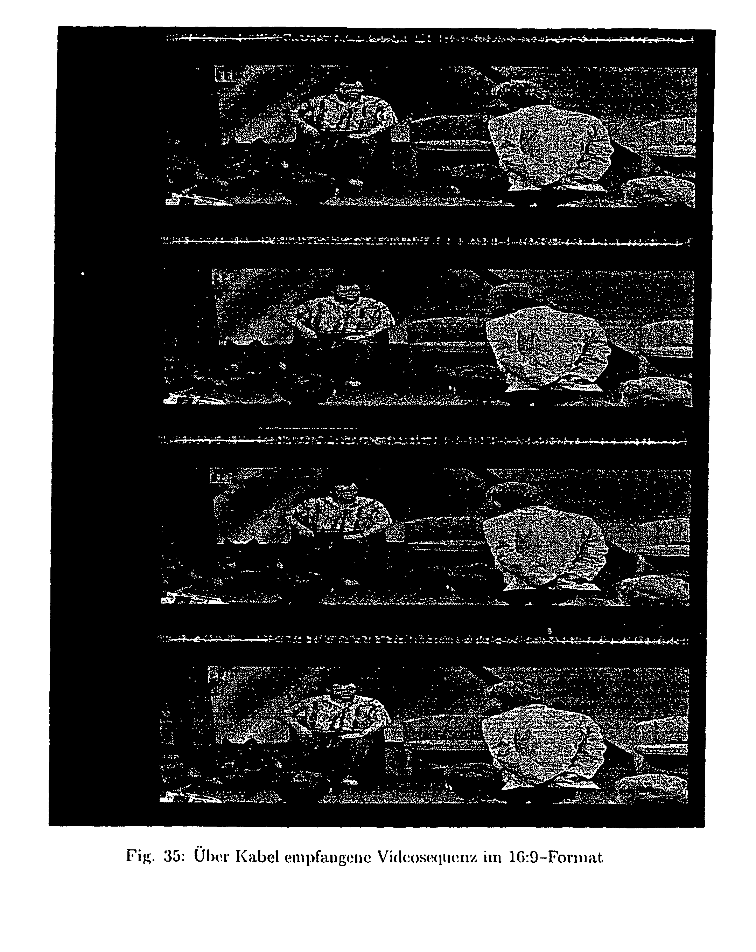

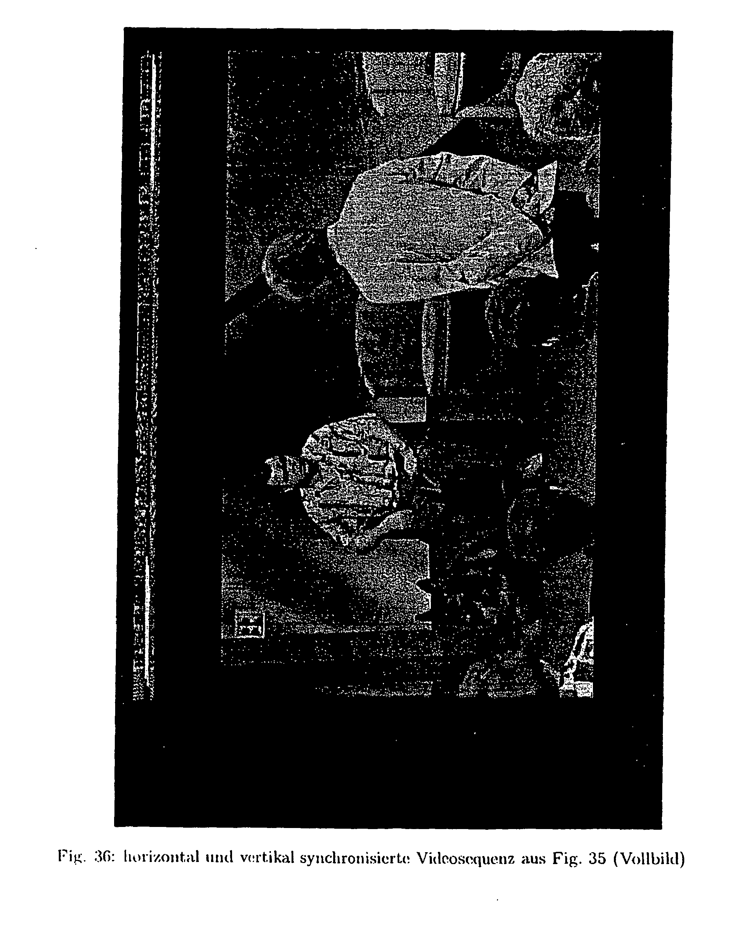

Videosignale, die man von Fernsehsatelliten, terrestrischen Fernsehsendern oder über einen Kabelanschluß empfängt, sind nahezu optimal mit der in Kapitel 4 beschriebenen Technik zu synchronisieren. Sie können aber durch Rauschen, Mehrwegeempfang, Gleich- oder Nachbarkanalstörungen gestört sein, was ihre Synchronisation erschweren kann. In Fig. 35 ist eine im 16:9-Format gesendete Sequenz dargestellt, die über Kabel empfangen wurde. Ihre Zeilenfrequenz entspricht der Sollfrequenz, da die Bilder senkrecht stehen bzw. die Horizontal-Synchronimpulse genau untereinanderliegen.

### 3.2 Aufzeichnung und Wiedergabe von Videosignalen (VHS/SVHS)

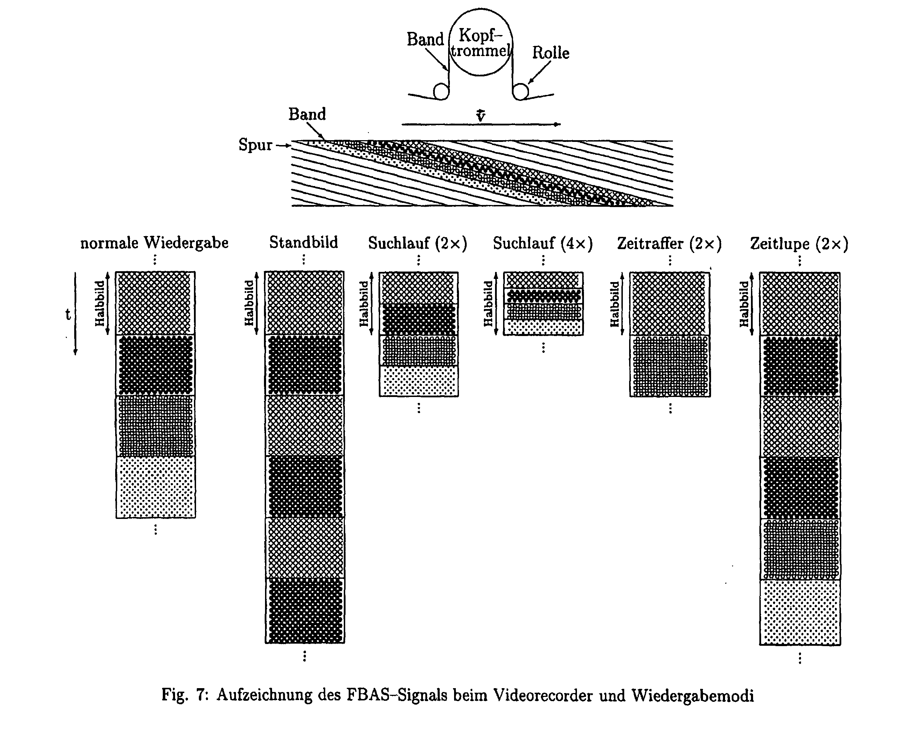

Die Aufzeichnung des Videosignals auf Magnetband erfolgt beim VHS[1]- und SVHS[2]-System in schräg zum Band liegenden Spuren, wobei eine Spur ein Halbbild aufnimmt, vergleiche Fig. 7. Zuvor muß das Videosignal aber in ein dafür geeignetes Signal umgewandelt werden, bei dem Helligkeit und Farbe im Gegensatz zum normalen Videosignal ein unterschiedliches Frequenzband belegen. Ein mit dem auf drei MHz bandbegrenzten Helligkeitssignal frequenzmodulierter Träger befindet sich bei einer Frequenz von 3 MHz, die Farbinformation um eine Mittenfrequenz von 600 kHz.

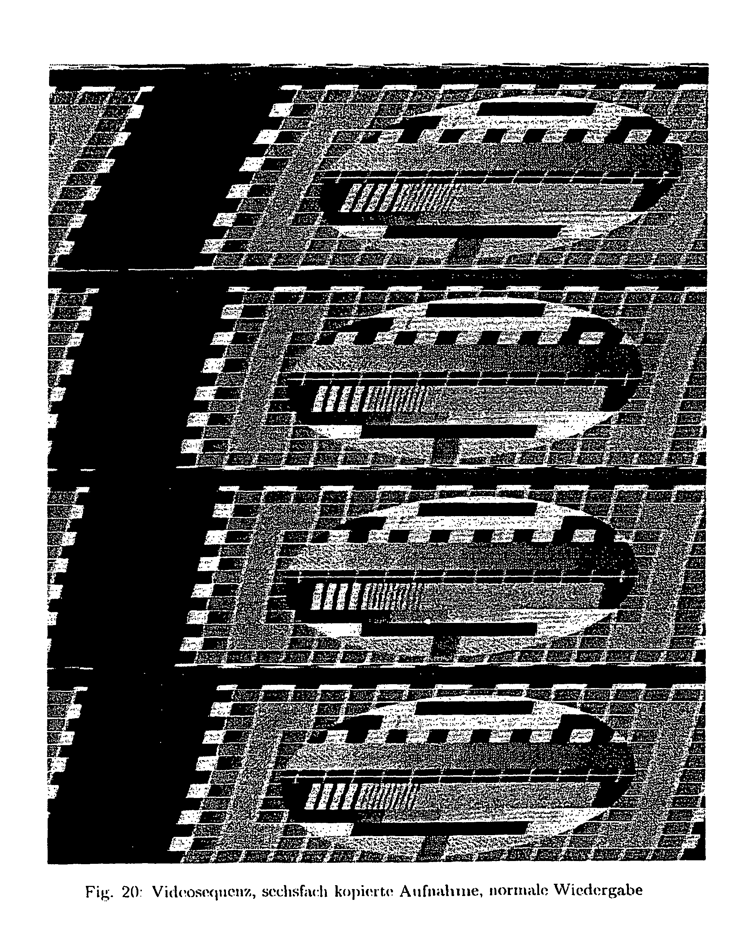

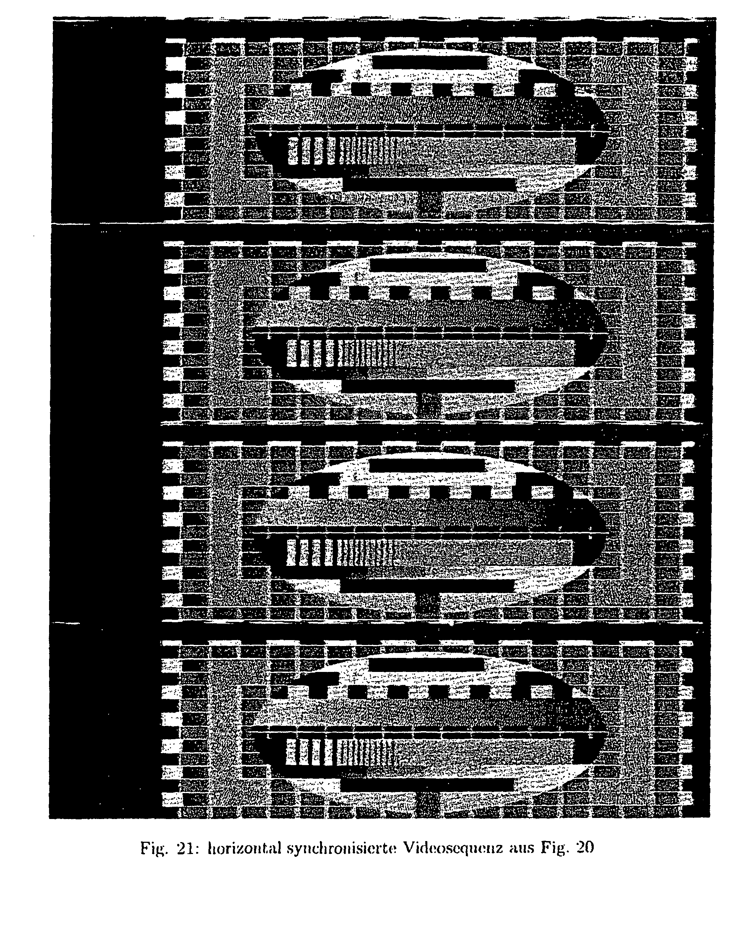

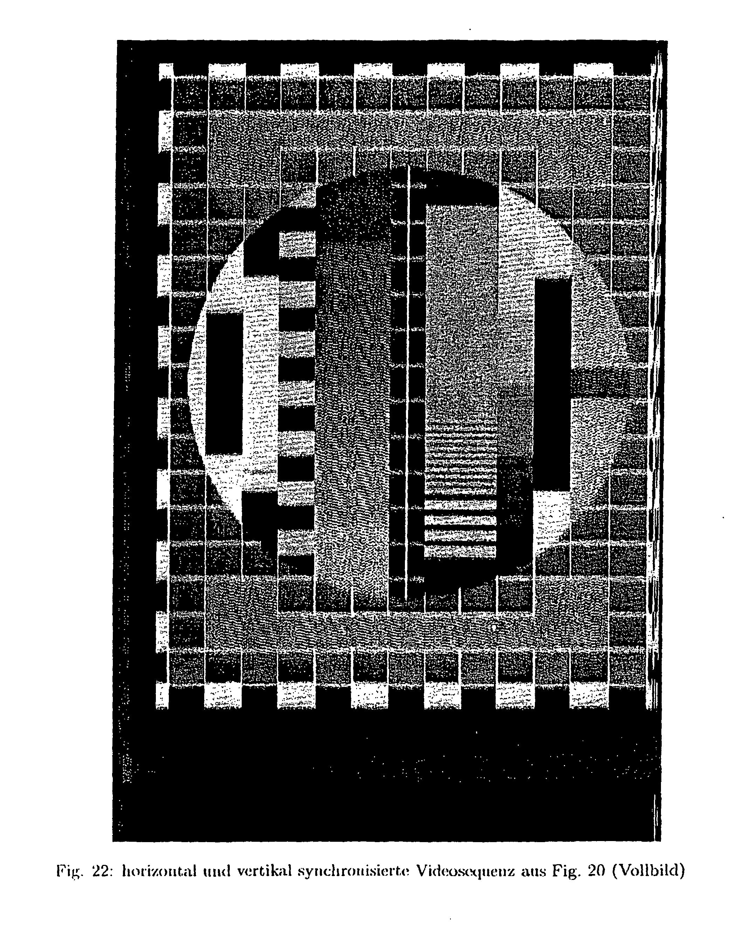

Zur Wiedergabe wird das Band mit einer definierten und möglichst exakten Geschwindigkeit über die sich quarzgesteuert mit 1500 $\frac{\text{U}}{\text{min}}$ drehende Kopftrommel gezogen. Auf dieser befinden sich mindestens zwei Köpfe, die nacheinander die einzelnen gespeicherten Halbbilder lesen. In der Vertikal-Austastlücke kann dabei je nach Güte und Justierung der Mechanik des Videorecorders ein mehr oder weniger großer Phasensprung auftreten, d. h. eine einzige Zeile weist im Vergleich zu der vorigen und der nachfolgenden Zeile eine deutlich andere Länge auf, wie es in Fig. 20 ersichtlich ist.

Beide vom Band kommenden Farbdifferenzsignale werden wieder auf den von einem Quarzoszillator erzeug-

[1]Video Home System
[2]Super Video Home System

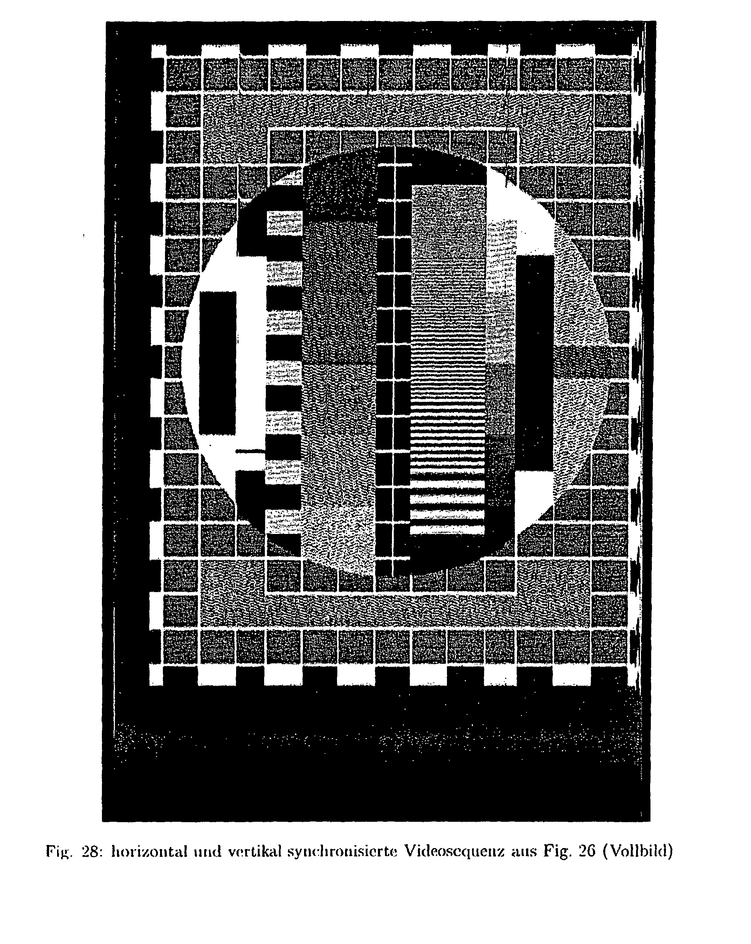

ten Farbhilfsträger aufmoduliert, so daß die PAL-Norm eingehalten wird und Farbfehler vermieden werden können. Die Zeilenfrequenz des Videosignals stammt jedoch direkt vom Magnetband und ist Schwankungen unterworfen, da sich die Länge der Spuren durch Dehnung und Alterung ändern kann. Die Abweichung vom Sollwert von 15625 Hz beträgt in Extremfällen bis zu fünf Prozent (siehe [7]), bei den in dieser Arbeit verwendeten Videosequenzen liegt sie bei weniger als 0.5 Prozent, was sich in den dargestellten Videosequenzen als schräger Bildrand bemerkbar macht. Mehrfach überspielte Videocassetten haben eine sehr schlechte Qualität, z. B. ist die horizontale Auflösung der sechsfach überspielten Sequenz in Fig. 20 im Vergleich zur Auflösung der Videosequenz in Fig. 26 extrem klein, was an den vertikalen Streifenmustern des Testbilds erkennbar ist.

**Wiedergabe im Suchlauf**

Weil sich das Band beim Suchlauf schneller über die Kopftrommel bewegt, kommt es je nach der Geschwindigkeit des Suchlaufs mitten in einem Halbbild zu einem oder mehreren Wechseln von einer zur nächsten Spur. Ein Halbbild beim Suchlauf besteht daher aus mehreren aufgezeichneten Halbbildern, wie man es in Fig. 7 sehen kann.

Während eines Spurwechsels tritt meistens ein horizontaler Störstreifen auf, falls der Videorecorder zu dessen Vermeidung nicht über vier Köpfe verfügt. Hier übernimmt ein zusätzlicher Kopf die Funktion desjenigen Kopfes, der kurz vor einem Wechsel der Spur steht. Es ist jedoch auch dann nicht sichergestellt, daß die erste einwandfreie Zeile der neuen Spur die richtige Phasenlage zur letzten intakten Zeile der vergangenen Spur besitzt.

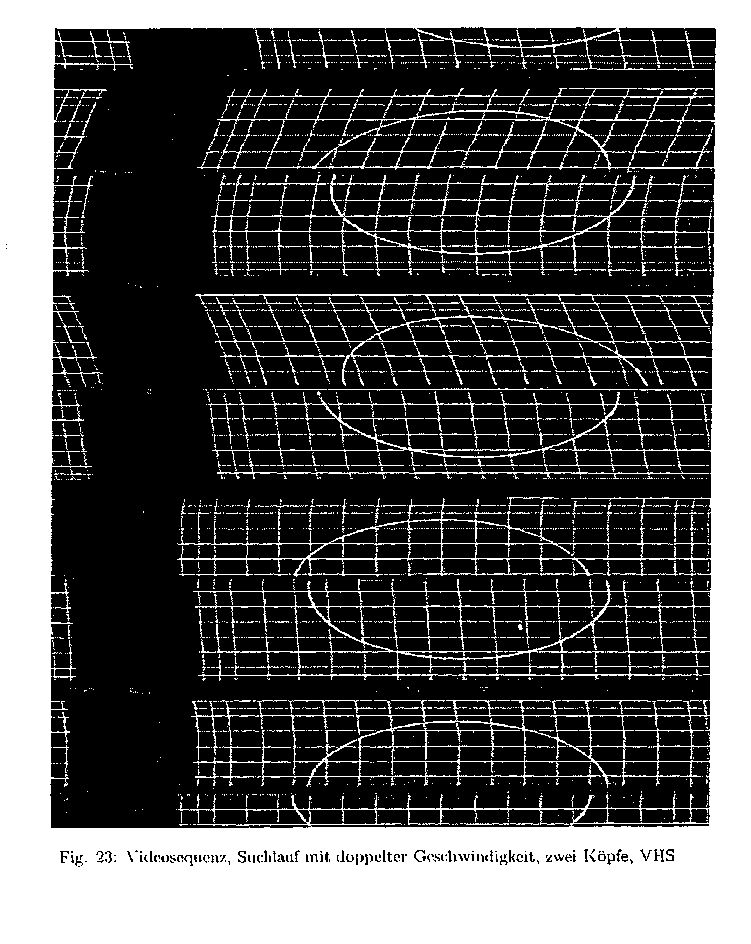

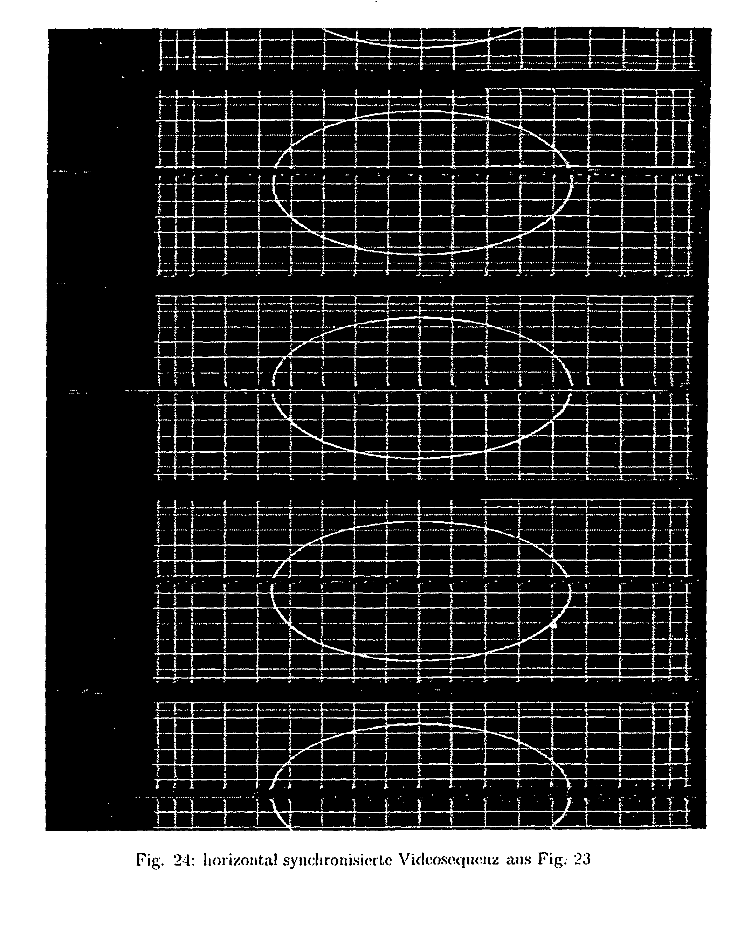

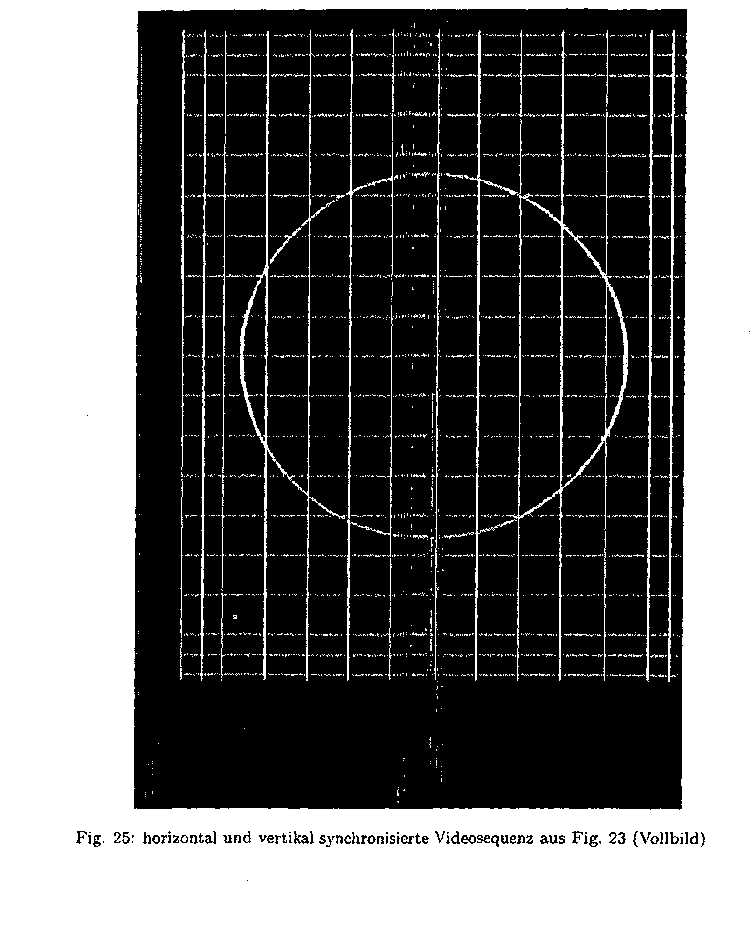

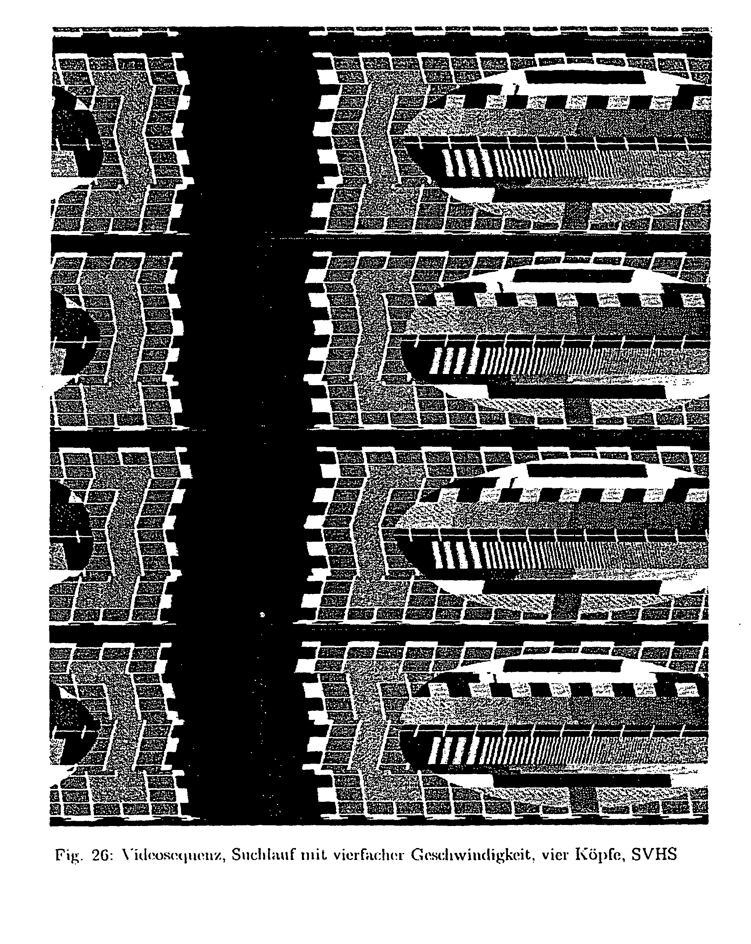

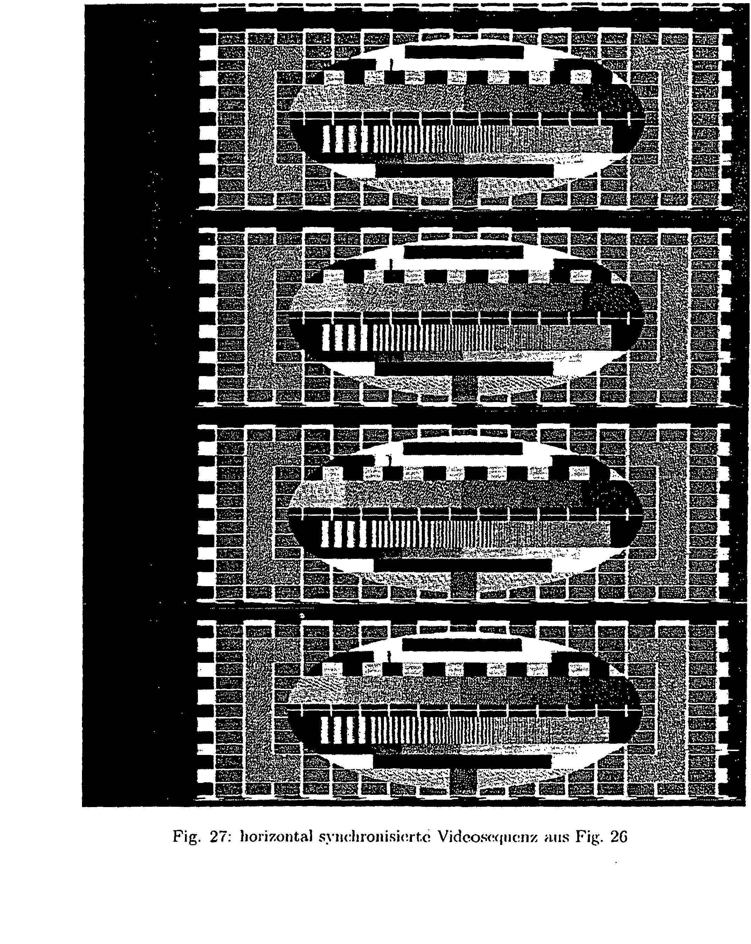

Störstreifen und Phasensprünge sind in den Abbildungen 23 und 26 gut zu erkennen. In Fig. 27 (Kapitel 5) sind 1250 Zeilen dargestellt, die exakt der Zeilenzahl von vier Halbbildern entspricht. Man kann jedoch einen Bruchteil eines fünften Halbbildes erkennen, so daß ein Suchlauf-Halbbild also aus weniger als 312.5 Zeilen besteht. Die in den Halbbildern fehlenden Zeilen gehen bei den Phasensprüngen verloren.

**Standbildwiedergabe**

Beim Standbild ruht das Band, d. h. die auf den Bildschirm geschriebenen Vollbilder werden immer aus denselben Halbbildern zusammengesetzt, siehe Fig. 7. Dabei tritt ein relativ großer Störstreifen in der Nähe der Vertikal-Austastlücke eines der beiden Halbbilder auf, wie man es in Fig. 23 sehen kann. Gleiche Halbbilder sind etwa drei bis vier Zeilen mehr als die Vollbildgröße voneinander entfernt, was bei herkömmlicher, analoger Synchronsignalverarbeitung zu einer falschen Verschachtelung der Halbbilder oder zu vertikalem Zittern des wiedergegebenen Bildes führen kann.

**Wiedergabe bei Zeitraffer und Zeitlupe**

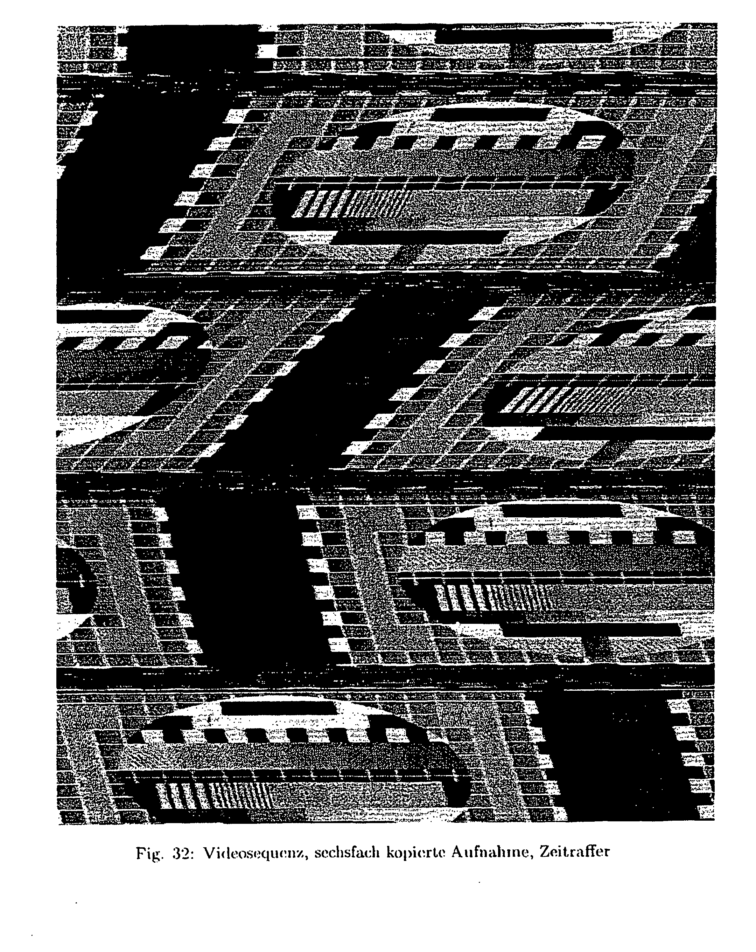

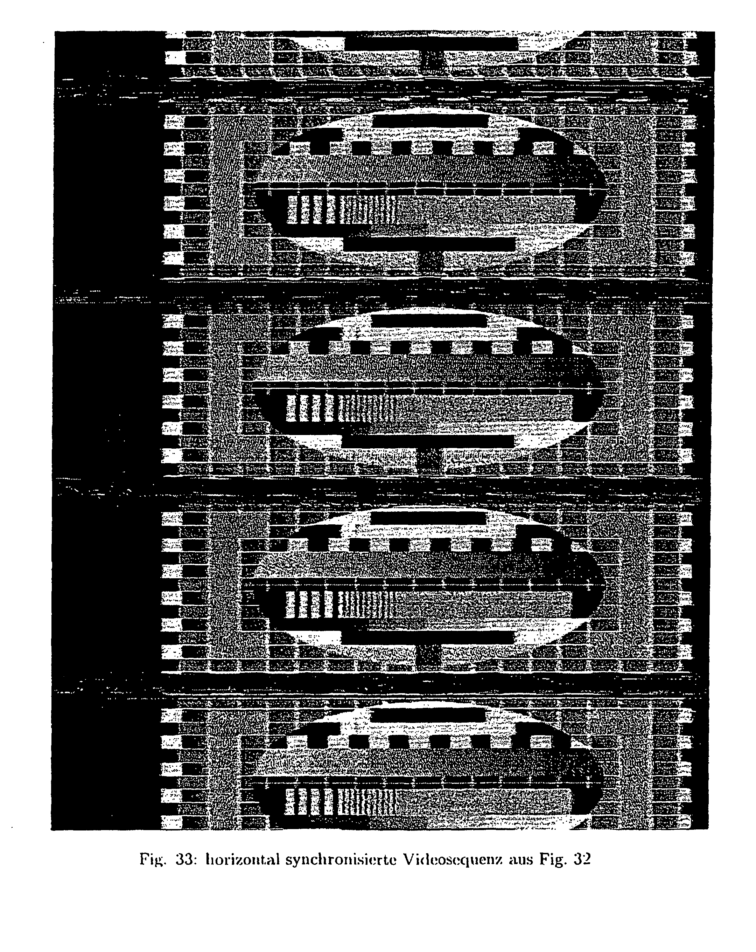

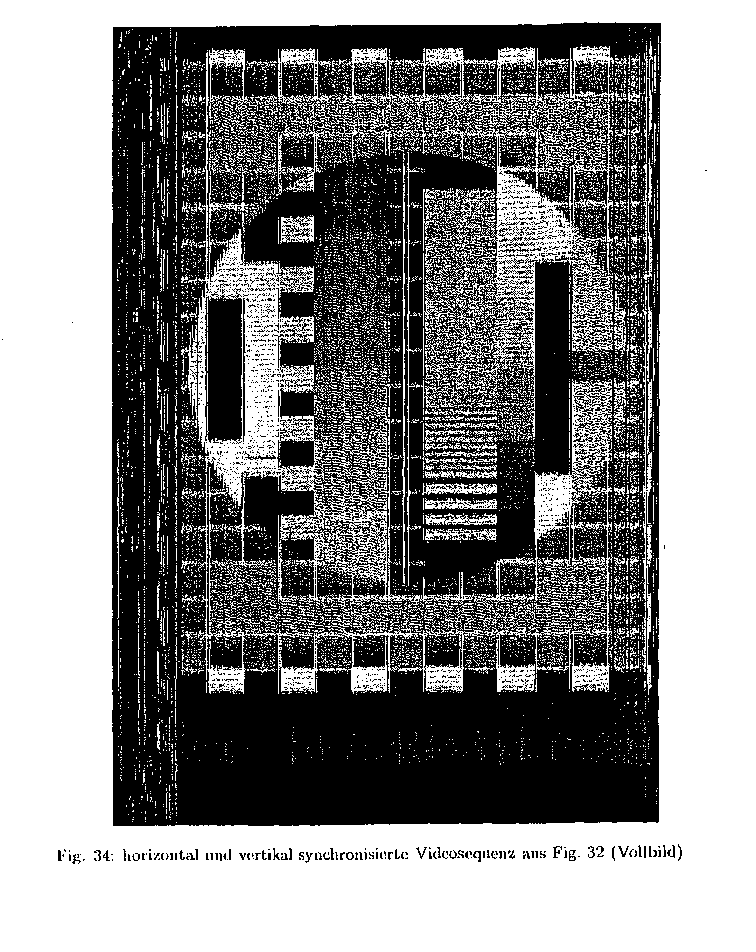

Um eine Videoaufzeichnung in Zeitraffer ohne Störstreifen wie beim Suchlauf bzw. in Zeitlupe am Fernseher darstellen zu können, muß der Videorecorder während der Vertikal-Austastlücke mehrere Halbbilder überspringen, was zur Folge hat, daß nicht der Norm entsprechende lange "Vertikal-Synchronimpulse" (Rauschen unterhalb des Schwarzwertes) und Störstreifen entstehen, die das Bild bei der Darstellung vertikal unruhig erscheinen lassen. Die Zeilenfrequenz variiert dabei von Halbbild zu Halbbild und es treten große Phasensprünge auf, die in Fig. 32 zu sehen sind.

**3.3 Synchronisation von Videorecordersignalen**

Probleme bei der Zeilen-Synchronisation treten bei Phasen- und Frequenzsprüngen auf, denen eine analoge Phasenregelschleife, deren Funktionsweise im nächstes Kapitel erklärt wird, nicht schnell genug folgen kann, so daß intakte, den Sprüngen nachfolgende Zeilen nicht an der gewünschten Position des Bildschirms erscheinen. Zwar könnte man durch eine entsprechende Parameterwahl eine extrem schnelle Anpassung der PLL[3] auf die Synchronimpulse erzwingen, aber die Rauschunterdrückung der PLL ginge verloren, was die Bildqualität bei verrauschten Signalen verschlechtern würde. Auch das nicht normgerechte Vertikalsynchronsignal und Störstreifen im Synchronpegelbereich erschweren eine gute Bildsynchronisation. Die digitale Signalverarbeitung bietet Möglichkeiten, die analog nicht oder nur mit großem Aufwand realisierbar wären, z. B. die Zwischenspeicherung des Signals über einen größeren Zeitraum oder eine exakte Zeitmessung mit Hilfe des Abtastrasters, von denen das in dieser Arbeit entwickelte und in Kapitel 5 erläuterte Synchronisationsverfahren Gebrauch macht.

**4. Analoge Synchronsignalverarbeitung**

In diesem Kapitel erfolgt eine knappe Beschreibung der analogen Synchronsignalverarbeitung, wie sie in den

[3]Phase-locked Loop

heutigen Fernsehern realisiert ist und Stand der Technik ist.

**4.1 Composite-Synchronsignalgewinnung**

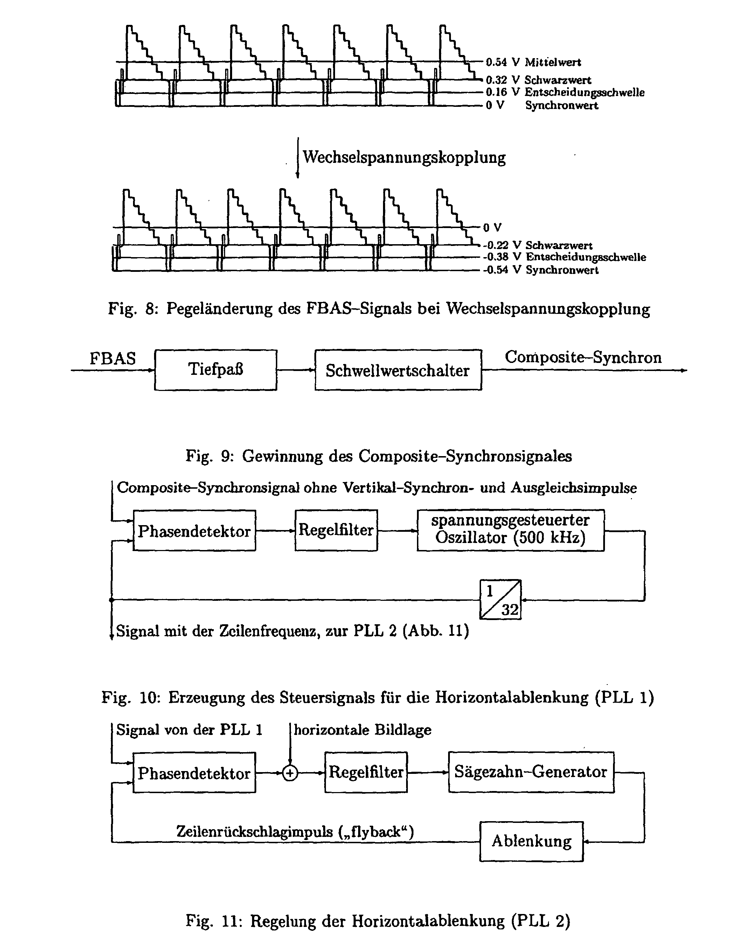

Die im FBAS-Signal enthaltene Bildinformation würde die Synchronisationsschaltungen stören. Deshalb erzeugt man das Composite-Synchronsignal, in dem nur noch die Synchroninformation enthalten ist, vergleiche Fig. 5 in Abschnitt 2.3. Zur Extraktion der Synchronsignale aus dem FBAS-Signal benötigt man die Spannungspegel von Schwarz- und Synchronwert, um eine Entscheidungsschwelle für das Vorhandensein eines Synchronimpulses festlegen zu können. Der Schwarzwert verschiebt sich bei reiner Wechselspannungskopplung (Koppelkondensatoren) in Abhängigkeit von der mittleren Helligkeit der Bildvorlage, da dieser durch den Gleichspannungsanteil des Bildsignales übertragen wird, siehe Fig. 8. In der horizontalen Austastlücke ist der verfälschte Schwarzwert jedoch verfügbar und kann als Bezugspegel gespeichert werden. Ein schaltungstechnisch schwierig zu realisierender Gleichspannungspfad bei der Signalübertragung ist also nicht unbedingt notwendig. Zur Speicherung des Schwarzwertes verwendet man eine Abtast-Halte-Schaltung, siehe z. B. [9], die auf der hinteren Schwarzschulter durch den Horizontal-Synchronimpuls ausgelöst wird. Die abgetastete Spannung dient während der gesamten Zeile als Bezugspotential. Die Entscheidungsschwelle entsteht durch das Festhalten der halben Synchronimpulsamplitude, was mit einem Spannungsteiler und Komparatoren realisierbar ist. Diese Schwelle und das wegen des Farbbursts (siehe Abschnitt 2.4) tiefpaßgefilterte FBAS-Signal liegen an einem weiteren Komparator an, der dann das Composite-Synchronsignal liefert, siehe Blockschaltbild in Fig. 9. In ihm sind nur noch die Informationen zur Synchronisation in horizontaler und in vertikaler Richtung enthalten.

**4.2 Horizontal-Synchronisation**

Die Horizontalablenkung muß wegen der speziellen Ablenktechnik immer Synchronimpulse mit gleichmäßiger Periode erhalten. Das Composite-Synchronsignal enthält in folgenden Fällen keine gleichmäßigen Impulse:

- während der Vertikal-Synchronimpulse
- falls kein Fernsehsignal empfangen wird
- während Kanalwechsel
- während der in Videorecordersignalen auftretenden Störstreifen

Deshalb muß ein Impulsgenerator vorhanden sein, der seine Ausgangsimpulse auf die an seinem Eingang anliegenden Impulse zeitlich angleicht und die Zeiten überbrückt, in denen das Composite-Synchronsignal gestört ist.
Diese Aufgabe erfüllt eine Phasenregelschleife (PLL), die sich aus einem Phasendetektor, einem Regelfilter (Tiefpaß), einem steuerbaren Oszillator und einem Frequenzteiler zusammensetzt, siehe Fig. 10. Der Phasendetektor ist meist ein Multiplizierer mit einem nachgeschalteten Tiefpaßfilter, das zur Unterdrückung der bei der Multiplikation enstehenden hochfrequenten Signalanteile dient. Seine Ausgangsspannung ist eine Funktion der Phasendifferenz der Eingangsignale, die das Regelfilter in günstiger Weise verändert, bevor sie die Frequenz des spannungsgesteuerten Oszillators beeinflußt. Dieser schwingt wegen der einfacheren Realisierbarkeit mit der 32-fachen Horizontalfrequenz. Die am Phasendetektor anliegenden Schwingungen nähern sich in ihrer Frequenz und Phase durch die Regelschleife einander immer mehr an, falls die Eingangsfrequenz der PLL in ihrem Fangbereich liegt und das Regelfilter die zur Angleichung der Phase notwendigen Eigenschaften besitzt. Der Fangbereich umfaßt alle Frequenzen, der sich die Phasenregelschleife von ihrer Oszillatorruhefrequenz aus immer angleichen kann. Da im Bereich der Vertikal-Synchronimpulse die doppelte Zeilenfrequenz auftritt, wird das Composite-Synchronsignal in dieser Zeit nicht auf den Phasendetektor gegeben.
Durch die Wahl der Parameter des Regelfilters, das z. B. ein einfacher RC-Tiefpaß sei, kann das Einschwingverhalten der Phasenregelschleife bestimmt werden. Eine kleine Zeitkonstante bedeutet, daß sich die Frequenz des Oszillators schnell der des Eingangssignals anpaßt, was insbesonders bei Videorecordersignalen (vgl. Abschnitt 3.2) wünschenswert ist, um die z. B. im Suchlauf auftretenden Phasen- und Frequenzsprünge schnell ausregeln zu können. Andererseits ist bei schwachen, über eine Antenne empfangenen Fernsehsignalen, die eine sehr konstante Horizontalfrequenz aufweisen, eine Verminderung des Synchronimpuls-Phasenrauschens nötig, was durch eine große Zeitkonstante bewirkt werden kann. Die Zeitkonstante kann dem Signal automatisch angepaßt werden, falls das Signal analysiert wird.
Das Ausgangssignal dieser Phasenregelschleife wird auf einen weiteren Phasenregelkreis gegeben, siehe Fig. 11, der die Horizontalablenkung regelt und Temperatur- und Betriebsspannungsschwankungen kompensiert. Sein zweites Eingangssignal ist der Zeilenrückschlagimpuls, der in der Ablenkspule durch den beim Strahlrücklauf schnell zeitlich veränderlichen Strom induziert wird.

### 4.3 Vertikal-Synchronisation

Das Vertikal-Synchronsignal wurde so ausgelegt, daß es über eine Tiefpaßfilterung durch eine Unterschreitung eines Schwellwertes aus dem Composite-Synchronsignal erkannt werden kann (vgl. Abschnitt 2.3). In den meisten modernen Fernsehempfängern erfolgt die Vertikal-Synchronisierung bereits teilweise digital über einen Zeilenzähler, der durch die Vertikal-Synchronimpulse, die analog detektiert werden, zurückgesetzt wird und die Vertikal-Ablenkung steuert.

### 5. Digitale Synchronisationsschaltung

Ein möglicher Lösungsansatz zur digitalen Synchronisation wäre die Verwendung einer Phasenregelschleife (siehe z. B. [8]) wie im analogen Fall, die man jedoch bei einem Phasen- oder Frequenzsprung des Eingangssignals so beeinflußt, daß sie dem Sprung ohne Verzögerung folgt.

Die im Rahmen dieser Arbeit erfundene und zwecks Simulationen in C-Programmodulen implementierte digitale Schaltung geht einen völlig anderen Weg. Die Impulse für die Horizontalablenkung werden durch Korrelation, die zur Störunterdrückung dient, direkt aus dem FBAS-Signal gewonnen. Im Signal nicht vorhandene Synchronimpulse werden mit Hilfe des Systemtaktes generiert, und die in der Schaltung gemessenen Zeilenperiodendauern können bei schlechten Signalen gemittelt werden.

Die Vertikal-Synchronisierung nutzt u. a. die unterschiedliche Zeitdauer zwischen dem letzten Horizontal-Synchronimpuls und dem ersten Teil des Vertikal-Synchronimpulses bei den beiden Halbbildern sowie die Unterbrechung des Vertikal-Synchronimpulses im Abstand einer halben Zeilenperiodendauer aus (siehe Fig. 5 in Kapitel 2).

### 5.1 Analog/Digital-Wandlung des Videosignals

Das Abstasttheorem (siehe z. B. [2]) besagt, daß ein Signal mindestens mit seiner doppelten Grenzfrequenz abgetastet werden muß, um fehlerfrei aus den Abtastwerten rekonstruiert werden zu können. Bei einer Grenzfrequenz des FBAS-Signals von 5 MHz muß die Abtastfrequenz also größer als 10 MHz sein, wobei es naheliegt, sie als ein Vielfaches einer der im Videosignal auftretenden Frequenzen zu wählen:

- Bildwechselfrequenz $f_v$ = 50 Hz

- Zeilenfrequenz $f_h$ = 15625 Hz

- Farbhilfsträgerfrequenz $f_{SC}$ = 4.43361875 MHz (PAL)

Die nachträgliche Art der Verarbeitung bestimmt, welche Wahl die günstigere ist. Die Farbdifferenzsignale kann man mit einer Abtastfrequenz von $4f_{SC}$ einfach demodulieren, aber zur Darstellung des Fernsehbildes auf einem Matrixdisplay wäre eine mit der Zeilenfrequenz gekoppelte Abtastfrequenz besser geeignet, da dann eine Zeile aus einer ganzen Zahl von Abtastwerten besteht.

Die in dieser Diplomarbeit verwendetete Abtastfrequenz beträgt mit 18 MHz das 1152-fache der Zeilenfrequenz (15625 Hz), die freilaufend ist und *nicht* der tatsächlichen im Signal auftretenden momentanen Zeilenfrequenz angepaßt wird, da eine exakte Anpassung aufwendig wäre und das analoge Videosignal so früh wie möglich mit einer konstanten Abtastfrequenz digitalisiert und digital weiterverarbeitet werden soll. Auf dem Bildschirm sind mit dieser Abtastfrequenz höchstens 936 Pixel sichtbar, da man die Abtastwerte der Horizontalaustastung von den 1152 Pixeln pro Zeile subtrahieren muß. Das Bild im Format 4:3 ist damit horizontal wesentlich besser aufgelöst als vertikal, aber für eine gleichmäßige horizontale und vertikale Auflösung beim 16:9-Format muß die Abtastfrequenz so hoch liegen.

Das Quantisierungsrauschen macht sich in der Videotechnik dadurch bemerkbar, daß durch die Quantisierung aus einem Graukeil eine Grautreppe ensteht, was "Contouring" genannt wird. Bei rauscharmen Videosignalen kann das Auge die Stufen selbst bei einer Quantisierung mit zehn bit noch erkennen. In der Realität sind analoge Videosignale jedoch fast immer so stark verrauscht, daß selbst eine Quantisierung mit sieben bis acht bit nicht zu "Contouring" führt. Die hier verwendeten Videosequenzen sind wegen programm- und speichertechnischen Gründen linear mit acht bit quantisiert, siehe die Zahlenwerte neben den Spannungspegeln in Fig. 3, Kapitel 2.

Bei farbigen Vorlagen, die gesättigtes Gelb enthalten, überschreitet die Signalamplitude durch die Überlagerung des Helligkeitssignals mit dem Farbsignal den Weißwert. Der Aussteuerbereich des Analog/Digital-Wandlers muß den geänderten Verhältnissen angepaßt werden, d. h. der Weißwert entspricht bei einer Quantisierung mit acht bit einem kleineren Wert als 255. Für die anderen Pegel in Fig. 3 gilt Entsprechendes. Die in der Praxis auftretenden Spitze-zu-Spitze-Spannungen von Videosignalen unterscheiden sich aber erheblich, so daß eine automatische Anpassung des Aussteuerbereichs auf jeden Fall notwendig ist.

Verfahren zur Analog/Digital-Wandlung sind z. B. die $\Sigma$-$\Delta$-Wandlung mit anschließender digitaler Dezimationsfilterung oder das Parallel-Verfahren, wegen deren Beschreibung auf Texte wie [1], [10] und [9] verwiesen sei.

**5.2 Die Synchronsignaldetektionsschaltung**

Der Horizontal-Synchronimpuls besteht digitalisiert aus einer Folge von ca. 85 mit im Vergleich zu den anderen Abtastwerten kleinen Zahlen. Es besteht nun die Aufgabe, den Schwerpunkt bzw. die exakte Mitte dieser Zahlenfolge festzustellen.

**Direkte Bestimmung des Synchronimpulschwerpunktes aus der FBAS-Folge**

Man könnte wie bei der analogen Verarbeitung einen Schwellwert festlegen, sich den Zeitpunkt des Unter- bzw. Überschreitens der Schwelle merken und hieraus die Mitte der Zahlenfolge berechnen. Bei diesem Vorgehen würde das dem Videosignal überlagerte Rauschen jedoch nicht vermindert werden, was zu größeren Phasenfehlern bei der Detektion führen würde.

**Bestimmung des Synchronimpulsschwerpunktes durch Korrelation**

Eine geeignetere Methode zur Suche der Mitte, d. h. des Synchronimpulsschwerpunktes, ist die Verwendung eines Korrelationsfilters, das bei additivem weißen Rauschen die nahezu optimale Lösung darstellt, siehe z. B. [2]. Die Kreuzkorrelation zweier reeller Folgen $s$ und $v$

$$\varphi_{sv}(k) = \sum_{i=-\infty}^{\infty} s(i)v(i+k) = s(-i) * v(i)|_{k=i} \qquad (5.1)$$

ist ein Maß für ihre Ähnlichkeit. Ein Maximum der Kreuzkorrelation bedeutet, daß sich die Zahlenfolgen an dieser Stelle am ähnlichsten sind. Die Videosignal-Folge sei $v$, und $s$ sei der mit einem bit quantisierte und invertierte Horizontal-Synchronimpuls der Dauer $l_s$, d. h.

$$s(i) = \sum_{j=0}^{l_s-1} \delta(i-j) \ \ \text{mit} \qquad (5.2)$$

$$\delta(i) = \begin{cases} 1 & : & i = 0 \\ 0 & : & i \neq 0 \end{cases} \qquad (5.3)$$

Setzt man Gleichung 5.2 in Gleichung 5.1 ein, so folgt

$$\varphi_{sv}(k) = \sum_{i=-\infty}^{\infty} \sum_{j=0}^{l_s-1} \delta(i-j)v(i+k) = \sum_{i=0}^{l_s-1} v(i+k), \qquad (5.4)$$

was einer Aufaddition von $l_s$ Abtastwerten des Videosignals entspricht.

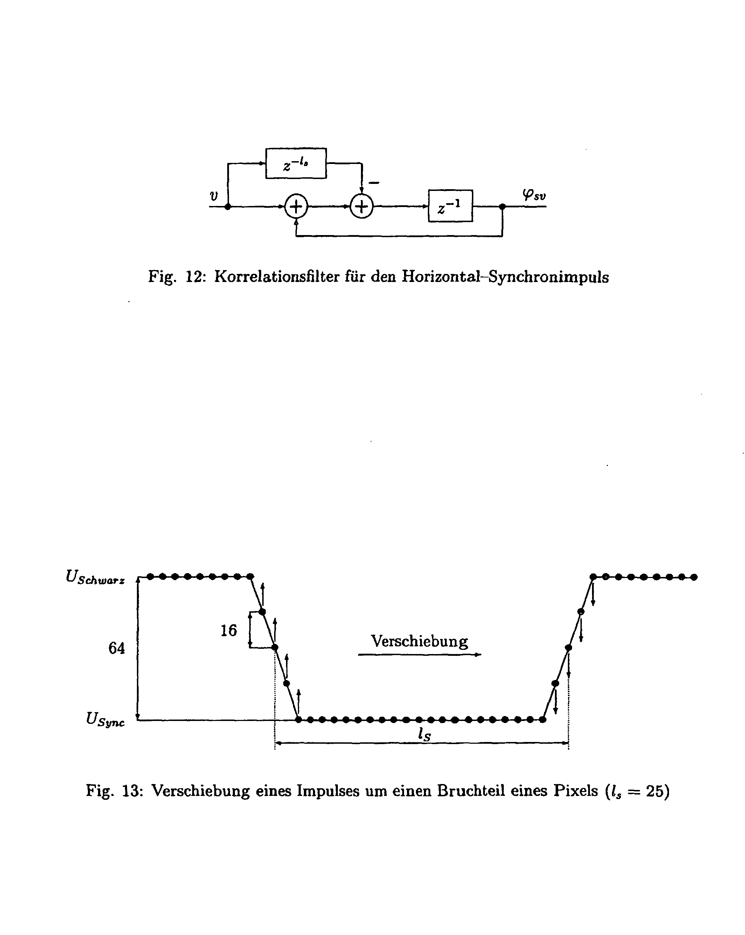

Das Korrelationsfilter (engl. matched filter) für den Horizontal-Synchronimpuls kann durch die Anordnung in Fig. 12 mit einem Addierer, einem Subtrahierer und zwei Verzögerungsgliedern, die ihre Eingangsfolgen um einen Wert bzw. $l_s$ Werte verzögern, realisiert werden. Da der Synchronimpuls den geringsten Spannungswert bzw. digitalisiert die kleinsten Zahlenwerte aufweist, wird sein Schwerpunkt durch die Suche des Minimums auf einen Abtastwert genau bestimmt.

**Probleme, die bei der Suche des Schwerpunktes durch Korrelation entstehen**

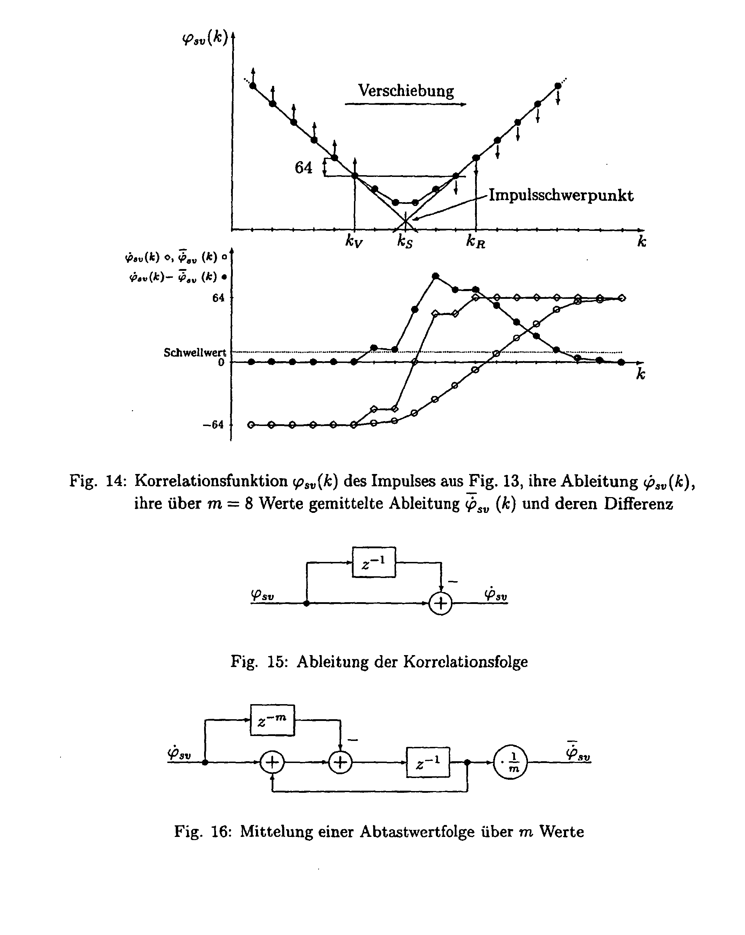

Es ergeben sich aber Probleme, falls sich die Impulsdauer $l_{s\_ist}$ vom Normwert $l_s$ (z. B. bei den Teilimpulsen des Vertikal-Synchronimpulses) unterscheidet. Bei der Korrelation ensteht dann anstatt einer Dreieckfunktion wie in Fig. 14 eine Trapezfunktion mit längerer Grundseite $|l_s - l_{s\_ist}|$, deren Minimum nicht exakt bestimmt ist.

Ungenaue horizontale Synchronisation (Jitter) ist für das Auge besonders an vertikalen Kanten und bei statischem Bildinhalt störend. Das Phasenrauschen ist bei einer Bildröhre mit einer Diagonalen von z. B. 70 cm ab ca. 0.1 mm Amplitude wahrnehmbar, siehe [6]. Der Schreibstrahl legt die 0.1 mm Wegstrecke in einer Zeit von ca. 10 ns zurück. Die Abtastperiode beträgt bei einer Abtastfrequenz von 18 MHz etwa 56 ns, also muß die Phasenlage des Schwerpunkts bezüglich des Abtastrasters mindestens auf drei bit ($2^{-3} < \frac{10ns}{56ns}$) genau bestimmt werden. Wegen der genannten Probleme ist ein Verfahren nötig, das auf die Impulsdauer unempfindlicher reagiert und den Schwerpunkt genauer berechnet.

**Genauigkeitsgrenzen der Schwerpunktbestimmmung innerhalb des Abtastrasters**

Die Zahlenfolge wird beim Auftreten des Synchronimpulses nicht sprunghaft klein, weil das FBAS-Signal aufgrund des Abtasttheorems bandbegrenzt sein muß, was die Steilheit der Flanken einschränkt. Somit fallen auch auf die Flanken des Synchronimpulses Abtastwerte, die die Information über die Schwerpunktlage des Impulses innerhalb einer Abtastperiode enthalten. Der Horizontal-Synchronimpuls sei bei den folgenden Erläuterungen zur Vereinfachung als trapezförmig angenommen, zu denen man Fig. 13 betrachte. Der dargestellte Impuls wird kontinuierlich nach rechts verschoben. Dies macht sich erst dann bemerkbar, wenn sich die Abtastwerte der Vorderflanke um eins erhöhen und die der Rückflanke sich um eins erniedrigen. Eine Verschiebung um einen Pixel macht sich also während dieser Verschiebung auf diese Weise 15mal bemerkbar. Die Auflösung ist somit durch den Kehrwert der zeitdiskreten Ableitung des Impulses im Flankenbereich und die Abtastperiodendauer bestimmt und beträgt in diesem Beispiel vier bit. Beim realen Synchronimpuls ist mit derselben Auflösung zu rechnen, da die Sprunghöhen in etwa gleich sind und ebenfalls etwa vier Abtastwerte auf die Flanken fallen.

**Bestimmung des Impulsschwerpunktes innerhalb des Abtrastrasters**

Legt man Geraden an die Flanken der Korrelationsfunktion an und schneidet sie, so erhält man daraus den zeitlichen Schwerpunkt $k_S$ des Impulses, siehe Fig. 14. Zu seiner Berechnung werden je ein Punkt mit den Ordinaten $k_V$ und $k_R$ auf den Geraden, die so nah wie möglich am Minimum liegen sollen, und die Steigungen (Ableitungen) der Geraden benötigt, wobei der Betrag der Steigung der Rückflanke von $\varphi_{sv}$ zur Vereinfachung gleich dem der Vorderflanke angenommen wird.

Die Anordnung in Fig. 15, die aus einem Verzögerungsglied und einem Subtrahierer besteht, ermittelt diese Steigung $\dot{\varphi}_{sv}$.

Die Ableitung verstärkt das der Folge überlagerte Rauschen, welches durch eine Mittelung von $\dot{\varphi}_{sv}$ über $m$ Werte wieder abgeschwächt wird:

$$\bar{\varphi}_{sv}(k) = \frac{1}{m} \sum_{i=0}^{m-1} \dot{\varphi}_{sv}(k+i), \qquad (5.5)$$

Das Blockschaltbild ist in Fig. 16 dargestellt; m sollte wegen der dann einfachen Realisierung der Division eine Zweierpotenz sein, aber höchstens so groß wie die vordere Schwarzschulter, siehe (b) in Fig. 3. Den Punkt $\varphi_{sv}(k_V)$, der dem Minimum am nächsten ist und auf der Geraden der Vorderflanke liegt, erhält man, wenn die Differenz $\dot{\varphi}_{sv}(k) - \bar{\varphi}_{sv}(k)$ von ungemittelter und gemittelter Ableitung einen Schwellwert überschreitet und man den Abtastwert von $\varphi_{sv}(k)$ verwendet, der sich ein Taktzyklus vor der Überschreitung befindet. Um Impulse mit zu kleiner Sprunghöhe zu unterdrücken, sollte $\bar{\varphi}_{sv}(k_V)$ eine Mindeststeigung aufweisen. Den Punkt $\varphi_{sv}(k_R)$ auf der Rückflanke erhält man, wenn die Korrelationsfolge den Wert $\varphi_{sv}(0)$ wieder überschreitet. Aus einer kurzen Rechnung folgt für den Impulsschwerpunkt

$$k_S = \frac{\varphi_{sv}(k_R) - \varphi_{sv}(k_V)}{2\,\bar{\varphi}_{sv}(k_V)} - \frac{k_R - k_V}{2}. \qquad (5.6)$$

Im linken Bruch der Gleichung 5.6 ist der Nenner keine Zweierpotenz; somit ist ein Dividierer notwendig. Da der Nenner viel größer als eins ist, braucht man seine Nachkommastellen bei der Berechnung nicht zu berücksichtigen, da hierdurch ein vernachlässigbarer Fehler entsteht. Weil man die FBAS-Folge zwischenspeichern kann, muß das Ergebnis der Division nicht sofort zur Verfügung stehen.

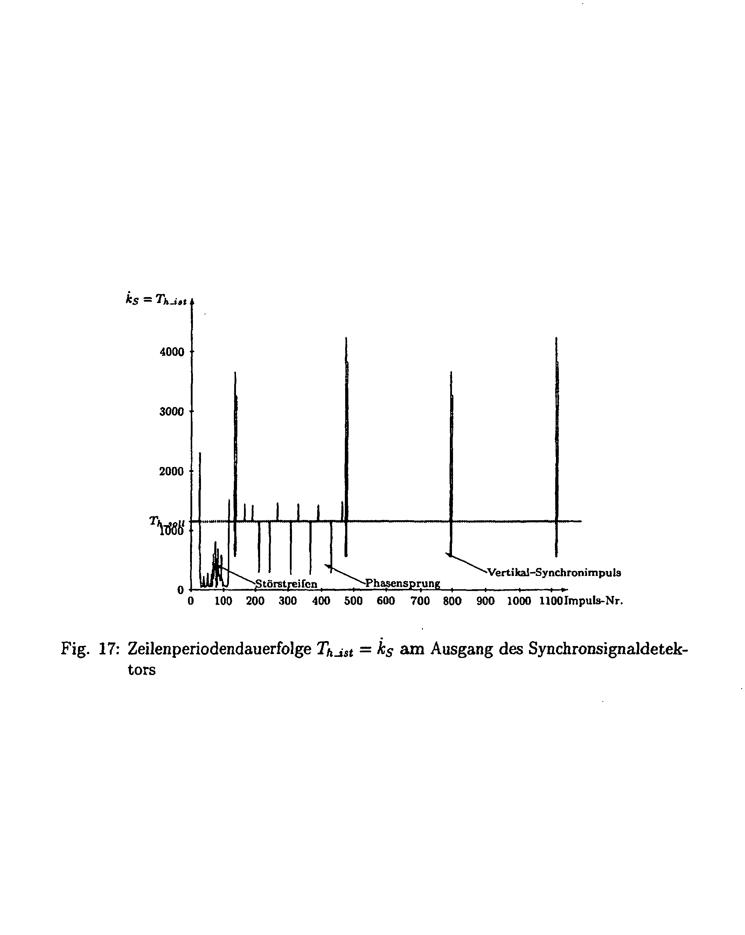

In der späteren Realisierung wird man sich bei den Impulspositionen anstatt auf den absoluten Nullpunkt ($k$ = 0) einer Folge auf die Adresse eines Speichers beziehen, die der Stelle entspricht, an der sich der Schwerpunkt des letzten detektierten Impulses befindet. Der relative Bezug auf einen zuvor ausgegebenen Schwerpunkt entspricht der Ableitung $\dot{k}_S$ von $k_S$, die der Detektor an den Horizontal-Synchronsignalgenerator weitergibt, der in Abschnitt 5.3 beschrieben wird. In Fig. 17 ist eine mögliche Ausgangsfolge des Synchronsignaldetektors dargestellt. Ferner führt man noch eine weitere Schwelle ein, die die Korrelationsfolge unterschreiten muß, bevor das Verfahren zur Synchronimpulsdetektion überhaupt aktiviert wird, da sonst auch im Bildsignal vorkommende Rechteckimpulse und sehr kurze Rechteckimpulse, die den Synchronwert tragen (z. B. Störimpulse oder die Ausgleichsimpulse vor und nach dem Vertikal-Synchronimpuls), erkannt würden.

Die FBAS-Folge könnte statt dessen vor dem Korrelationsfilter auf den Synchronwert beschränkt werden, um so evtl. sogar ein oder zwei bit Wortbreite einzusparen, was jedoch nicht in die Simulation aufgenommen wurde, da das eigentliche Verfahren nicht davon beeinflußt wird. Weißes Rauschen mit einer gaußverteilten Amplitude wird durch diese Begrenzung einen Mittelwert erhalten, d. h. nicht mehr weiß sein.

**Berechnung von Synchron- und Schwarzwert aus den bereits vorhandenen Folgen**

In dieser Arbeit wurde von einer optimalen Aussteuerung des Wandlers ausgegangen. Die Aktivierungsschwelle ist bei der Simulation fest gewählt und wird nicht dem Signal angepaßt. Aus den vorhandenen Signalfolgen können der Synchronwert, der Schwarzwert und hieraus die Aktivierungsschwelle ohne größeren Aufwand berechnet werden:

$$U_{Sync} = \frac{\varphi_{sv}(k_V)}{I_s}, \text{ (Mittelung von } v \text{ über } I_s \text{ Werte),} \qquad (5.7)$$

$$U_{Schwarz} = U_{Sync} + \overline{\varphi}_{sv}(k_V), \qquad (5.8)$$

$$U_{Schwelle} = \frac{U_{Schwarz} - U_{Sync}}{2}. \qquad (5.9)$$

Eventuell könnte eine mit der Korrelationsfolge $\varphi_{sv}(k)$ gekoppelte Mittelungsfolge anstatt $I_s$ Werten für $U_{Sync}$ die nächste darunterliegende Zweierpotenz von Werten verwenden, da dann die Division einfacher zu realisieren ist, die Vorderflanke in der Mittelungsfolge am Punkt $k_V$ nicht mehr enthalten ist und die berechneten Pegel damit genauer werden. Dies wurde in der Simulation nicht berücksichtigt.

Man könnte auch auf eine exakte Aussteuerung des Analog/Digital-Wandlers verzichten, wenn dieser mit wenig Aufwand über eine höhere Auflösung (z. B. elf bit) verfügen könnte und der Offsetschwankungen ohne größere Schwierigkeiten verarbeiten kann. Die Auflösung nach der digitalen Messung der Pegel würde dann effektiv wieder acht bit betragen. $\Sigma$-$\Delta$-Wandler, siehe z. B. [1], können ohne übertriebenen Aufwand so ausgelegt werden, daß sie diese Anforderungen erfüllen.

**Rauschminderung durch Mittelung der Zeilenperiodendauer**

Der über mehrere Zeilen $z$ gemittelte Wert von $|\dot{k}_S|$ (Betrag der Ableitung der Zeilendauerfolge $\dot{k}_S$)

$$\overline{|\ddot{k}_S|} = \frac{1}{z} \sum_{i=0}^{z-1} |\ddot{k}_S| \qquad (5.10)$$

ist ein Maß für das Rauschen der Zeilenperiodendauer $\dot{k}_S$ bzw. für das Phasenrauschen von $k_S$, wenn man eine konstante Zeilenperiodendauer der rauschfreien FBAS-Folge $v$ annimmt. Sollte die Zeilenperiodendauer so stark verrauscht sein, daß dies im Fernsehbild erkennbar ist, kann der Horizontal-Synchronsignalgenerator die Zeilenperiodendauer $\dot{k}_S$ über mehrere (sinnvollerweise eine Zweierpotenz) Werte mitteln und hiermit die Bildqualität verbessern.

Ein Sprung der Zeilenperiodendauer (Frequenzsprung, siehe z. B. Fig. 26 in Kapitel 3) führt aber wie bei der analogen PLL zu einem unerwünschten Einschwingvorgang, bis dieser Sprung wieder außerhalb des Fensters der Mittelung liegt. Dies könnte durch eine Mittelung in die Vergangenheit *vor* einem Sprung und die Mittelung in Richtung Zukunft *nach* einem Sprung vermieden werden.

Phasensprünge, die die Mittelung ebenfalls beeinflussen, können daran erkannt werden, daß sie nicht innerhalb eines Toleranzbandes um $T_{h\_soll}$ liegen. Sie werden dann nicht in die Mittelung einbezogen. Innerhalb der Toleranz liegende Phasensprünge können also nicht erkannt werden, die die Mittelwertbildung aber nur mit geringen Auswirkungen stören.

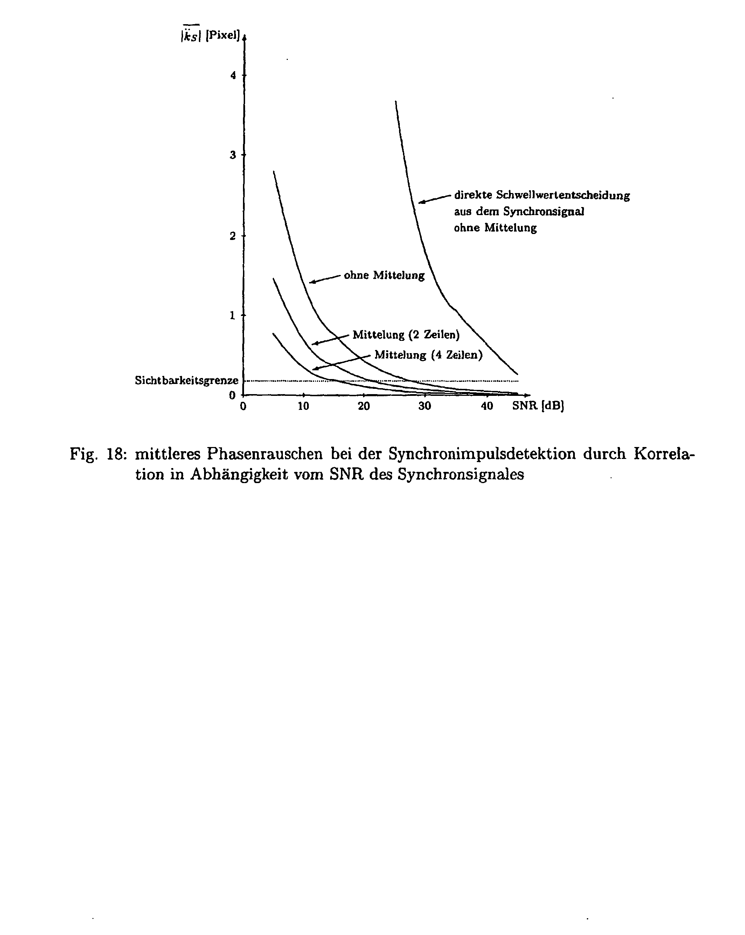

In Fig. 18 sind die in Simulationen ermittelten Graphen des Betrags des mittleren Phasenfehlers (in Pixeln) in Abhängigkeit des Nutz-/Störleistungsverhältnisses des Synchronsignales mit der Zeilenperiodendauer-Mittelung als Parameter aufgetragen.

Hierzu wurden etwa 5000 verrauschte Synchronimpulse detektiert und der Betrag der Abweichung von ihrer Sollposition gemittelt. Die in der Fig. eingezeichnete Sichtbarkeitsgrenze gilt für eine Abtastfrequenz von 18 MHz und einer diskreten Synchronimpulsamplitude von 64, wobei etwa vier Abtastwerte auf die Flanken fallen. Die Knicke in den Kurven sind durch eine quadratische Interpolation zwischen den einzelnen simulierten Werten entstanden. Zum Vergleich ist auch die Kurve für die in der Analogtechnik verwendete Schwellwertentscheidung beim Composite-Synchronsignal eingezeichnet. Der Synchronpegel befand sich dabei im unteren Viertel des Aussteuerbereichs des Analog/Digital-Wandlers, damit das weiße gaußverteilte Rauschen den Wandler nicht übersteuerte. Eine Mittelung über die doppelte Anzahl von Zeilen vermindert das mittlere Phasenrauschen um die Hälfte.

Dieses Verhalten könnte zur Regelung der Zeilenperiodendauer-Mittelung dienen. Überschreitet das z. B. über ein Halbbild gemittelte $|\ddot{k}_S|$ am Ende eines Halbbildes die Sichtbarkeitsgrenze, so wird die Anzahl der Zeilen zur Mittelung ab diesem Zeitpunkt verdoppelt. Unterschreitet dieser Wert die Hälfte der Sichtbarkeitsgrenze, so wird die Anzahl der Zeilen halbiert. Die gemittelte Folge $|\ddot{k}_S|$ wird in der Simulation zwar erzeugt, regelt aber noch nicht die Mittelung.

### 5.3 Der Horizontal-Synchronsignalgenerator

Dieses Modul verarbeitet die vom Synchronimpulsdetektor gelieferte Zahlenfolge $\dot{k}_S$.

### Glättung der vom Synchronsignaldetektor gelieferten Folge $\dot{k}_S$

Die Abstände der vom Synchronsignaldetektor gelieferten Impulspositionen $\dot{k}_S$, d. h. die Zeilenperiodendauern, sind noch sehr ungleichmäßig und nicht durch ein verrauschtes FBAS-Signal hervorgerufen, sondern durch folgende mögliche Ursachen:

- Es liegt kein Videosignal am Eingang an.

- Während der Vertikal-Synchronimpulse werden keine gewöhnlichen Horizontal-Synchronimpulse gesendet.

- Störstreifen enthalten keine Synchronimpulse.

Die gelieferte Zeilenperiodendauer $\dot{k}_S$ kann zu klein oder zu groß sein:

- Liegt der Wert $\dot{k}_S$ unterhalb der Toleranzgrenze um $T_{h\_soll}$, so wird dieser einfach ignoriert, indem man den Taktzyklenzähler, der die Abtastwerte seit der letzten ausgegebenen Periodendauer zählt, nicht zurücksetzt, sich also nach wie vor auf den vorigen ausgegebenen Wert bezieht.

- Überschreitet die Anzahl der seit dem letzten detektierten Synchronimpuls gezählten Taktzyklen einen Wert von 1.5 $T_{h\_soll}$ (es könnte ein Phasensprung vorliegen, deshalb steht hier nicht der obere Wert des Toleranzbandes), so wird eine Zeilenperiodendauer generiert, die aus vorigen und in der Toleranz liegenden Zeilenperiodendauern gemittelt wurde, oder, falls keine vorigen Werte existieren, der Normwert 1152 eingesetzt.

Wenn die zwei nächsten in der Zukunft liegenden Zeilenperiodendauern innerhalb des Toleranzbandes liegen und falls die Summe des aktuellen Wertes und des nächsten in der Zukunft liegenden Wertes nicht näher an der Soll-Zeilenperiodendauer $T_{h\_soll}$ liegt, wird die aktuelle Zeilenperiodendauer (die wegen der Phasensprünge außerhalb des Toleranzbandes liegen darf) ausgegeben. Mit der letzten Einschränkung erreicht man, daß nur Zeilen durchgelassen werden, die länger dauern als der untere Wert des Toleranzbandes um $T_{h\_soll}$. Hierdurch werden kurze Zeilen vermieden. Allerdings wird die nächste intakte Zeile um die Länge der kurzen Zeile auf dem Bildschirm verschoben sein. Sollten die gemessenen Zeilenperiodendauern außerhalb des Toleranzbandes liegen, werden alle Zeilenperiodendauern generiert.

### 5.4 Vertikal-Synchronsignaldetektion

**Detektion von Vertikal-Synchronimpulsen in der Folge $\dot{k}_S$**

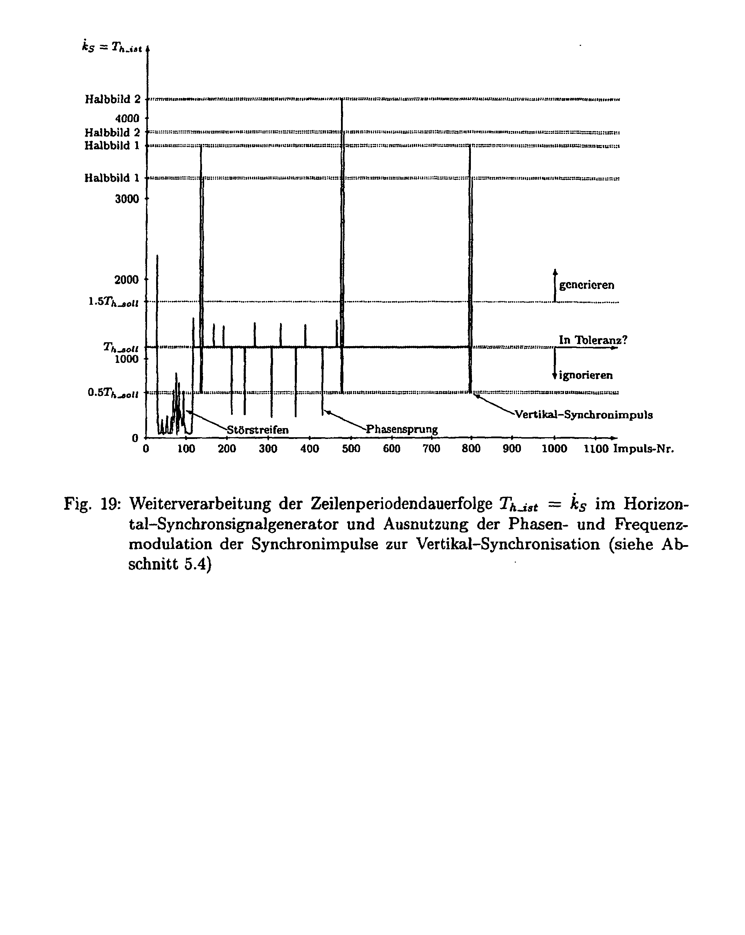

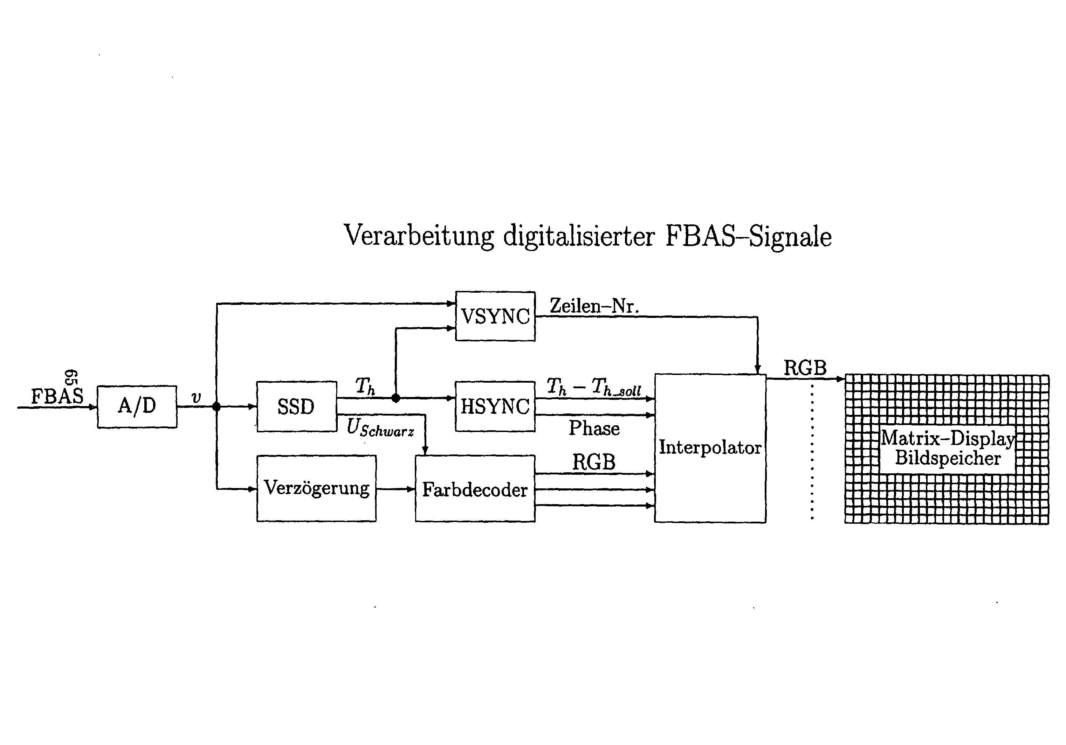

In der Zahlenfolge $\dot{k}_S$ des Horizontal-Synchronimpulsdetektors können auch die der Norm entsprechenden Vertikal-Synchronimpulse erkannt werden, indem man die in dessen Bereich auftretende Phasen- und Frequenzmodulation der Teilimpulse des Vertikal-Synchronimpulses ausnutzt (siehe Fig. 5 in Abschnitt 2.3 und Fig. 19 in Abschnitt 5.3). Jedes der beiden Halbbilder weist bei idealen Synchronimpulsen eine charakteristische Zahlenfolge in $\dot{k}_S$ auf:

$$\text{Halbbild 1: } \dot{k}_S = (...1152\ 3659\ 576\ 576\ 576\ 576\ 3253\ 1152...), \tag{5.11}$$

$$\text{Halbbild 2: } \dot{k}_S = (...1152\ 4235\ 576\ 576\ 576\ 576\ 3829\ 1152...). \tag{5.12}$$

Teilt man die beiden Zahlenfolgen in zwei Hälften auf, mit denen man die erhaltene Folge $\dot{k}_S$ vergleicht, kann auch ein teilweise gestörter Vertikal-Synchronimpuls erkannt werden. Da in der Folge Werte größer als 1.5 $T_h$ vorkommen und zuvor schon Zeilenperiodendauern generiert wurden, müssen die die Lücke auffüllenden Zeilendauern aufaddiert und dann mit der Folge verglichen werden.

Die Ausgleichsimpulse vor und nach dem Vertikal-Synchronimpuls sind von zu kurzer Dauer, um detektiert zu werden, da die Korrelationsfolge die Aktivierungsschwelle nicht unterschreitet. In der (ereignisgesteuerten) C-Simulation braucht die Aufaddition der Zeilenperiodendauern nicht berücksichtigt zu werden, da diese erst am Ende einer Lücke generiert werden. Der übrigbleibende Rest nach dem Auffüllen einer Lücke muß bei der Simulation aber zum nächsten $\dot{k}_S$ hinzuaddiert werden, da dieser Zeitraum ansonsten verlorenginge und Phasenfehler entstünden.

**Detektion von Vertikal-Synchronimpulsen, die nicht der Norm entsprechen**

Vertikal-Synchronimpulse, die nicht der Norm entsprechen, werden wie in der Analogtechnik erkannt. Eine Schwellenunterschreitung einer Tiefpaßfolge über die Abtastwerte von zweieinhalb Zeilen (Fig. 4 in Abschnitt 2.3) setzt einen Zeilenzähler zurück. Diese Art der Erkennung wird für ca. 50 Zeilen weniger als die Halbbildgröße gesperrt, damit Störstreifen den Zeilenzähler nicht zurücksetzen können, aber der nächste Vertikal-Synchronimpuls auf jeden Fall detektiert wird, da die Zeilenanzahl der gelieferten Halbbilder deutlich unter dem Sollwert liegen kann. Bei Videorecordersignalen können Störstreifen wie z. B. in Fig. 23 in Kapitel 3 durchaus bis in den Synchronpegelbereich fallen, weisen aber aufintegriert meist einen höheren Wert als die aufaddierten Vertikal-Synchronimpulse auf. Daher muß die Schwelle einerseits so niedrig wie möglich liegen, andererseits aber auch nicht zu niedrig, damit der nachfolgende Synchronimpuls noch sicher unter der Schwelle liegt. Zur automatischen Anpassung, die noch nicht in der Simulation implementiert ist, könnte der Wert der Tiefpaßfolge bei der letzten Detektion eines Vertikal-Synchronimpulses gespeichert und um einen bestimmten Wert erhöht werden, der dann als Entscheidungsschwelle dienen würde. Weitere Informationen zur Unterscheidung zwischen infraschwarzen Störstreifen und Vertikal-Synchronimpulsen, die die Norm nicht erfüllen, könnte auch noch der Synchronsignaldetektor liefern, denn der Störstreifen ist meist etwas "unruhiger" als der Vertikal-Synchronimpuls. Hieraus folgt, daß der Detektor im Störstreifen mehr Synchronimpulse erkennt als beim Vertikal-Synchronimpuls. Der Vertikal-Synchronsignaldetektor stellt bei Standbildern (vgl. Abschnitt 3.2) die Zeilenanzahl zwischen den intakten Vertikal-Synchronimpulsen fest, die um einige wenige Zeilen größer als 625 ist, damit der Zeilenzähler im Bereich des gestörten Vertikal-Impulses so gesetzt werden kann, daß die beiden Halbbilder richtig verschachtelt werden.

### 5.5 Simulationsergebnisse

In diesem Abschnitt sind die in Kapitel 3.2 dargestellten Sequenzen nach der Simulation des in dieser Diplomarbeit erfundenen Verfahren wiedergegeben. Die horizontal synchronisierten Halbbilderfolgen bestehen insgesamt aus 1250 Zeilen wie die Quellsequenzen in Kapitel 3. Vollbilder sind aus 1152 × 625 Pixeln zusammengesetzt.

In Tabelle 1 sind die Parameter angegeben, die vor der Simulation der jeweiligen Videosequenz in das Shell-Skript (siehe Anhang) eingetragen wurden.

Tabelle 1:

| Simulationsparameter für die Videosequenzen der Fig. 35-32 | | | | | | |
|---|---|---|---|---|---|---|
| Parameter | Fig. 35 | Fig. 20 | Fig. 23 | Fig. 26 | Fig. 29 | Fig. 32 |
| ABTASTWERTE_ZEILE | 1152 | | | | | |
| VOLLBILD-ZEILEN | 625 | | | | | |
| H_SYNC_LAENGE | 85 | | | | | |
| SCHWELLE | 35 | | | | | |
| TP_SCHWE | 20 | 30 | 10 | 25 | 25 | 20 |
| MIN_STEIGUNG | 30 | | | | | |
| S_TOL | 1 | | | | | |
| S_MITTELUNG | 8 | | | | | |
| H_TOL | 10 | | | | | |
| V_TOL | 10 | | | | | |
| TH_MITTELUNG | 1 | | | | | |
| TP_ZEILEN | 2.5 | | | | | |
| F | 50 | 10 | 10 | 10 | 10 | 50 |

**Erläuterungen zu den Simulationsergebnissen**

- Fig. 21/22: Der Phasensprung wurde nach dem Vertikal-Synchronimpuls ausgegeben, da er sich direkt vor ihm befindet und Phasensprünge erst ausgegeben werden, wenn zwei hintereinander folgende Zeilen eine Periodendauer besitzen, die im Toleranzband liegt. Dadurch sind drei der vier Vertikal-Synchronimpulse nach rechts verschoben, wie es in Fig. 21 zu erkennen ist.

- Fig. 24/25: Diese Bilder wurden einwandfrei synchronisiert, was aber nicht bedeutet, daß weitere Vollbilder ebenso gut vertikal synchronisiert werden, da es sich nicht um einen normalen Synchronimpuls handelt. Man sieht in Fig. 25, daß die Zeilenlänge von Halbbild zu Halbbild verschieden ist. Je näher die vertikalen Linien am Horizontal-Synchronimpuls liegen, desto schärfer sind sie. Im oberen Teil ist dies weniger stark ausgeprägt. Die Synchronisationsschaltung muß also auch noch die von 1152 Pixeln abweichende Zeilenlänge auf genau 1152 Pixel festlegen. Der Parameter TP_SCHWE mußte sehr niedrig angesetzt werden, da sonst der Störstreifen die vertikale Synchronisation ausgelöst hätte.

- Fig. 27/28: Die SVHS-Videosequenz wurde einwandfrei synchronisiert, wobei zur vertikalen Synchronisation wegen des nicht der Norm entsprechenden Impulses keine Aussage gemacht werden kann, ob das Bild auf dem Bildschirm völlig ruhig steht, da ja nur ein einziges Bild dargestellt ist. Der schwarze Balken unten im Bild ergänzt das Vollbild zu 625 Zeilen. Die Halbbilder, die das Vollbild erzeugen, bestehen also aus weniger als 312.5 Zeilen. Auch in dieser Sequenz ist die Zeilenlänge variabel.

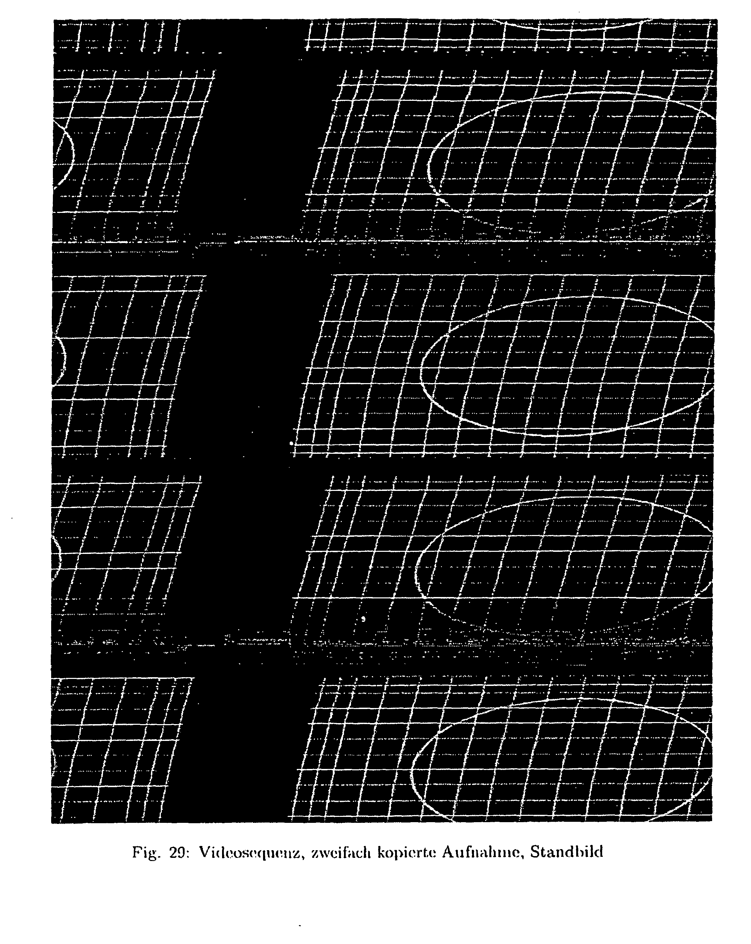

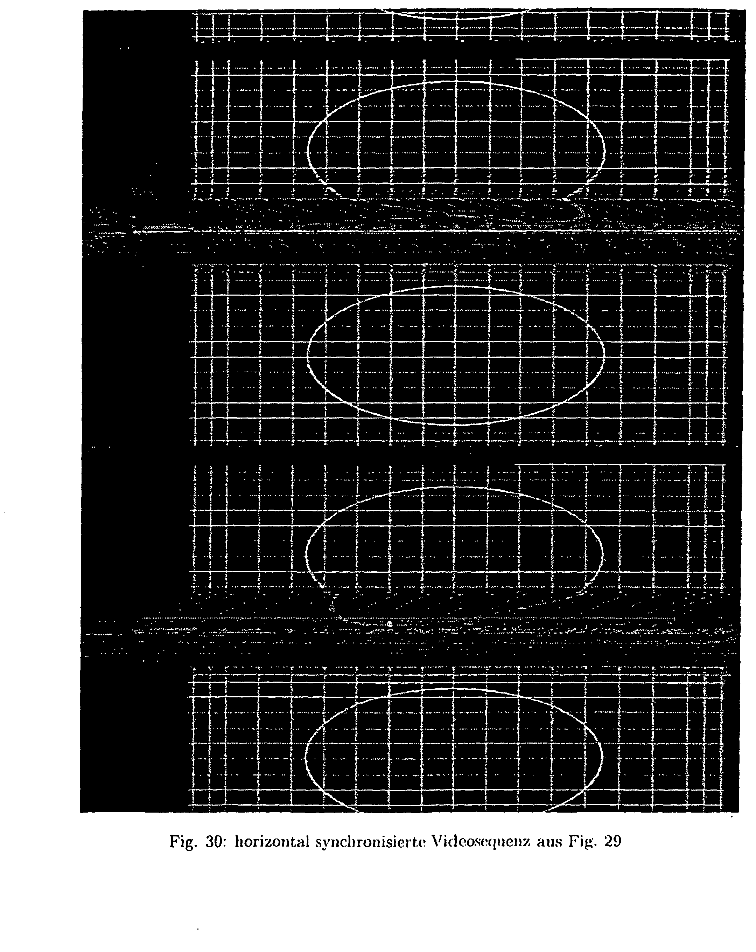

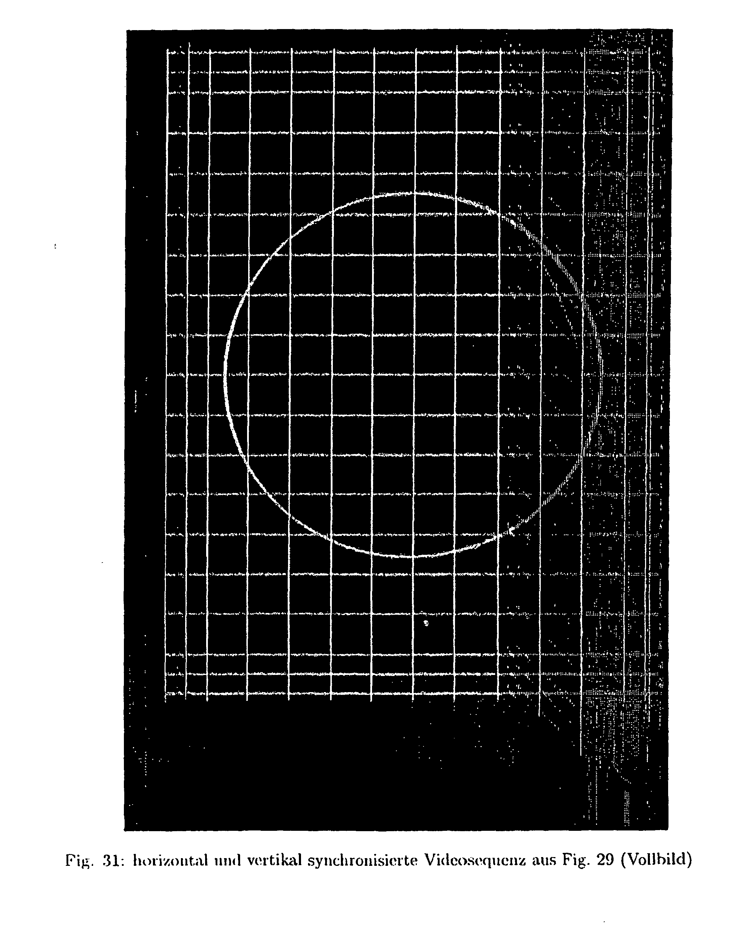

- Fig. 30/31: Das Standbild wurde synchronisiert. Die Zeilenperiodendauer im Störstreifen hätte vermutlich genauer vorhergesagt werden können, da die Linien ziemlich schräg laufen. In Fig. 29 ist die Zeilenfrequenz im Störsteifen aber etwa gleich der im nicht gestörten Bereich des Bildes.

- Fig. 33/34: Das Zeitrafferbild wurde vertikal nicht exakt synchronisiert, was wegen des schlechten Synchronimpulses auch nicht möglich ist.

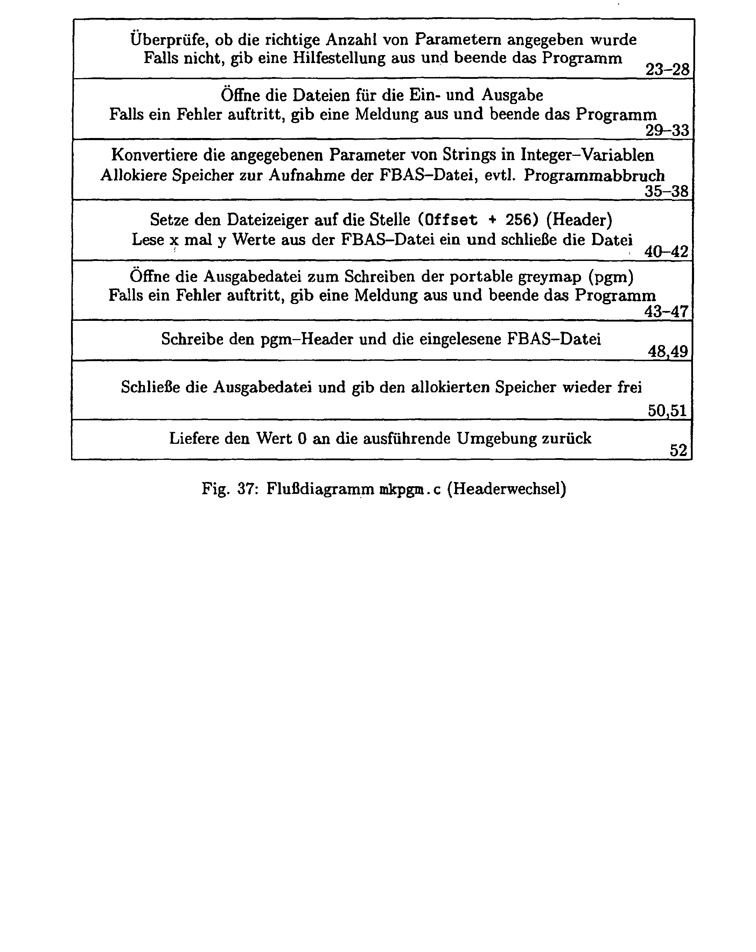

- Fig. 36: Das Fernsehsignal entspricht der Norm und wurde problemlos synchronisiert.

### 6. Zusammenfassung und Ausblick

Das im Rahmen dieser Diplomarbeit erfundene Zeilen- und Bild-Synchronisationsverfahren für Videosignale zeigt bei der Zeilensynchronisation von Videorecordersignalen im Vergleich zu den bisher hierzu verwendeten Phasenregelschleifen ein bedeutend besseres Synchronisationsverhalten, da er den in diesen Signalen auftretenden Phasen- und Frequenzsprüngen bei einem sonst störungsfreien Signal ohne Verzögerung folgen kann (vergleiche Fig. 26 in Kapitel 3 mit Fig. 27 in Abschnitt 5.5).

Dieses Ziel wurde durch die Detektion der Zeilen-Synchronimpulse mit einem Korrelationsfilter erreicht, das zur Suche nach bestimmten Impulsformen, die ein Signal enthält, dem weißes Rauschen überlagert ist, nahezu optimal geeignet ist, siehe Abschnitt 5.2.

Da die Ausgangsfolge des in dieser Arbeit erfundenen Zeilen-Synchronsignaldetektors, die den Abstand zweier benachbarter Synchronimpulse enthält (d. h. meistens die Zeilenlänge), im rauschfreien Fall über viele Zeilen lang nahezu konstant ist, kann ein dieser Folge überlagertes Rauschen durch die Mittelung mehrerer ihrer Werte vermindert werden. Dies entspricht etwa der Funktion des Regelfilters der Phasenregelschleife der analogen Realisierung. Zeilenlängen außerhalb eines Toleranzbandes um den Sollwert (bei Phasensprüngen oder im Bereich des Vertikal-Synchronimpulses) werden nicht in die Mittelung einbezogen, da sonst ein Einschwingvorgang entstünde, der mit dem von Phasenregelkreisen vergleichbar ist.

Wenn im Eingangssignal keine Zeilen-Synchronimpulse enthalten sein sollten, generiert das Verfahren Zeilenperiodendauern (siehe Abschnitt 5.3), was bei der Phasenregelschleife dem Schwingen des Oszillators mit seiner Ruhefrequenz entspricht.

Für die Bild-Synchronisation wird die vom Horizontal-Synchronsignaldetektor gelieferte Folge ausgenutzt, da sie im Zeitraum eines der Norm entsprechenden Vertikal-Synchronimpulses für jedes Halbbild charakteristische aufeinanderfolgende Zahlenwerte aufweist, wie es in Abschnitt 5.4 erläutert wurde. Die charakteristische Folge der Sollwerte wird in zwei Hälften aufgeteilt, die mit der empfangenen Folge verglichen werden. Ist eine Hälfte gestört, wie es hauptsächlich bei Standbildern auftritt, kann das Verfahren den Impuls dennoch erkennen.

Videorecorder liefern aber auch Vertikal-Synchronimpulse, die die Norm nicht erfüllen, siehe z. B. Fig. 23, und die ein Tiefpaß mit einem nachfolgenden Schwellwertentscheider wie in der Analogtechnik erkennt.

Weitere vorteilhafte Erweiterungen des neuen Synchronisationsverfahrens, die im folgenden kurz erläutert werden, sind:

- Die Zeilenperiodendauern *nach* einem Frequenzsprung werden in die Zukunft (dies wird in der Realisierung durch eine Zwischenspeicherung mehrerer Zeilen des Videosignals ermöglicht) anstatt in die Vergangenheit gemittelt, damit kein Einschwingvorgang wie bei der Phasenregelschleife entsteht.

- Interpolation zur Zeilenlängenanpassung auf genau 1152 Pixel.

- Die Anzahl der Werte, über die die Zeilendauer zur Rauschverminderung gemittelt wird, kann automatisch angepaßt werden (wie in Abschnitt 5.3 beschrieben).

- Die Schwellenhöhe, die die Tiefpaßfolge zur Erkennung von nicht der Norm entsprechenden Vertikal-Synchronimpulsen unterschreiten muß, damit Störstreifen, die in die Nähe des Synchronpegelbereichs fallen, die Vertikal-Synchronisation nicht auslösen, aber die wirklichen Synchronimpulse noch erkannt werden, müßte geregelt werden.

- Die Aktivierungsschwelle für das Synchronisationsverfahren kann dem Synchronwert und dem Schwarzwert des Videosignals angepaßt werden. Für die Regelung der Schwelle werden die berechneten Pegel des Synchronwerts und des Schwarzwerts verwendet, siehe Gleichung 5.9. Die Anpassung der Schwelle entspricht der analogen Schwarzwertspeicherung, die in Abschnitt 4.1 beschrieben ist.

Viele der Parameter in Tabelle 1 in Abschnitt 5.5 könnten möglicherweise noch optimiert werden, obwohl der beste Wert der einzelnen Parameter sicher auch von der Art des Eingangssignals abhängt. In den Simulationen wurden Werte angenommen, die sinnvoll erschienen und durch die Simulationsergebnisse in Abschnitt 5.5 schließlich auch bestätigt wurden.

Außerdem sollte der Realisierungsaufwand abgeschätzt werden, indem man die Anzahl der Additionen, Subtraktionen, Divisionen, Multiplikationen, Vergleiche und der Register zählt, die Busbreiten entsprechend der notwendigen Rechengenauigkeit festlegt und die Größe des benötigten Zwischenspeichers für das Videosignal bestimmt, der eine geringe Anzahl von Zeilen speichern können muß. Dann wird man das Verfahren in die realisierungsbeschreibende Sprache VHDL umsetzen.

**A. Simulation**

Um die erfundene Schaltung vor ihrer Hardware-Realisierung austesten und verbessern zu können, ist ihre Simulation auf dem Digitalrechner unerläßlich. Hier sind die C-Quellcodes aufgeführt und beschrieben.

**A.1 Simulationsumgebung,** COSSAP-/C-**Simulation**

Simuliert wurde anfangs mit dem Programmpaket COSSAP, das freundlicherweise von der Abteilung Informationstechnik zur Verfügung gestellt wurde. COSSAP ist ein ereignisgesteuerter Simulator, bei dem einzelne C-Programmmodule auf einer graphischen Oberfläche zusammengeschaltet und mehrere Module zu einem hierarchischen Modul zusammengefaßt werden können. Wegen der großen Modulbibliothek mußten viele benötigte Funktionen nicht programmiert werden.

Die Programmodule legen Impulspositionsfolgen fest, die verarbeitet keinen Bezug mehr zum Abtastraster haben, so daß ein Weitergeben der an diesen Zeitpunkten gewünschten Signale durch die Module nicht mehr zum Erfolg führt und die gesamte Simulation in COSSAP nicht möglich ist. Die Simulationszeiten waren in COSSAP außerdem recht hoch, so daß das Synchronisationsverfahren daraufhin komplett in C implementiert wurde. Die Simulationen waren so um ein Vielfaches schneller und durch die Steuerung der einzelnen Module mit einem Shell-Skript im Vergleich zur Simulation mit COSSAP komfortabel.

**A.2 Quellcodes**

In diesem Abschnitt befinden sich die Dokumentationen der in dieser Arbeit erstellten Programmodule und deren Ausgabedateiformat. Die Funktion der Programme und ihre Parameter werden kurz erklärt. Die Zahlen in den Flußdiagrammen entsprechen den Zeilennummern der Quellcodes.

**A.2.1 Programm** mkpgm. c **zur Umwandlung der Videosequenzen**

Das Programm mkpgm wechselt den Header der FBAS-Dateien aus, so daß die Videosequenzen mit einem Grafik-Programm (z. B. xv) dargestellt werden können. Der Kopf für "portable greymap"-Dateien besteht aus drei Zeilen:
P5
1152 625
255
Die erste Zeile dient zur Erkennung als "pgm"-Datei, in der zweiten steht die Größe in x- und y-Richtung und in der dritten Zeile der Weißwert, d. h. bei acht Bit Quantisierung 255. Parameter von mkpgm sind:

| FBAS-Dateiname | Videosequenz, die graphisch dargestellt werden soll |
|---|---|
| Ausgabedateiname | Datei, die die Videosequenz mit dem pgm-Kopf enthält |
| Offset | Offset, ab dem 256 Byte langen Videosequenz-Header gezählt; dient zur horizontalen Verschiebung des Bildes |
| Pixel/Zeile | in dieser Arbeit immer 1152 |
| Zeilen | Größe des Bildes in y-Richtung |

```c
/*---------------------------------------------------------------*/
/*                        mkpgm.c                                 */
/*      Umwandlung der *_FBAS.ch0-Datei in ein von xv lesbares Format *.pgm */
/*  19.02.1996, Michael Koch,                                     */
/* Abteilung Allgemeine Elektrotechnik und Mikroelektronik, Universitaet Ulm */
/*---------------------------------------------------------------*/
#define MALLOC(VARIABLE, TYP, GROESSE) \
if ((VARIABLE = (TYP *) malloc((GROESSE) * sizeof(TYP))) == NULL)\
{\
  printf("%s: zu wenig Speicher verfuegbar!\n", argv[0]);\
  exit(4);\
}
#include <stdio.h>
/*---------------------------------------------------------------*/
int main(int argc, char *argv[])
{
  FILE        *fp;                    /* Dateizeiger fuer Ein-/Ausgabe */
  unsigned char *Datei;               /* zur Aufnahme der FBAS-Datei */
  long        x,                      /* x Pixel pro Zeile */
              y,                      /* Ausgabe von y Zeilen */
              Offset;     /* Offset, an diese Stelle in FBAS-Datei springen */
/*---------------------------------------------------------------*/
  if (argc != 6)    /* Ausgabe einer Hilfe, falls keine 5 Parameter angegeben */
  {
    printf("%s FBAS-Dateiname Ausgabedateiname Offset Pixel/Zeile Zeilen\n",
           argv[0]);
    exit(1);
  }
  if ((fp = fopen(argv[1],"rb")) == NULL)             /* FBAS-Datei oeffnen */
  {
    printf("%s: %s nicht gefunden!\n",argv[0],argv[1]);
    exit(1);
  }
/*---------------------------------------------------------------*/
  sscanf(argv[3], "%i", &Offset);   /* Parameter von String in long umwandeln */
  sscanf(argv[4], "%i", &x);
  sscanf(argv[5], "%i", &y);
  MALLOC(Datei, unsigned char, x*y);                  /* Speicher allokieren */
/*---------------------------------------------------------------*/
  fseek(fp, Offset + 256, 0);                 /* Dateizeiger auf Offset setzen */
  fread(Datei, sizeof(char), x*y, fp);            /* x*y Abtastwerte einlesen */
  fclose(fp);                                        /* FBAS-Datei schliessen */
  if ((fp = fopen(argv[2],"wb")) == NULL)             /* pgm-Datei oeffnen */
  {
    printf("%s: Datei %s kann nicht geoeffnet werden!", argv[0], argv[2]);
    exit(1);
  }
  fprintf(fp,"P5\n%i %i\n255\n", x, y);              /* pgm-Header schreiben */
  fwrite(Datei, sizeof(char), x*y, fp);                /* Daten schreiben */
  fclose(fp);                                        /* pgm-Datei schliessen */
  free(Datei);                                       /* Speicher freigeben */
  return 0;                                      /* alles ok, 0 zurueckliefern */
}
```

## A.2.2 Modul Synchronsignaldetektor ssd.c

Das Modul ssd erkennt mit dem in Abschnitt 5.2 beschriebenen Verfahren die Synchronimpulse. Die Zeilenperiodendauer wird jedoch erst in Modul hsync gemittelt. Die anzugebenden Parameter bedeuten:

| | |
|---|---|
| FBAS-Dateiname | die das binär codierte FBAS-Signal ($f_A$ = 18 MHz, $q$ = 8 bit) enthaltende Eingabedatei |
| Ausgabedateiname | in diese Datei werden die Impulsschwerpunkte geschrieben, wegen des Aufbaus der Datei siehe A.2.9 |
| Offset | Einsprungstelle in die Datei, ab dem 256-Byte-Kopf gezählt |
| H_Sync_Laenge | $l_S$ (siehe Abschnitt 5.2) |
| Schwelle | soll genau zwischen Synchron- und Schwarzpegel liegen |
| Min_Steigung | minimaler Betrag der Vorderflankensteigung der Korrelationsfunktion, d. h die Mindestsprunghöhe zwischen Schwarzminus Synchronpegel; zur Synchronimpulserkennung |
| Toleranz | Abweichung der Korrelationsfunktion von deren verlängerter Flanke, die zur Erkennung des Punktes auf der Vorderflankengeraden führt |
| Glaettung | Anzahl der Werte, über die die Ableitung der Korrelationsfunktion gemittelt wird |

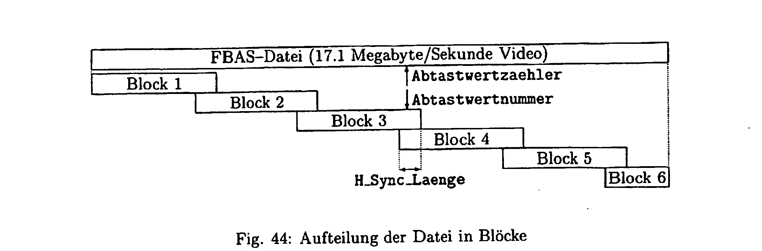

Die großen Video-Dateien müssen in kleinen Teilen in den Arbeitsspeicher des Rechners geladen werden, deshalb erfolgt die Verarbeitung in Blöcken, die sich dabei um die Horizontal-Synchronimpulslänge überlappen, damit die Kurzzeitintegration einfach möglich ist, siehe Fig. 44.

```
/*------------------------------------------------------------------*/
/*                           ssd.c                                  */
/*                      Synchronsignaldetektor                      */
/*  19.02.1996, Michael Koch,                                       */
/*  Abteilung Allgemeine Elektrotechnik und Mikroelektronik, Universitaet Ulm */
/*------------------------------------------------------------------*/
#define MALLOC(VARIABLE, TYP, GROESSE) \
if ((VARIABLE = (TYP *) malloc((GROESSE) * sizeof(TYP))) == NULL)\
{\
  printf("%s: zu wenig Speicher verfuegbar!\n", argv[0]);\
  exit(4);\
}
#include <stdio.h>
#include <unistd.h>            /* SEEK_CUR ... */
/*------------------------------------------------------------------*/
                                    /* verschiebt den Vektor "Register" */
                                    /* der Laenge "Groesse" um eine     */
                                    /* Index-Position nach oben, d.h.   */
                                    /* in die Vergangenheit             */
void Schiebe_Register(int *Register, int Laenge)
{
  int Zaehler;

  for(Zaehler = Laenge; Zaehler > 0; Zaehler--)
    Register[Zaehler] = Register[Zaehler - 1];
}
/*------------------------------------------------------------------*/
main(int argc, char *argv[])
{
  FILE        *FBAS_Datei,           /* Datei von der Videosequenz-Anlage */
              *Sync_Position_Datei;            /* Ausgabedatei */
  unsigned char *FBAS_Signal;            /* enthaelt Teil der FBAS-Datei */
  int         *Tiefpass,            /* zur Aufaddition des FBAS-Signals */
              H_Sync_Laenge,            /* H-Sync-Laenge fuer Tiefpass */
              *Tiefpass_d_dt,              /* Ableitung von Tiefpass */
              *Tiefpass_d_dt_geglaettet,      /* Mittel von Tiefpass_d_dt */
              Glaettung_Abtastwerte,    /* fuer Mittelung von Tiefpass_d_dt */
              Tiefpass_d_dt_Summe,       /* Hilfsvariable zur Glaettung */
              Toleranz,                         /* Toleranz */
              Min_Steigung,          /* minimaler Betrag der Steigung */
              Schwellzaehler,/* Abtastwerte, seit Schwelle 2 unterschritten */
              Abtastwertzaehler,      /* aktueller Abtastwert in FBAS-Datei */
              Schwelle1,          /* vorgegebene Synchronpegelschwelle */
              Sync_Schwelle,          /* berechnete Synchronpegelschwelle */
              Schwelle2,    /* Wert des Endes der linken Flanke von Tiefpass */
              Schwelle_Flag,     /* gesetzt, wenn Toleranz ueberschritten */
              Steigung,              /* Steigung der linken Flanke */
              Zeilenzaehler,
              Schwarzwert,
              Abtastwerte,         /* wieviele Abtastwerte wurden gelesen? */
              Ende_Flag;     /* gesetzt, wenn Block nicht aufgefuellt */
  double      Sync;          /* Position der Sync-Impuls-Vorderflanke */
  unsigned int Offset,                   /* Einsprungstelle in FBAS-Datei */
              Blocklaenge,               /* Anzahl eingelesener Abtastwerte */
              Blocknummer,
              Abtastwertnummer;          /* aktueller Abtastwert im Block */

  if (argc != 9)    /* Ausgabe einer Hilfe, falls keine 8 Parameter angegeben */
  {
    printf("%s FBAS-Dateiname Ausgabedateiname Offset H_Sync_Laenge Schwelle\
Min_Steigung Toleranz Glaettung\n", argv[0]);
    exit(2);
  }
/*------------------------------------------------------------------*/
  Blocknummer = 0;                            /* Initialisierung */
  Zeilenzaehler = 0;
  Ende_Flag = 0;
  Abtastwertzaehler = 0;
```

```
Schwelle_Flag = 0;
Schwellzaehler = 0;
Blocklaenge = 2000000;                  /* 2000000 Bytes pro Block einlesen */
/*------------------------------------------------------------------------*/
sscanf(argv[3], "%i", &Offset);              /* Parameter in Variablen einlesen */
sscanf(argv[4], "%i", &H_Sync_Laenge);
sscanf(argv[5], "%i", &Schwelle1);
sscanf(argv[6], "%i", &Min_Steigung);
sscanf(argv[7], "%i", &Toleranz);
sscanf(argv[8], "%i", &Glaettung_Abtastwerte);
/*------------------------------------------------------------------------*/
MALLOC(FBAS_Signal, unsigned char, Blocklaenge);     /* Speicher allokieren */
MALLOC(Tiefpass, int, 2);
MALLOC(Tiefpass_d_dt, int , Glaettung_Abtastwerte + 1);
MALLOC(Tiefpass_d_dt_geglaettet, int, 2);
/*------------------------------------------------------------------------*/
if ((FBAS_Datei = fopen(argv[1], "rb")) == NULL)         /* Dateien oeffnen */
{
  printf("%s: FBAS-Datei %s nicht lesbar/gefunden!\n", argv[0], argv[1]);
  exit(1);
}
if ((Sync_Position_Datei = fopen(argv[2], "w")) == NULL)
{
  printf("%s: Datei %s konnte nicht geoeffnet werden!\n", argv[0], argv[1]);
  exit(1);
}
fseek(FBAS_Datei, 255 + Offset, SEEK_SET); /* 256-Byte-Header ueberspringen */
/*------------------------------------------------------------------------*/
do                                              /* "Block"-Schleife */
{
  Abtastwerte = fread(FBAS_Signal, sizeof(char), Blocklaenge, FBAS_Datei);
  if (Abtastwerte < Blocklaenge)               /* Ende der Datei erreicht */
  {
    Blocklaenge = Abtastwerte;                  /* Blocklaenge anpassen */
    Ende_Flag = 1;                              /* Ende-Flag setzen */
  }
  if (Blocknummer == 0)                         /* zu Beginn der Simulation */
  {                                             /* Initialisierung */
    for(Abtastwertnummer = 0;                   /* Tiefpass "auffuellen" */
        Abtastwertnummer < H_Sync_Laenge;
        Abtastwertnummer++)
      Tiefpass[0] += FBAS_Signal[Abtastwertnummer];
    Tiefpass[1] = Tiefpass[0];
  }
  Blocknummer++;
/*------------------------------------------------------------------------*/
  for(Abtastwertnummer = 0;                     /* ganzen Block abarbeiten */
      Abtastwertnummer < Blocklaenge - H_Sync_Laenge;
      Abtastwertnummer++)
  {
    Abtastwertzaehler++;
/*------------------------------------------------------------------------*/
    Tiefpass[0] += FBAS_Signal[Abtastwertnummer + H_Sync_Laenge]
                 - FBAS_Signal[Abtastwertnummer];
    Tiefpass_d_dt[0] = Tiefpass[0] - Tiefpass[1];
    Tiefpass_d_dt_Summe += Tiefpass_d_dt[0]
                 - Tiefpass_d_dt[Glaettung_Abtastwerte];
    Tiefpass_d_dt_geglaettet[0] = Tiefpass_d_dt_Summe / Glaettung_Abtastwerte;
/*------------------------------------------------------------------------*/
    if (Tiefpass[1] < H_Sync_Laenge * Schwelle1)
    {
      if ((Tiefpass_d_dt[0] < Tiefpass_d_dt_geglaettet[0] + Toleranz) &&
          (Tiefpass_d_dt_geglaettet[0] < -Min_Steigung))
      {
        Schwelle_Flag = 1;
        Schwelle2 = Tiefpass[1];
        Steigung = -Tiefpass_d_dt_geglaettet[1];
        Schwellzaehler = 0;
```

```
        }
    if ((Tiefpass[0] > Schwelle2) && (Schwelle_Flag))
    {
        Sync = (double) (255 + Offset + Abtastwertzaehler)
                - (double) Schwellzaehler / 2.0
                + (double) (Schwelle2 - Tiefpass[1]) / (2.0 * Steigung);
        Schwelle_Flag = 0;
        Zeilenzaehler++;
        Schwarzwert = Schwelle2 / H_Sync_Laenge + Steigung;
        Sync_Schwelle = Schwelle2 / H_Sync_Laenge + Steigung / 2;
        fprintf(Sync_Position_Datei, "%lf %i 0 %i %i\n"
                , Sync, Zeilenzaehler, Schwarzwert, Sync_Schwelle);
    }
    if (Schwelle_Flag == 1) /* Schwelle2 noch nicht wieder ueberschritten */
        Schwellzaehler++;        /* Abtastwertzaehler dafuer inkrementieren */
    }
/*-------------------------------------------------------------------------*/
    Schiebe_Register(Tiefpass, 2);                  /* Register aktualisieren */
    Schiebe_Register(Tiefpass_d_dt, Glaettung_Abtastwerte);
    Schiebe_Register(Tiefpass_d_dt_geglaettet, 2);
/*-------------------------------------------------------------------------*/
    }
    fseek(FBAS_Datei, -H_Sync_Laenge, SEEK_CUR); /* Dateizeiger zuruecksetzen */
}
while (Ende_Flag == 0);
/*-------------------------------------------------------------------------*/
free(FBAS_Signal);                              /* Speicher freigeben */
free(Tiefpass);
free(Tiefpass_d_dt);
free(Tiefpass_d_dt_geglaettet);
fclose(Sync_Position_Datei);                    /* Dateien schliessen */
fclose(FBAS_Datei);
return 0;
}
```

### A.2.3 Modul Horizontal-Synchronimpulsgenerator hsync. c

Dieses Modul verarbeitet die vom Synchronimpulsdetektor gelieferte Folge, wie es in Abschnitt 5.3 beschrieben wurde. Außerdem mittelt es die Zeilendauern, siehe Abschnitt 5.2 und erkennt normgerechte Vertikal-Synchronimpulse. Die Parameter von hsync sind:

| | |
|---|---|
| Sync_Position_Datei | Ausgabedatei von ssd |
| Ausgabedateiname | Name der Ausgabedatei von hsync |
| Abtastwerte/Zeile | in dieser Arbeit immer 1152 |
| H_Toleranz(Zeile) | ist die Horizontalfrequenz der Zeile im Bereich Abtastwerte/Zeile $\pm$ H_Toleranz(Zeile), so ist sie intakt |
| V_Toleranz | Toleranz, in der die Zahlen der Folgen 5.11 und 5.12 schwanken dürfen, um trotzdem erkannt zu werden |
| H_Mittelung | Anzahl der (intakten) Zeilen zur $T_h$-Mittelung |

```c
/*-------------------------------------------------------------------*/
/*                        hsync.c                                    */
/*                 Horizontal-Synchronsignalgenerator               */
/*  19.02.1996, Michael Koch,                                       */
/* Abteilung Allgemeine Elektrotechnik und Mikroelektronik, Universitaet Ulm */
/*-------------------------------------------------------------------*/
#define MALLOC(VARIABLE, TYP, GROESSE) \
if ((VARIABLE = (TYP *) malloc((GROESSE) * sizeof(TYP))) == NULL)\
{\
  printf("%s: zu wenig Speicher verfuegbar!\n", argv[0]);\
  exit(4);\
}
#include <stdio.h>
#include <unistd.h>
#include <math.h>
/*-------------------------------------------------------------------*/
                                    /* verschiebt den Vektor "Register" */
                                    /* der Laenge "Groesse" um eine     */
                                    /* Index-Position nach oben, d.h.   */
                                    /* in die Vergangenheit             */
void Schiebe_Register(float *Register, int Laenge)
{
  int Zaehler;

  for(Zaehler = Laenge; Zaehler > 0; Zaehler--)
    Register[Zaehler] = Register[Zaehler - 1];
}
/*-------------------------------------------------------------------*/
main(int argc, char *argv[])
{
  FILE        *Sync_Position_Datei,    /* Eingabe: detektierte Sync-Impulse */
              *H_Sync_Position_Datei;      /* Ausgabe: H-Synchronimpulse */
  float       *Sync,          /* Position eines detektierten Sync-Impulses */
              *Sync_d_dt,                      /* Ableitung, liefert Th */
              Sync_d_dt_Summe,        /* Zwischenergebnis der Integration */
              Sync_d_dt_gemittelt,                  /* Th gemittelt */
              Sync_d2_dt2_abs_Summe,  /* Zwischenergebnis der Integration */
              *Sync_d_dt_in_Tol,    /* Zwischenspeicher fuer Zeilen in Tol. */
              *Sync_d2_dt2_abs, /* Betrag 2te Ableitung zur Rauscherkennung */
              Sync_absolut,           /* fuer Ausgabe des H-Sync-Impulses */
              Auffuell_Sync, /* mit diesem Th werden fehlende Syncs ersetzt */
              relativ_Abtastwerte;                 /* Aufaddierte Th's */
  int         Zeilenzaehler,
              Abtastwerte_Zeile,         /* Anzahl Abtastwerte pro Zeile */
              H_Toleranz,               /* Tolrranz fuer Abstand H-Sync */
              V_Toleranz,               /* Toleranz fuer Abstand V-Sync */
              H_Mittelung,                             /* Mittelung Th */
              H_Punkt_Mittelung = 312,             /* Mittelung Th_Punkt */
              Schwarzwert,                      /* berechneter Schwarzwert */
              Sync_Schwelle,        /* berechnetes  (U_Schwarz-U_Sync)/2 */
              Zaehler,
              Dummy;
  unsigned char V_Sync_Info;            /* Information fuer V-Sync-Modul */
/*-------------------------------------------------------------------*/
  if (argc != 7)   /* Ausgabe einer Hilfe, falls keine 6 Parameter angegeben */
  {
    printf("%s Sync_Position_Datei Ausgabedateiname Abtastwerte/Zeile\
H_Toleranz(Zeile) V_Toleranz H_Mittelung\n", argv[0]);
    exit(2);
  }
/*-------------------------------------------------------------------*/
  sscanf(argv[3], "%i", &Abtastwerte_Zeile);              /* Parameter einlesen */
  sscanf(argv[4], "%i", &H_Toleranz);
  sscanf(argv[5], "%i", &V_Toleranz);
  sscanf(argv[6], "%i", &H_Mittelung);
/*-------------------------------------------------------------------*/
  Auffuell_Sync = Abtastwerte_Zeile;                     /* Initialisierung */
  Zeilenzaehler = 0;
```

```
MALLOC(Sync, float, 3);                                  /* Speicher allokieren */
MALLOC(Sync_d_dt, float, 6);
MALLOC(Sync_d_dt_in_Tol, float, H_Mittelung + 1);
MALLOC(Sync_d2_dt2_abs, float, H_Punkt_Mittelung + 1);
for(Zaehler = 0; Zaehler <= H_Punkt_Mittelung; Zaehler++)
    Sync_d2_dt2_abs[Zaehler] = 0;
for(Zaehler = 0; Zaehler <= H_Mittelung; Zaehler++)
    Sync_d_dt_in_Tol[Zaehler] = Abtastwerte_Zeile;
Sync_d_dt_Summe = H_Mittelung * Abtastwerte_Zeile;
Sync_d_dt_gemittelt = Sync_d_dt_Summe / (float) H_Mittelung;
/*-------------------------------------------------------------------*/
if ((Sync_Position_Datei = fopen(argv[1], "r")) == NULL) /* Dateien oeffnen */
{
    printf("%s: Sync_Position_Datei %s nicht lesbar/gefunden!\n",
            argv[0], argv[1]);
    exit(1);
}
if ((H_Sync_Position_Datei = fopen(argv[2], "w")) == NULL)
{
    printf("%s: Datei %s konnte nicht geoeffnet werden!\n", argv[0], argv[1]);
    exit(1);
}
fscanf(Sync_Position_Datei, "%f %i %i %i %i", &Sync[1],
        &Dummy, &Dummy, &Schwarzwert, &Sync_Schwelle);

Sync_absolut = Sync[1];      /* Position des ersten detektierten Syncs merken */
while (fscanf(Sync_Position_Datei, "%f %i %i %i %i",
        &Sync[0], &Dummy, &Dummy, &Schwarzwert, &Sync_Schwelle) == 5)
{
    Sync_d_dt[0] = Sync[0] - Sync[1];
/*-------------------------------------------------------------------*/
    if ((fabs(Sync_d_dt[5] - 3659) < V_Toleranz &&  /* Info fuer V-Sync-Modul */
        fabs(Sync_d_dt[4] - 576) < V_Toleranz &&
        fabs(Sync_d_dt[3] - 576) < V_Toleranz) ||
        (fabs(Sync_d_dt[2] - 576) < V_Toleranz &&
        fabs(Sync_d_dt[1] - 576) < V_Toleranz &&
        fabs(Sync_d_dt[0] - 3253) < V_Toleranz))
    {
      Zeilenzaehler = 1;
      V_Sync_Info &= ~1;                                       /* Halbbild 1 */
      V_Sync_Info |= 2;                                        /* V_Sync detektiert */
    }
    if ((fabs(Sync_d_dt[5] - 4235) < V_Toleranz &&
        fabs(Sync_d_dt[4] - 576) < V_Toleranz &&
        fabs(Sync_d_dt[3] - 576) < V_Toleranz) ||
        (fabs(Sync_d_dt[2] - 576) < V_Toleranz &&
        fabs(Sync_d_dt[1] - 576) < V_Toleranz &&
        fabs(Sync_d_dt[0] - 3829) < V_Toleranz))
    {
      Zeilenzaehler = 1;
      V_Sync_Info |= 1;                                        /* Halbbild 2 */
      V_Sync_Info |= 2;                                        /* V_Sync detektiert */
    }
    if (Zeilenzaehler > 640)                  /* zu lange kein V_Sync detektiert */
      V_Sync_Info &= ~2;
/*-------------------------------------------------------------------*/
    if (fabs(Sync_d_dt[2] - Abtastwerte_Zeile) < H_Toleranz)    /* Zeile okay */
    {
      Sync_d_dt_in_Tol[0] = Sync_d_dt[2];          /* Register aktualisieren */
      Sync_d_dt_Summe += Sync_d_dt_in_Tol[0] - Sync_d_dt_in_Tol[H_Mittelung];
      Sync_d_dt_gemittelt = Sync_d_dt_Summe / (float) H_Mittelung;
      relativ_Abtastwerte += Sync_d_dt_gemittelt;
      Sync_d2_dt2_abs[0] = fabs(Sync_d_dt_in_Tol[0] - Sync_d_dt_in_Tol[1]);
      Sync_d2_dt2_abs_Summe += Sync_d2_dt2_abs[0]
                           - Sync_d2_dt2_abs[H_Punkt_Mittelung];
      Schiebe_Register(Sync_d_dt_in_Tol, H_Mittelung + 1);
      Schiebe_Register(Sync_d2_dt2_abs, H_Punkt_Mittelung + 1);
    }
```

```
    else
        relativ_Abtastwerte += Sync_d_dt[2];          /* geliefertes Th addieren */
/*-------------------------------------------------------------------*/
    while (relativ_Abtastwerte > 1.5 * Abtastwerte_Zeile)      /* Auffuellen */
    {
        V_Sync_Info &= ~4;                         /* Info: Position ist aufgefuellt */
        fprintf(H_Sync_Position_Datei, "%f %i %i %i %i\n",
          Sync_absolut, Zeilenzaehler, V_Sync_Info, Schwarzwert, Sync_Schwelle);
        Sync_absolut += Auffuell_Sync;   /* Position des aktuellen Sync-Impulses */
        Zeilenzaehler++;
        relativ_Abtastwerte -= Auffuell_Sync;
    }
/*-------------------------------------------------------------------*/
    if ((fabs(relativ_Abtastwerte - Abtastwerte_Zeile) <
         fabs(relativ_Abtastwerte - Abtastwerte_Zeile + Sync_d_dt[1])) &&
        fabs(Sync_d_dt[1] - Abtastwerte_Zeile) < H_Toleranz && /* norm/Sprung */
        fabs(Sync_d_dt[0] - Abtastwerte_Zeile) < H_Toleranz)
    {
        V_Sync_Info |= 4;
        fprintf(H_Sync_Position_Datei, "%f %i %i %i %i\n",
          Sync_absolut, Zeilenzaehler, V_Sync_Info, Schwarzwert, Sync_Schwelle);
        if (fabs(Sync_d_dt[2] - Abtastwerte_Zeile) < H_Toleranz)
          Auffuell_Sync = (Auffuell_Sync + Sync_d_dt[2]) / 2.0;
        Sync_absolut += relativ_Abtastwerte;  /* Position aktueller Sync-Imp. */
        Zeilenzaehler++;
        relativ_Abtastwerte = 0.0;             /* gesamte Zeitspanne an Ausgang */
    }
/*-------------------------------------------------------------------*/
    Schiebe_Register(Sync, 3);                    /* Register aktualisieren */
    Schiebe_Register(Sync_d_dt, 6);
    }
/*-------------------------------------------------------------------*/
    free(Sync);                                   /* Speicher freigeben */
    free(Sync_d_dt);
    free(Sync_d_dt_in_Tol);
    free(Sync_d2_dt2_abs);
    fclose(Sync_Position_Datei);                  /* Dateien schliessen */
    fclose(H_Sync_Position_Datei);
    return 0;
}
```

**A.2.4 Modul Vertikal-Synchronimpulsgenerator** vsync. c

Das Modul vsync bearbeitet die Folge des hsync-Moduls nach der Beschreibung von Abschnitt 5.4, die normalen Vertikal-Synchronimpulse werden jedoch bereits im Modul hsync detektiert. Seine Parameter sind:

| | |
|---|---|
| FBAS-Dateiname | Datei, die die zu bearbeitende Videosequenz enthält |
| H_Sync_Dateiname | die von hsync erzeugte Datei |
| Ausgabedateiname | Ausgabedateiname von vsync |
| Sync_Schwelle | Schwellwert (Pegel), den die FBAS-Folge über Tiefpass_Zeilen im Durchschnitt zur Erkennung eines Vertikal-Synchronimpulses unterschreiten muß |
| Abtastwerte/Zeile | in dieser Arbeit immer 1152 |
| Tiefpass_Zeilen | Länge des Integrationsfensters in Zeilen, hier 2.5 Zeilenperiodendauern entsprechend der Synchronimpulslänge von 160 µs |
| Fensterlaenge | Anzahl der Zeilen, für die die Tiefpaßerkennung von Vertikal-Synchronimpulsen gesperrt wird |

```
/*------------------------------------------------------------------*/
/*                          vsync.c                                 */
/*               Vertikal-Synchronsignalgenerator                   */
/*   19.02.1996, Michael Koch,                                      */
/* Abteilung Allgemeine Elektrotechnik und Mikroelektronik, Universitaet Ulm */
/*------------------------------------------------------------------*/
#include <stdio.h>
int main(int argc, char *argv[])
{
   FILE         *FBAS_Datei,           /* Datei von der Videosequenz-Anlage */
                *H_Sync_Position_Datei,         /* Eingabedatei von hsync.c */
                *VH_Sync_Datei;                         /* Ausgabedatei */
   unsigned char FBAS_Signal[300000];     /* FBAS-Signal, fuer Tiefpass-Signal */
   double       Zeile_r,               /* von hsync.c gelieferte Zeilennummer */
                Position_r,                          /* H-Sync-Position */
                V_Sync_Info_r,    /* binaer codierte Info, siehe Flussdiagramm */
                Tiefpass_Zeilen;      /* Laenge des Integr.fensters in Zeilen */
   int          Zeilenzaehler,         /* Zeilenzaehler, den vsync.c schreibt */
                Abtastwerte_Zeile,
                Hilfszaehler,
                Tiefpass,                            /* Tiefpass-Signal */
                Tiefpass_Schwelle,             /* Schwelle fuer Tiefpass-Signal */
                Sync_Schwelle,         /* Pegel, soll: (Schwarz - Sync) / 2 */
                Halbbild = 1,                 /* 0 = Halbbild 1, 1 = Halbbild 2 */
                Vollbildgroesse = 625,
                V_Sync_Info,                     /* Integer-Info, wie oben */
                Zeile,                           /* Integer-Info, wie oben */
                Position,                        /* Integer-Info, wie oben */
                Schwarzwert,                      /* hier nicht benoetigt */
                Fenster,
                Dummy_i;
/*------------------------------------------------------------------*/
   if (argc != 8)    /* Ausgabe einer Hilfe, falls keine 7 Parameter angegeben */
   {
      printf("%s FBAS-Dateiname H_Sync_Dateiname Ausgabedateiname Sync_Schwelle\
Abtastwerte/Zeile Tiefpass_Zeilen Fensterlaenge\n",argv[0]);
      exit(1);
   }
/*------------------------------------------------------------------*/
   sscanf(argv[4], "%i", &Sync_Schwelle);               /* Parameter einlesen */
   sscanf(argv[5], "%i", &Abtastwerte_Zeile);
   sscanf(argv[6], "%lf", &Tiefpass_Zeilen);
   sscanf(argv[7], "%i", &Fenster);
/*------------------------------------------------------------------*/
   if ((FBAS_Datei = fopen(argv[1],"rb")) == NULL)         /* Dateien oeffnen */
   {
      printf("%s: FBAS_Datei %s nicht lesbar/gefunden!\n",argv[0],argv[1]);
      exit(1);
   }
   if ((H_Sync_Position_Datei = fopen(argv[2],"r")) == NULL)
   {
      printf("%s: H_Sync_Datei %s nicht lesbar/gefunden!\n",argv[0],argv[2]);
      exit(1);
   }
   if ((VH_Sync_Datei = fopen(argv[3],"w")) == NULL)
   {
      printf("%s: Datei %s konnte nicht geoeffnet werden!\n",argv[0],argv[3]);
      exit(1);
   }
/*------------------------------------------------------------------*/
   Zeilenzaehler = 0;
/*------------------------------------------------------------------*/
   while (fscanf(H_Sync_Position_Datei,"%lf %lf %lf %i %i\n",
      &Position_r, &Zeile_r, &V_Sync_Info_r, &Schwarzwert, &Dummy_i) == 5)
   {
      V_Sync_Info = (int) V_Sync_Info_r;                  /* Daten konvertieren */
      Zeile = (int) Zeile_r;
      Position = (int) Position_r;
```

```
if ((V_Sync_Info & 2) == 2)        /* Normaler V-Sync von hsync.c detektiert */
{
  if ((Zeilenzaehler > 313) && ((Zeilenzaehler - Zeile) > 312))
    Vollbildgroesse = Zeilenzaehler;
  if ((Zeilenzaehler == 1) && ((Zeilenzaehler - Zeile) == 312))
    Vollbildgroesse = 625;
  Zeilenzaehler = Zeile;
  Halbbild = V_Sync_Info & 1;                      /* detektiertes Halbbild */
  if (Vollbildgroesse != 625 && Zeile >= 314) /* Halbbildwechsel Standb. */
  {
    V_Sync_Info ^= 1;
    Halbbild = !Halbbild;
    Zeilenzaehler -= 313 + (Vollbildgroesse - 625); /* Zeilen uebergehen */
  }
}
else                          /* keinen der Norm entsprechenden V-Sync detektiert */
{
  Zeilenzaehler++;
  if ((V_Sync_Info & 4) == 0)   /* nur bei nicht intakten Zeilen "schauen" */
  {
    fseek(FBAS_Datei, Position, 0);                      /* Dateizeiger setzen */
    fread(FBAS_Signal, sizeof(char),                     /* Abtastwerte einlesen */
        (int) Tiefpass_Zeilen*Abtastwerte_Zeile, FBAS_Datei);
    Tiefpass = 0;                               /* Tiefpass-Signal berechnen */
    for(Hilfszaehler = 0;
        Hilfszaehler < (int) Tiefpass_Zeilen*Abtastwerte_Zeile;
        Hilfszaehler++)
      Tiefpass += FBAS_Signal[Hilfszaehler];
    Tiefpass_Schwelle = Tiefpass_Zeilen*Abtastwerte_Zeile*Sync_Schwelle;
    if (Tiefpass < Tiefpass_Schwelle && Zeilenzaehler > Fenster)
    {
      printf("Zeilenzaehler:%i Zeile:%i Tiefpass:%i Tiefpass_Schwelle:%i\n",
          Zeilenzaehler, Zeile, Tiefpass, Tiefpass_Schwelle);
      Halbbild = !Halbbild;                              /* naechstes Halbbild */
      Zeilenzaehler = 1;                                 /* Zeilenzaehler zuruecksetzen */
    }
  }
}
if (Halbbild == 1)
  V_Sync_Info &= ~1;
else
  V_Sync_Info |= 1;
fprintf(VH_Sync_Datei,"%lf %i %i %i %i\n",
    Position_r, Zeilenzaehler + Halbbild * 313,
    V_Sync_Info, Schwarzwert, Sync_Schwelle);
}
/*-----------------------------------------------------------------------------*/
fclose(FBAS_Datei);                                 /* Dateien schliessen */
fclose(H_Sync_Position_Datei);
fclose(VH_Sync_Datei);
return 0;
}
```

**A.2.5 Shell-Prozedur** sim **zur Gesamt-Simulation**

Das Shell-Skript sim steuert die gesamte Simulation. Die Parameter der einzelnen Module werden oben in die Variablen eingetragen. Nach dem Aufruf von sim wird der Anfang der zu verarbeitenden Videosequenz dargestellt und die Simulation gestartet, indem die Simulationsmodule ssd, hsync und vsync nacheinander aufgerufen werden. Zum Schluß startet das Shell-Skript zur Kontrolle der Ergebnisse die Bilderzeugungsmodule ver und vervs, dann xv. In die Variable DIR wird das Verzeichnis eingetragen, in das die Ergebnisse abgelegt werden sollen.

```
#!/bin/sh
# ------------------------------------------------------------------
# Shell zur Ausfuehrung der Gesamtsimulation
# 19.02.1996, Michael Koch
# Abteilung Allgemeine Elektrotechnik und Mikroelektronik
# ------------------------------------------------------------------
# ----------------------------- Parameter ---------------------------
DIR=/video/koch          # Verzeichnis, in das die Ergebnisse abgelegt werden
ABTASTWERTE_ZEILE=1152
VOLLBILD_ZEILEN=625
H_SYNC_LAENGE=85         # Laenge des Horizontal-Synchronimpulses in Abtastwerten
SCHWELLE=30              # Schwelle fuer die Korr.-Funktion,  Algorithmus
TP_SCHWE=20              # Tiefpass-Schwelle V-Sync
MIN_STEIGUNG=30          # Mindestwert der Steigung (Betrag) U_Schwarz - U_Sync
S_TOL=1                  # (Steigung - Steigung_mittel) > S_TOL
S_MITTELUNG=16           # ueber S_MITTELUNG Abtastwerte
H_TOL=10                 # ABTASTWERTE_ZEILE +/- H_TOL -> Zeile ok
V_TOL=10                 # ABTASTWERTE_ZEILE +/- H_TOL -> V-SYNC-Teil-Impuls ok
TH_MITTELUNG=1           # Mittelung von Th ueber TH_MITTELUNG Zeilen
TP_ZEILEN=2.5            # Laenge des Tiefpass-Fensters fuer
F=10                     # Fensterlaenge, V-Sync-Detektion, Tiefpass gesperrt
# ------------------------- Quelldatei betrachten -------------------
echo xv wird gestartet... `date`
vv $1 255 & >/dev/null
EXIT_STATUS=$?
if [ $EXIT_STATUS -ne 0 ]
then
  echo Fehler in vv aufgetreten!
  exit
fi
# ----------------------- Synchronsignaldetektion --------------------
echo Synchronsignaldetektion laeuft... `date`
ssd $1 $DIR/$1.ssd 0 $H_SYNC_LAENGE $SCHWELLE $MIN_STEIGUNG $S_TOL $S_MITTELUNG
EXIT_STATUS=$?
if [ $EXIT_STATUS -ne 0 ]
then
  echo Fehler in ssd aufgetreten!
  exit
fi
# ----------------------- Horizontal-Synchronisierung ----------------
echo Horizontal-Synchronisierung laeuft... `date`
hsync $DIR/$1.ssd $DIR/$1.hsync $ABTASTWERTE_ZEILE $H_TOL $V_TOL $TH_MITTELUNG
EXIT_STATUS=$?
if [ $EXIT_STATUS -ne 0 ]
then
  echo Fehler in hsync aufgetreten!
  exit
fi
# ----------------------- Vertikal-Synchronisierung ------------------
echo Vertikal-Synchronisierung laeuft... `date`
vsync $1 $DIR/$1.hsync $DIR/$1.vhsync $TP_SCHWE $ABTASTWERTE_ZEILE $TP_ZEILEN $F
EXIT_STATUS=$?
if [ $EXIT_STATUS -ne 0 ]
then
  echo Fehler in vsync aufgetreten!
  exit
fi
# ------------- synchronisierte Video-Sequenz erzeugen ---------------
echo Bild-Erzeugung laeuft... `date`
ver $1 $DIR/$1.hsync $DIR/$1.pgm ${2-0} $ABTASTWERTE_ZEILE $VOLLBILD_ZEILEN
EXIT_STATUS=$?
if [ $EXIT_STATUS -ne 0 ]
then
  echo Fehler in ver aufgetreten!
  exit
fi
# ----------------------- Vollbilder erzeugen ------------------------
vervs $1 $DIR/$1.vhsync $DIR/$1 ${2-0} $ABTASTWERTE_ZEILE $VOLLBILD_ZEILEN
```

```
69 EXIT_STATUS=$?
70 if [ $EXIT_STATUS -ne 0 ]
71 then
72   echo Fehler in vervs aufgetreten!
73   exit
74 fi
75 # ----------------------- Ergebnisse betrachten ----------------------------
76 echo xv wird gestartet... 'date'
77 xv $DIR/$1*.pgm
78
```

**A.2.6 Programm** ver. c **zur Nachbearbeitung von Videosequenzen**

Das Modul ver holt die Positionen der Horizontal-Synchronimpulse aus der Eingabedatei, liest die zugehörige Zeile ein und interpoliert zwischen den Pixeln linear mit dem Nachkommawert der Impulsposition. Die Zeilen werden nacheinander in eine Datei mit einem pgm-Kopf geschrieben, die z. B. mit dem Grafikprogramm xv eingeladen werden kann. Die Parameter haben folgende Bedeutungen:

| | |
|---|---|
| FBAS-Dateiname | Datei, die die bearbeitete Videosequenz enthält |
| Sync-Positions-Dateiname | Datei, in der die Horizontal-Synchronimpulspositionen stehen |
| Ausgabedateiname | Name der pgm-Datei |
| Offset | Offset zur horizontalen Verschiebung, damit sich z. B. der Synchronimpuls in der Bildmitte und nicht am linken Rand befindet |
| Abtastwerte/Zeile | $T_h f_A$ = 64 µs·18 MHz=1152 |
| Zeilen | Diese Zahl wird in den pgm-Kopf geschrieben (vertikale Größe) |

```c
/*--------------------------------------------------------------------*/
/*                           ver.c                                    */
/*       Nachbearbeitung (Horizontalsynchronisation) von Videosequenzen */
/*  19.02.1996, Michael Koch,                                         */
/* Abteilung Allgemeine Elektrotechnik und Mikroelektronik, Universitaet Ulm */
/*--------------------------------------------------------------------*/
#include <stdio.h>
int main(int argc, char *argv[])
{
   FILE      *fpi_fbas,                      /* Eingabe-Dateizeiger FBAS */
             *fpi_pos,               /* Eingabe-Dateizeiger H-Sync-Position */
             *fpo;                            /* Ausgabe-Dateizeiger */
   unsigned char Zeile[3001];            /* Vektor zur Aufnahme eines Zeile */
   double    Position,                          /* H-Sync-Position */
             Dummy;              /* zum Einlesen von nicht benoetigten Daten */
   long      Positioni,                     /* "ganze" Position des H-Syncs */
             Zaehler,
             x,                             /* Abtastwerte pro Zeile */
             y,                                       /* Zeilen */
             Offset,                  /* Offset in FBAS-Datei fuer Darstellung */
             Dummy_i;
   char      data[15];   /* zur Ausgabe der aktuellen Position in der shell */
/*--------------------------------------------------------------------*/
   if (argc != 7)    /* Ausgabe einer Hilfe, falls keine 6 Parameter angegeben */
   {
      printf("%s FBAS-Dateiname Sync-Positions-Dateiname Ausgabedateiname Offset\
Abtastwerte/Zeile Zeilen\n",argv[0]);
      exit(1);
   }
/*--------------------------------------------------------------------*/
   if ((fpi_fbas = fopen(argv[1],"rb")) == NULL)         /* Dateien oeffnen */
   {
      printf("%s: %s nicht lesbar/gefunden!\n",argv[0],argv[1]);
      exit(1);
   }
   if ((fpi_pos = fopen(argv[2],"r")) == NULL)
   {
      printf("%s: nicht lesbar/gefunden!\n",argv[0],argv[2]);
      exit(1);
   }
   if ((fpo = fopen(argv[3],"wb")) == NULL)
   {
      printf("%s: Datei %s konnte nicht geoeffnet werden!\n",argv[0],argv[3]);
      exit(1);
   }
/*--------------------------------------------------------------------*/
   sscanf(argv[4], "%i", &Offset);                      /* Parameter einlesen */
   sscanf(argv[5], "%i", &x);
   sscanf(argv[6], "%i", &y);
   if (x > 3000)
   {
      printf("%s: Abtastwerte/Zeile muss kleiner 3000 sein!",argv[0]);
      exit(1);
   }
/*--------------------------------------------------------------------*/
   fprintf(fpo,"P5\n%i %i\n255\n",x ,y);                /* pgm-Header schreiben */
/*--------------------------------------------------------------------*/
   while (fscanf(fpi_pos,"%lf %lf %lf %i %i\n",&Position,     /* Sync-Pos. laden */
         &Dummy, &Dummy, &Dummy_i, &Dummy_i) == 5)
   {
      Positioni = (long) Position;
      sprintf(data, "%i\r", Positioni);    /* Ausgabe akt. Position am Terminal */
      write(1, data, strlen(data));
      fseek(fpi_fbas, Offset + Positioni, 0); /* Dateizeiger auf H-Sync setzen */
      fread(Zeile, sizeof(char), x+1, fpi_fbas);        /* eine Zeile einlesen */
      for(Zaehler = 0; Zaehler < x; Zaehler++)         /* lineare Interpolation */
         Zeile[Zaehler] = Zeile[Zaehler] + (char) ((Position -
                      Positioni)*(Zeile[Zaehler+1]-Zeile[Zaehler]));
```

```
69    fwrite(Zeile, sizeof(char), x, fpo);                 /* Zeile schreiben */
70    }
71 /*------------------------------------------------------------------------*/
72    fclose(fpi_fbas);                                     /* Dateien schliessen */
73    fclose(fpi_pos);
74    fclose(fpo);
75    printf("\n");
76    return 0;
77 }
```

*A.2.7 Programm* vervs.c **zur Vollbilderzeugung aus Videosequenzen**

Im Modul vervs werden Vollbilder aus der Ausgabedatei von vsync erzeugt und als pgm-Datei abgespeichert. Die Parameter sind:

| | |
|---|---|
| FBAS-Dateiname | Datei, die die bearbeitete Videosequenz enthält |
| Sync-Positions-Dateiname | Datei, in der die Horizontal-Synchronimpulspositionen und die dazugehörigen Zeilennummern stehen |
| Ausgabedateiname | An diesen Namen wird zusätzlich die Nummer des Vollbildes in der Form _1, _2, ... und die Endung .pgm angehängt. |
| Offset | Offset zur horizontalen Verschiebung, damit sich z. B. der Synchronimpuls in der Bildmitte und nicht am linken Rand befindet |
| Abtastwerte/Zeile | in dieser Arbeit immer 1152 |
| Zeilen | Größe des Vollbilds in Zeilen, bei der CCIR-Norm 625 |

```
/*----------------------------------------------------------------------*/
/*                           vervs.c                                    */
/* Nachbearbeitung (Horizontal-/Vertikalsynchronisation) von Videosequenzen */
/* 10.02.1996, Michael Koch.                                            */
/* Abteilung Allgemeine Elektrotechnik und Mikroelektronik, Universitaet Ulm */
/*----------------------------------------------------------------------*/
#include <stdio.h>
int main(int argc, char *argv[])
{
  FILE      *fpi_fbas,                    /* Eingabe-Dateizeiger FBAS */
            *fpi_pos,              /* Eingabe-Dateizeiger H-Sync-Position */
            *fpo;                          /* Ausgabe-Dateizeiger */
  unsigned char Zeile[3001];         /* Speichervektor fuer eine Zeile */
  double    Position,                        /* H-Sync-Position */
            Zeile_akt,              /* die in Arbeit befindliche Zeile */
            Dummy;
  long      Positioni,                 /* "ganze" Position des H-Syncs */
            Zaehler,
            x,                         /* Abtastwerte pro Zeile */
            y,                         /* Zeilen pro Vollbild */
            Offset,            /* Offset in FBAS-Datei fuer Darstellung */
            Zeile_akt_geom,    /* Zeilennummer, geometrische Zaehlweise */
            Zeilenzaehler,
            Vollbild_Nr = 0;
  char      data[40],    /* zur Ausgabe der aktuellen Position in der shell */
            dateiname[256];            /* zur Ausgabe der Vollbilddateien */
  unsigned char frame[7200000];          /* zum Schreiben eines Vollbildes */
  int       Dummy_i;
/*----------------------------------------------------------------------*/
  if (argc != 7)   /* Ausgabe einer Hilfe, falls keine 6 Parameter angegeben */
  {
    printf("%s FBAS-Dateiname Sync-Positions-Dateiname Ausgabedateiname Offset\
 Abtastwerte/Zeile Zeilen\n",argv[0],argv[0]);
    return 1;
  }
/*----------------------------------------------------------------------*/
  if ((fpi_fbas = fopen(argv[1],"rb")) == NULL)          /* Dateien oeffnen */
  {
    printf("%s: %s nicht lesbar/gefunden!\n",argv[0],argv[1]);
    exit(1);
  }
  if ((fpi_pos = fopen(argv[2],"r")) == NULL)
  {
    printf("%s: nicht lesbar/gefunden!\n",argv[0],argv[2]);
    exit(1);
  }
/*----------------------------------------------------------------------*/
  sscanf(argv[4], "%i", &Offset);                       /* Parameter einlesen */
  sscanf(argv[5], "%i", &x);
  sscanf(argv[6], "%i", &y);
  if (x > 3000)
  {
    printf("%s: Abtastwerte/Zeile muss kleiner 3000 sein!",argv[0]);
    exit(1);
  }
/*----------------------------------------------------------------------*/
  while (fscanf(fpi_pos,"%lf %lf %lf %i %i\n",          /* Sync-Pos. laden */
                &Position, &Zeile_akt, &Dummy, &Dummy_i, &Dummy_i) == 5)
  {
    if (Zeile_akt == 1)                                /* neues Vollbild */
    {
      Vollbild_Nr++;
      if (Vollbild_Nr != 1)              /* vergangenes Vollbild schreiben */
      {
        fwrite(frame, sizeof(char), x*y, fpo);
        for(Zaehler = 0; Zaehler < x*y; Zaehler++)
          frame[Zaehler] = 0;           /* Vektor wieder mit Nullen fuellen */
        fclose(fpo);                            /* Datei schliessen */
```

```
69        }
70        sprintf(dateiname,"%s_%i.pgm",argv[3],Vollbild_Nr); /* Dateiname bilden */
71        if ((fpo = fopen(dateiname,"wb")) == NULL)
72        {
73          printf("%s: Ausgabedatei kann nicht geoeffnet werden!",argv[0]);
74          return 1;
75        }
76        fprintf(fpo,"P5\n%i %i\n255\n", x, y);              /* pgm-Header schreiben */
77      }
78      if (Zeile_akt > y)
79        Zeile_akt -= y*(int)(Zeile_akt / y)              /* Zeilennummernkorrektur */
80      if (Zeile_akt < 1) Zeile_akt += y; /* zu kleine Zeilennummer korrigieren */
81      if (Zeile_akt <= (y/2+1))              /* geometrische Zeilennumer berechnen */
82        Zeile_akt_geom = (long) (Zeile_akt*2) - 1;
83          else
84            Zeile_akt_geom = (long) ((Zeile_akt - y/2 - 1) * 2);
85      Positioni = (long) Position;
86      sprintf(data,"%3.01f %3i %3i %i\r",     /* Ausgabe akt. Daten zum Terminal */
87                Zeile_akt, Zeile_akt_geom, Positioni, Vollbild_Nr);
88      write(1, data, strlen(data));
89      fseek(fpi_fbas, Offset + Positioni, 0); /* Dat.zeiger setzen, Zeile lesen */
90      fread(&frame[Zeile_akt_geom*x], sizeof(char), x+1, fpi_fbas);
91      for(Zaehler = 0; Zaehler < x; Zaehler++)
92        frame[Zeile_akt_geom*x+Zaehler] =                /* lineare Interpolation */
93          frame[Zeile_akt_geom*x+Zaehler]
94                     + (char) ((Position-Positioni)*(
95                               frame[Zeile_akt_geom*x+Zaehler+1]
96                              -frame[Zeile_akt_geom*x+Zaehler]));
97      Zeilenzaehler++;
98    }
99 /*-------------------------------------------------------------------------*/
100   if (fpo != NULL)                          /* evtl. letztes Vollbild schreiben */
101   {
102     fwrite(frame, sizeof(char), x*y, fpo);
103     fclose(fpo);
104   }
105   fclose(fpi_fbas);                                      /* Dateien schliessen */
106   fclose(fpi_pos);
107   printf("\n");
108   return 0;
109 }
```

**A.2.8 Programm** zeil.c **zur Zeilenextraktion aus Videosequenzen**

Mit diesem Modul kann man aus den sehr großen und binären Videosequenzdateien einzelne Abschnitte, z. B. eine Zeile, als ASCII-Datei abspeichern, um sie z. B. mit dem Plot-Programm gnuplot zeichnen lassen zu können. Die Parameter bedeuten:

| | |
|---|---|
| FBAS-Dateiname | Datei, die die bearbeitete Videosequenz enthält |
| Sync-Positions-Dateiname | Datei, in der die Horizontal-Synchronimpulspositionen und die dazugehörigen Zeilennummern stehen |
| Ausgabedateiname | In diese Datei wird der gewünschte Ausschnitt der Videosequenz abgespeichert |
| Zeile | gewünschte Zeilennummer (1 bis 625) |
| x-Offset | Dieser Wert wird beim Setzen des Dateizeigers zur Horizontal-Synchronimpulsposition hinzuaddiert |
| Laenge | Anzahl der zu schreibenden Abtastwerte |
| Vollbildnummer | Vollbildnummer - 1 auftretende Zeilen mit der Nummer Zeile werden übersprungen |

```
/*-------------------------------------------------------------------------*/
/*                            zeil.c                                      */
/*           ASCII-Abspeicherung von Videosequenzbereichen               */
/* 08.01.1996, Michael Koch,                                             */
/* Abteilung Allgemeine Elektrotechnik und Mikroelektronik, Universitaet Ulm */
/*-------------------------------------------------------------------------*/
#include <stdio.h>
int main(int argc, char *argv[])
{
  FILE         *fpi_fbas,              /* Eingabe-Dateizeiger FBAS */
               *fpi_pos,        /* Eingabe-Dateizeiger H-Sync-Position */
               *fpo;                    /* Ausgabe-Dateizeiger */
  unsigned char Zeile[300000];      /* zur Aufnahme der binaeren Daten */
  double       Position;                   /* Sync-Position */
  long         Positioni,              /* Integer-Sync-Position */
               Zeilenzaehler,          /*
               Zeilennummer,
               Vollbildzaehler, /* Zeilennummer trat Vollbildnummer mal auf */
               Vollbildnummer,            /* gewuenschtes Vollbild */
               Offset,               /* Offset bezueglich Sync-Position */
               Laenge,        /* Anzahl der auszugebenden
               Zaehler,
               Dummy;
/*-------------------------------------------------------------------------*/
  if (argc != 8)
  {
    printf("%s FBAS-Dateiname Sync-Positions-Dateiname Ausgabedateiname Zeile\
x-Offset Laenge Vollbildnummer\n",argv[0]);
    exit(1);
  }
  if ((fpi_fbas = fopen(argv[1],"rb")) == NULL)
  {
    printf("%s: %s nicht lesbar/gefunden!\n",argv[0],argv[1]);
    exit(1);
  }
  if ((fpi_pos = fopen(argv[2],"r")) == NULL)
  {
    printf("%s: %s nicht lesbar/gefunden!\n",argv[0],argv[2]);
    exit(1);
  }
  if ((fpo = fopen(argv[3],"w")) == NULL)
  {
    printf("%s: Ausgabedatei kann nicht geoeffnet werden!",argv[0]);
    exit(1);
  }
/*-------------------------------------------------------------------------*/
  sscanf(argv[4], "%i", &Zeilennummer);          /* Parameter einlesen */
  sscanf(argv[5], "%i", &Offset);
  sscanf(argv[6], "%i", &Laenge);
  sscanf(argv[7], "%i", &Vollbildnummer);
/*-------------------------------------------------------------------------*/
  while (fscanf(fpi_pos,"%lf %i %i %i %i\n", /* gewuenschtes Vollbild suchen */
        &Position, &Zeilenzaehler, &Dummy, &Dummy, &Dummy) == 5)
  {
    if (Zeilenzaehler == Zeilennummer)              /* Zeile gefunden? */
      Vollbildzaehler++;
    if (Vollbildzaehler == Vollbildnummer) /* gewuenschtes Vollbild gefunden? */
      break;
  }
  if (Vollbildzaehler != Vollbildnummer || Zeilenzaehler != Zeilennummer)
  {
    printf("Zeile/Vollbild nicht gefunden!\n");
    exit(1);
  }
  Positioni = (long) Position;
  fseek(fpi_fbas, Offset + Positioni, 0);            /* Dateizeiger setzen */
  fread(Zeile, sizeof(char), Laenge, fpi_fbas);        /* Daten einlesen */
  for(Zaehler = 0; Zaehler < Laenge; Zaehler++)
```

```
69                                      /* lineare Interpolation zwischen den Pixeln */
70    Zeile[Zaehler] = Zeile[Zaehler]
71                    + (char) ((Position - Positioni)*
72                            (Zeile[Zaehler+1]-Zeile[Zaehler]));
73  for(Zaehler = 0; Zaehler < Laenge; Zaehler++)        /* Ausgabe in Datei */
74    fprintf(fpo,"%i\n", Zeile[Zaehler]);
75 /*--------------------------------------------------------------------*/
76   fclose(fpi_fbas);                                  /* Dateien schliessen */
77   fclose(fpi_pos);
78   fclose(fpo);
79 }
```

### A.2.9 Ausgabedateiformat

Die von den drei Modulen ssd, hsync und vsync erzeugten Ausgabedateien haben alle denselben Aufbau, damit die Programme zur Nachbearbeitung universell verwendbar sind. In einer Zeile der Ausgabedateien befinden sich die folgenden Informationen:

| | |
|---|---|
| Spalte 1 | Impulsschwerpunkt des Synchronimpulses; Position in der FBAS-Eingabedatei auf Bruchteile eines Abtastwerts genau, einschließlich Header |
| Spalte 2 | Synchronimpulsnummer (ssd), Halbbild-Zeilennummer (hsync) bzw. Vollbild-Zeilennummer (vsync) |
| Spalte 3 | binär codierte Information, dezimal ausgegeben: |
| | Bit 0: Halbbild (0 = Halbbild 1, 1 = Halbbild 2) |
| | Bit 1: gesetzt, falls ein Norm-Vertikal-Synchronimpuls erkannt wurde |
| | Bit 2: gesetzt, falls die gemessene Zeilenfrequenzen der aktuellen und der zwei in der Zukunft liegenden Zeilen im Toleranzband liegen, d. h. die Zeile ist intakt |
| Spalte 4 | von ssd berechneter Schwarzwert (nicht weiter verwendet) |
| Spalte 5 | von ssd berechnete Schwelle zur Synchronimpulserkennung (nicht weiter verwendet) |

| Beispiel: | | | | |
|---|---|---|---|---|
| 1829.811977 | 1 | 4 | 66 | 36 |
| 2982.267062 | 2 | 4 | 66 | 36 |
| 4134.951935 | 3 | 4 | 65 | 35 |
| 5287.828475 | 4 | 4 | 67 | 36 |
| 6440.943729 | 5 | 4 | 66 | 36 |
| 7594.242034 | 6 | 4 | 63 | 34 |
| 8747.797522 | 7 | 4 | 67 | 37 |
| 9901.541561 | 8 | 4 | 65 | 35 |

### Symbolverzeichnis

| | |
|---|---|
| $f_A$ | Abtastfrequenz |
| $f_h$ | Zeilenfrequenz, Horizontalfrequenz |
| $f_{SC}$ | Farbhilfsträgerfrequenz |
| $f_v$ | Bildwechselfrequenz, Vertikalfrequenz |
| $i,j$ | Zählvariablen |
| $k$ | diskrete Zeit |
| $k_R$ | Abtastwertnummer nach der Überschreitung der Schwelle $\varphi_{sv}(k_V)$ |
| $k_S$ | Synchronimpulsschwerpunkt |
| $k_V$ | Punkt auf der Vorderflankengerade der Korrelationsfolge |
| $m$ | Anzahl der Werte einer Zahlenfolge, die zu ihrer Mittelung verwendet werden |

(fortgesetzt)

| | |
|---|---|
| $I_s$ | Länge des Horizontal-Synchronimpulses in Abtastwerten |
| $I_{s\_ist}$ | tatsächliches, im Videosignal auftretendes $I_s$ |
| $T_a$ | Abtastperiodendauer |
| $T_h$, $T_{h\_soll}$ | Zeilenperiodendauer, Sollwert |
| $T_{h\_füll}$ | Zeilenperiodendauer, mit der Lücken aufgefüllt werden |
| $T_{h\_ist}$, $\dot{k}_S$ | Periodendauer einer im Signal auftretenden Zeile |
| $T_{h\_mittel}$ | über mehrere Zeilen gemittelte Zeilenperiodendauer |
| $q$ | Quantisierung in bits |
| $U_{CS}$ | Composite-Synchron-Signal |
| $U_{FBAS}$ | Farb-Bild-Austast-Synchron-Signal |
| $U_{Sync}$ | Synchronwert |
| $U_{Schwarz}$ | Schwarzwert |
| $U_{Schwelle}$ | Aktivierungsschwellwert für den Synchronsignaldetektor |
| $v(k)$ | digitalisiertes Videosignal |
| $s(k)$ | Impulsantwort des Korrelationsfilters für den Horizontal-Synchronimpuls |
| $\delta(k)$ | zeitdiskreter Einheitsimpuls |
| $\varphi_{sv}(k)$ | Kreuzkorrelation |
| $z$ | Zeilenanzahl |

**Patentansprüche**

1. Vorrichtung zur Zeilensynchronisation eines Videosignals, bei dem die Zeilendauer Schwankungen unterworfen ist, mit einer Abtaststufe, die ein Videosignal mit einer festen Frequenz abtastet und digitalisiert, mit einer Zeilensynchronimpulsdetektorstufe, die die exakte Dauer der im digitalisierten Signal enthaltenen Zeilen liefert, **dadurch gekennzeichnet, daß** sie eine Mittelungsstufe enthält, die jeweils mehrere in einem Toleranzband um die normale Zeilendauer liegende Zeilendauern mittelt, und weiterhin eine Interpolationsstufe aufweist, die in Abhängigkeit des jeweils gemittelten Zeilendauerwertes eine Interpolation mit den gemessenen Abtastwerten der entsprechenden Zeile vornimmt, um eine normgerechte Zeile mit entsprechender Anzahl von Abtastwerten zu erzeugen.

2. Vorrichtung nach Anspruch 1, wobei die Zeilensynchronimpulsdetektorstufe, die genaue Lage eines Zeilensynchronimpulses durch eine Korrelationsrechnung zwischen dem Videozeilensignal und einem Zeilensynchronimpuls und anschließender Analyse der Ergebnisfunktion der Korrelationsrechnung bestimmt.

3. Vorrichtung nach Anspruch 2, wobei die Analyse der Ergebnisfunktion der Korrelationsrechnung eine Bestimmung der Position des Schnittpunktes zweier Geraden, die an die Flanken der Korrelationsfunktion angelegt werden, beinhaltet.

4. Vorrichtung nach einem der vorhergehenden Ansprüche, mit einer Generatorstufe, die fehlerhafte Zeilenlängen solange unterdrückt, und nötigenfalls im Toleranzband liegende Zeilenlängen generiert, bis mehrere aufeinanderfolgende Zeilendauern in einem Toleranzband um die Soll-Zeilendauer liegen.

5. Vorrichtung nach einem der vorhergehenden Ansprüche, mit einer Filterstufe zur digitalen Vorfilterung des Videosignals zur Störunterdrückung, um kurze Störimpulse und Rauschen zu unterdrücken.

6. Vorrichtung nach einem der vorhergehenden Ansprüche, wobei sie zur Messung der Zeilendauer den Systemtakt verwendet, in dem sie Abtastwerte zählt.

7. Vorrichtung nach einem der vorhergehenden Ansprüche, wobei sie zur Vertikal-Synchronisation die in mehrere Teile aufgeteilte charakteristische Zahlenfolge bzgl. der Phasen- und Frequenzmodulation auswertet und somit unanfällig ist gegen kurzzeitige Störungen im Synchronpegelbereich, d.h. im Rahmen von mehreren Zeilenperiodendauern.

8. Vorrichtung nach einem der vorhergehenden Ansprüche, wobei sie den Synchron- und Schwarzwert aus einer Signalfilterung bestimmt.

**Claims**

1. Apparatus for the line synchronization of a video signal in which the line duration is subjected to fluctuations, having a sampling stage, which samples a video signal with a fixed frequency and digitizes it, having a line sync pulse detector stage, which supplies the exact duration of the lines contained in the digitized signal, **characterized in that** it contains an averaging stage, which in each case averages a plurality of line durations lying in a tolerance band around the normal line duration, and furthermore has an interpolation stage, which, in a manner dependent on the respectively averaged line duration value, performs an interpolation with the measured samples of the corresponding line in order to generate a standard-conforming line with a corresponding number of samples.

2. Apparatus according to Claim 1, the line sync pulse detector stage determining the precise position of a line sync pulse by means of a correlation calculation between the video line signal and a line sync pulse and subsequent analysis of the result function of the correlation calculation.

3. Apparatus according to Claim 2, the analysis of the result function of the correlation calculation comprising a determination of the position of the point of intersection of two straight lines which are applied to the edges of the correlation function.

4. Apparatus according to one of the preceding claims, having a generator stage, which suppresses erroneous line lengths, and if necessary generates line lengths lying in the tolerance band, until a plurality of successive line durations lie in a tolerance band around the desired line duration.

5. Apparatus according to one of the preceding claims, having a filter stage for digital prefiltering of the video signal for the purpose of interference suppression, in order to suppress short interference pulses and noise.

6. Apparatus according to one of the preceding claims, the apparatus, for measuring the line duration, using the system clock in which it counts samples.

7. Apparatus according to one of the preceding claims, the apparatus, for the purpose of vertical synchronization, evaluating the characteristic sequence of numbers, which is divided into a plurality of parts, with regard to phase and frequency modulation and thus being unsusceptible to momentary disturbances in the synchronizing level range, i.e. within the scope of a plurality of line period durations.

8. Apparatus according to one of the preceding claims, the apparatus determining the synchronizing and black values from a signal filtering.

**Revendications**

1. Dispositif pour la synchronisation des lignes d'un signal vidéo, où la durée des lignes est soumise à des variation, avec une étape de balayage qui balaye et numérise un signal vidéo avec une fréquence fixe, avec une étape de détection d'impulsion de synchronisation de ligne qui délivre la durée exacte des lignes contenues dans le signal numérisé, **caractérisé en ce qu'**il comprenne une étape de calcul de la moyenne qui calcule respectivement la moyenne de plusieurs durées de lignes se situant dans une bande de tolérance autour de la durée de ligne normale, et présente par ailleurs une étape d'interpolation qui procède, en fonction respectivement de la valeur de la durée de ligne pour laquelle la moyenne a été calculée, à une interpolation avec les valeurs de balayage mesurées de la ligne correspondante, afin de produire une ligne correspondant à la norme avec un nombre correspondant de valeurs de balayage.

2. Dispositif selon la revendication 1, où l'étape de détection d'impulsion de synchronisation de ligne détermine la situation exacte d'une impulsion de synchronisation de ligne via un calcul de corrélation entre le signal de lignes vidéo et une impulsion de synchronisation de ligne et via une analyse qui s'en suit de la fonction de résultat du calcul de corrélation.

3. Dispositif selon la revendication 2, où l'analyse de la fonction de résultat du calcul de corrélation comporte une détermination de la position du point d'intersection de deux droites, qui sont appliquées aux flancs de la fonction de corrélation.

4. Dispositif selon l'une quelconque des revendications précédentes, avec une étape de générateur qui atténue des longueurs erronées de lignes aussi longtemps que, et génère des longueurs de lignes se situant dans la bande de tolérance lorsque nécessaire, jusqu'à ce que plusieurs durées de lignes successives se situent dans une bande de tolérance autour de la durée de ligne théorique.

5. Dispositif selon l'une quelconque des revendications précédentes, avec une étape de filtrage pour le préfiltrage numérique du signal vidéo afin d'atténuer les perturbations, pour d'atténuer de courtes impulsions de perturbation et le bruit de basse-fréquence.

6. Dispositif selon l'une quelconque des revendications précédentes, où il utilise la cadence du système pour la mesure de la durée de ligne en ce qu'il compte les valeurs de balayage.

7. Dispositif selon l'une quelconque des revendications précédentes, où il analyse à des fins de synchronisation verticale, la suite de nombres caractéristique partagée en plusieurs parties en ce qui concerne la modulation de phase et de fréquence, et n'est ainsi pas sujet aux perturbations brèves dans la plage de niveau de synchronisation, c'est-à-dire dans le cadre de plusieurs durées de périodes de lignes.

8. Dispositif selon l'une quelconque des revendications précédentes, où il détermine la valeur de synchronisation et la valeur du noir à partir d'un filtrage de signal.

Bildformat 4:3

Zeile

oben

links

rechts

unten

Fig. 1: Zeilenraster (liniert) und Strahlrückführung (gepunktet) beim Abtasten der Vorlage bzw. beim Schreiben des Abbildes

Zeile    Gesamtraster

Zeile    1. Halbraster

Zeile    2. Halbraster

Fig. 2: Aufteilung des Gesamtrasters (vgl. Fig. 1) in zwei Halbraster beim Zeilensprungverfahren, punktierte Linien sind Strahlrückführungen

Fig. 3: Horizontal–Synchronsignal innerhalb einer Zeile (CCIR–Norm B,G)

| Symbol | Bezeichnung | Zeitdauer | Anzahl der Abtastwerte $(f_A = 18\ \text{MHz})$ |
|---|---|---|---|
| a | Horizontal–Austastlücke | $(12 \pm 0.3)\ \mu s$ | $216 \pm 5$ |
| b | vordere Schwarzschulter | $(1.5 \pm 0.3)\ \mu s$ | $27 \pm 5$ |
| c | Horizontal-Synchronimpuls | $(4.7 \pm 0.2)\ \mu s$ | $l_s = 85 \pm 4$ |
| d | hintere Schwarzschulter | ca. $5.8\ \mu s$ | ca. 104 |
| e | Farbburstlage zur Vorderflanke des Horizontal-Synchronimpulses | $(5.6 \pm 0.1)\ \mu s$ | $101 \pm 2$ |
| $T_h$ | Zeilenperiodendauer | $64\ \mu s$ | 1152 |

Fig. 4: Vertikal–Synchronsignal und seine Aufintegration über 160 μs mit ungleichen Flanken in Abhängigkeit von der Halbbildnummer

Fig. 5: Vertikal–Synchronsignal mit Vor- und Nachimpulsen zur Vermeidung ungleicher Flanken bei seiner Aufintegration

48

Fig. 6: Videosequenz, Vertikal–Synchronsignal

Fig. 7: Aufzeichnung des FBAS–Signals beim Videorecorder und Wiedergabemodi

0.54 V Mittelwert
0.32 V Schwarzwert
0.16 V Entscheidungsschwelle
0 V Synchronwert

Wechselspannungskopplung

0 V
-0.22 V Schwarzwert
-0.38 V Entscheidungsschwelle
-0.54 V Synchronwert

Fig. 8: Pegeländerung des FBAS–Signals bei Wechselspannungskopplung

FBAS → Tiefpaß → Schwellwertschalter → Composite–Synchron

Fig. 9: Gewinnung des Composite–Synchronsignales

Composite–Synchronsignal ohne Vertikal–Synchron- und Ausgleichsimpulse

Phasendetektor → Regelfilter → spannungsgesteuerter Oszillator (500 kHz)

$\frac{1}{32}$

Signal mit der Zeilenfrequenz, zur PLL 2 (Abb. 11)

Fig. 10: Erzeugung des Steuersignals für die Horizontalablenkung (PLL 1)

Signal von der PLL 1     horizontale Bildlage

Phasendetektor → ⊕ → Regelfilter → Sägezahn–Generator

Zeilenrückschlagimpuls („flyback")     Ablenkung

Fig. 11: Regelung der Horizontalablenkung (PLL 2)

Fig. 12: Korrelationsfilter für den Horizontal–Synchronimpuls

Fig. 13: Verschiebung eines Impulses um einen Bruchteil eines Pixels ($l_s = 25$)

Fig. 14: Korrelationsfunktion $\varphi_{sv}(k)$ des Impulses aus Fig. 13, ihre Ableitung $\dot{\varphi}_{sv}(k)$, ihre über $m = 8$ Werte gemittelte Ableitung $\bar{\dot{\varphi}}_{sv}(k)$ und deren Differenz

Fig. 15: Ableitung der Korrelationsfolge

Fig. 16: Mittelung einer Abtastwertfolge über $m$ Werte

Fig. 17: Zeilenperiodendauerfolge $T_{h\_ist} = \dot{k}_S$ am Ausgang des Synchronsignaldetektors

Fig. 18: mittleres Phasenrauschen bei der Synchronimpulsdetektion durch Korrelation in Abhängigkeit vom SNR des Synchronsignales

Fig. 19: Weiterverarbeitung der Zeilenperiodendauerfolge $T_{h\_ist} = \dot{k}_S$ im Horizontal-Synchronsignalgenerator und Ausnutzung der Phasen- und Frequenzmodulation der Synchronimpulse zur Vertikal-Synchronisation (siehe Abschnitt 5.4)

# Verarbeitung digitalisierter FBAS–Signale

EP 0 796 007 B1

Fig. 20: Videosequenz, sechsfach kopierte Aufnahme, normale Wiedergabe

Fig. 21: horizontal synchronisierte Videosequenz aus Fig. 20

Fig. 22: horizontal und vertikal synchronisierte Videosequenz aus Fig. 20 (Vollbild)

Fig. 23: Videosequenz, Suchlauf mit doppelter Geschwindigkeit, zwei Köpfe, VHS

Fig. 24: horizontal synchronisierte Videosequenz aus Fig. 23

Fig. 25: horizontal und vertikal synchronisierte Videosequenz aus Fig. 23 (Vollbild)

Fig. 26: Videosequenz, Suchlauf mit vierfacher Geschwindigkeit, vier Köpfe, SVHS

Fig. 27: horizontal synchronisierte Videosequenz aus Fig. 26

Fig. 28: horizontal und vertikal synchronisierte Videosequenz aus Fig. 26 (Vollbild)

Fig. 29: Videosequenz, zweifach kopierte Aufnahme, Standbild

Fig. 30: horizontal synchronisierte Videosequenz aus Fig. 29

Fig. 31: horizontal und vertikal synchronisierte Videosequenz aus Fig. 29 (Vollbild)

Fig. 32: Videosequenz, sechsfach kopierte Aufnahme, Zeitraffer

Fig. 33: horizontal synchronisierte Videosequenz aus Fig. 32

Fig. 34: horizontal und vertikal synchronisierte Videosequenz aus Fig. 32 (Vollbild)

Fig. 35: Über Kabel empfangene Videosequenz im 16:9-Format

Fig. 36: horizontal und vertikal synchronisierte Videosequenz aus Fig. 35 (Vollbild)

| |
|---|
| Überprüfe, ob die richtige Anzahl von Parametern angegeben wurde<br>Falls nicht, gib eine Hilfestellung aus und beende das Programm    23–28 |
| Öffne die Dateien für die Ein- und Ausgabe<br>Falls ein Fehler auftritt, gib eine Meldung aus und beende das Programm<br>29–33 |
| Konvertiere die angegebenen Parameter von Strings in Integer–Variablen<br>Allokiere Speicher zur Aufnahme der FBAS–Datei, evtl. Programmabbruch<br>35–38 |
| Setze den Dateizeiger auf die Stelle (Offset + 256) (Header)<br>Lese x mal y Werte aus der FBAS–Datei ein und schließe die Datei   40–42 |
| Öffne die Ausgabedatei zum Schreiben der portable greymap (pgm)<br>Falls ein Fehler auftritt, gib eine Meldung aus und beende das Programm<br>43–47 |
| Schreibe den pgm–Header und die eingelesene FBAS–Datei   48,49 |
| Schließe die Ausgabedatei und gib den allokierten Speicher wieder frei<br>50,51 |
| Liefere den Wert 0 an die ausführende Umgebung zurück   52 |

Fig. 37: Flußdiagramm mkpgm.c (Headerwechsel)

Überprüfe, ob die richtige Anzahl von Parametern angegeben wurde
Falls nicht, gib eine Hilfestellung aus und beende das Programm   58-63

Initialisiere Variablen, konvertiere die Parameter von Strings nach Integer
Allokiere Speicher für die FBAS–Daten und anderen Signale   65–83

Öffne die Dateien für die Ein- und Ausgabe
Falls ein Fehler auftritt, Meldung ausgeben, Programmende   85–94

Setze den Dateizeiger auf Offset, überspringe dabei den Header   95

Lese einen Block mit Blocklaenge Bytes FBAS–Daten ein
Ende–Flag setzen, falls der Block nicht mehr gefüllt werden kann   99–104

Ist die Blocknummer gleich 0 ? Ja → Initialisiere den Tiefpaß (Auffüllen)   105–112

Inkrementiere Blocknummer   113

Für Abtastwertnummer = 0 bis Blocklaenge - H_Sync_Laenge

Inkrementiere Abtastwertzähler   119

Addiere Abtastwert, der *in* das Integrationsfenster fällt
Subtrahiere Abtastwert, der *aus* dem Integrationsfenster fällt   121–122

Bilde die Ableitung des Tiefpaßsignals
und die Mittelung hiervon über Glaettung_Abtastwerte   124–126

Falls TP–Signal < Aktivierungsschwelle
dann   128

Falls Flanke abknickt, Sprung „hoch"
dann   130

Flag/Zähler setzen, alten TP–Signalwert, Steigung merken   133-136

Falls Flag gesetzt und TP über Schwelle
dann   138

Impulsschwerpunkt (Gl. 5.6 $k_v = 0$), Pegel berechnen
Flag löschen, Zeilenzähler inkrementieren, Werte schreiben   140–148

Falls Flag gesetzt ist
dann   150

Inkrementiere Zähler, da TP–Signal < alter TP–Signalwert   151

Aktualisiere Register   154–156

Dateizeiger um die Länge des Summations–Fensters zurücksetzen   159

Solange das Ende–Flag nicht gesetzt ist   161

Speicher freigeben, Dateien schließen, Null zurückliefern   163–169

Fig. 38: Flußdiagramm Synchronsignaldetektor ssd.c

Überprüfe, ob die richtige Anzahl von Parametern angegeben wurde
Falls nicht, gib eine Hilfestellung aus und beende das Programm   55–60

Konvertiere die Parameter von Strings nach Integer, initialisiere Variablen
Allokiere Speicher für Signale   67–78

Öffne die Dateien für die Ein- und Ausgabe
Falls ein Fehler auftritt, Meldung ausgeben, Programmende   80–90

Lese und speichere die Position des ersten Sync–Impulses   91-94

Solange Sync–Positionsdaten eingelesen werden können   95–96

Bilde die Ableitung der Sync-Position ($T_{h\_ist}$)   98

Suche nach den charakteristischen Zahlenfolgen der V–Syncs   100–120

Setze Flag „V–Sync detektiert" zurück, falls `Zeilenzaehler` > 640  122–123

Falls Zeile in Toleranzband liegt

dann          sonst   125

| dann | sonst |
|---|---|
| Integrationsregister aktualisieren  127<br>neue Registersumme bilden  128<br>Bilde $T_{h\_mittel}$  129 | Addiere $T_h$ (außerhalb Toleranz)<br>in den Zwischenspeicher<br>relativ_Abtastwerte   138 |
| `relativ_Abtastw.` += $T_{h\_mittel}$  130 | |
| Mittelung von $|\dot{T}_h|$  131–133 | |
| Register verschieben  134–135 | |

Solange `relativ_Abtastwerte` > $1.5\,T_{h\_soll}$   140

Setze Info: Position ist aufgefüllt und nicht detektiert   142

Ausgabe in Datei, Differentiation rückgängig machen   143–145

`Zeilenzaehler` inkrementieren, `relativ_Abtastw.` vermindern 146–147

Falls nächste $T_h$ in Tol., `rel._A.` + nächstes $T_h$ nicht näher an $T_{h\_soll}$   150

Setze Info: Position ist detektiert (bzw. Sprung ausgegeben)   155

Ausgabe in Datei; falls aktuelles $T_h$ in Tol., berechne $T_{h\_füll}$ 156–159

Integration rückgängig machen, Zeilenzähler inkrementieren 160–161

Zwischenspeicher `relativ_Abtastwerte` zu Null setzen   162

Register verschieben   165-166

Speicher freigeben, Dateien schließen, Null zurückliefern   169–175

Fig. 39: Flußdiagramm Horizontal–Synchronimpulsgenerator `hsync.c`

| | |
|---|---|
| Überprüfe, ob die richtige Anzahl von Parametern angegeben wurde<br>Falls nicht, gib eine Hilfestellung aus und beende das Programm | 33–37 |
| Konvertiere die Parameter von Strings nach Integer bzw. Real<br>Initialisiere Variablen | 40–43 |
| Öffne die Dateien für die Ein- und Ausgabe<br>Falls ein Fehler auftritt, Meldung ausgeben, Programmende | 45–58 |
| Setze Zeilenzähler auf Null | 61 |
| Solange Sync–Positionsdaten eingelesen werden können | 63–64 |
| Konvertiere Daten von double nach int | 66–68 |

Falls normaler V–Sync detektiert

| dann | sonst | 69 |
|---|---|---|
| Zeilenz.>313 & Sprung→Standbild 72 | Zeilenzähler inkrementieren 86 | |

Falls Zeile nicht intakt

| | |
|---|---|
| Vollbildgröße ermitteln 73–74 | |
| Zeilenzähler von hsync nehmen 75 | dann |
| Halbbild aus Info lesen 76 | Abtastwerte für Tiefpaß lesen 89–91 |
| Standbild–Halbbild–Wechsel?<br>dann Halbbild–Bit invertieren 77–82<br>und Zeilenzähler entspr. setzen | Tiefpaßsignal berechnen 92–96 |
| | Schwelle berechnen 97 |
| | Tiefpaßsignal<Schwelle? 98 |
| | dann: HB, Zeilenzähler setzen 100–104 |
| Halbbildinformation setzen, Ausgabe in Datei | 107-113 |
| Dateien schließen, Null zurückliefern | 113-116 |

Fig. 40: Flußdiagramm Vertikal–Synchronimpulsgenerator vsync.c

| Überprüfe, ob die richtige Anzahl von Parametern angegeben wurde Falls nicht, gib eine Hilfestellung aus und beende das Programm | 24–29 |
|---|---|
| Öffne die Dateien für die Ein- und Ausgabe Falls ein Fehler auftritt, gib eine Meldung aus und beende das Programm | 31–45 |
| Konvertiere die angegebenen Parameter von Strings in Integer–Variablen Überprüfe Parameter, evtl. Programmabbruch | 47–54 |
| Schreibe den pgm–Header | 56 |

| Solange Daten aus der Eingabedatei gelesen werden können | 58–59 |
|---|---|
| Integer–Position des Sync–Pulses aus Real bilden | 61 |
| Positionsdaten auf Terminal ausgeben | 62–63 |
| Dateizeiger auf H–Sync–Position setzen | 64 |
| eine Zeile einlesen und zwischen den Pixeln linear interpolieren | 66–68 |
| Zeile schreiben | 69 |

| Dateien schließen und Null zurückliefern | 72–76 |
|---|---|

Fig. 41: Flußdiagramm Nachbearbeitung (Horizontal–Sync) ver.c

| | |
|---|---|
| Überprüfe, ob die richtige Anzahl von Parametern angegeben wurde<br>Falls nicht, gib eine Hilfestellung aus und beende das Programm | 30–35 |
| Öffne die Eingabedateien FBAS und Sync–Position<br>Falls ein Fehler auftritt, gib eine Meldung aus und beende das Programm | 37–46 |
| Konvertiere die angegebenen Parameter von Strings in Integer–Variablen<br>Überprüfe Parameter, evtl. Programmabbruch | 48–55 |
| Solange Daten eingelesen werden können | 57–58 |

Falls Zeile gleich eins ist / 60
dann

| | |
|---|---|
| Inkrementiere Vollbild–Nummer | 62 |

Falls Vollbild–Nummer≠1 ist / 63
dann

| | |
|---|---|
| Schreibe das gerade geschriebene Vollbild in die Datei | 65 |
| Lösche das Vollbild und schließe die Datei | 66-69 |
| Setze den Dateinamen zusammen und öffne die Ausgabedatei | 70–75 |
| Schreibe den pgm–Header | 76 |
| Zeilennummernkorrektur, Bereich 1–625 | 78–80 |
| Berechne die geometrische Zeilennummer | 81–84 |
| Gib Daten auf dem Terminal aus, setze den Dateizeiger auf H–Sync | 85–89 |
| Lese eine Zeile ein und schreibe sie interpoliert in den Bildspeicher | 90–96 |
| Inkrementiere Zeilenzähler | 97 |
| Schreibe evtl. letzes Vollbild in die Datei und schließe sie | 100-104 |
| Schließe die Eingabedateien und liefere den Wert Null zurück | 105–108 |

Fig. 42: Flußdiagramm Nachbearbeitung (Vertikal– und Horizontal–Sync) vervs.c

| | |
|---|---|
| Überprüfe, ob die richtige Anzahl von Parametern angegeben wurde<br>Falls nicht, gib eine Hilfestellung aus und beende das Programm | 25–29 |
| Öffne die Dateien für die Ein- und Ausgabe<br>Falls ein Fehler auftritt, gib eine Meldung aus und beende das Programm | 31–45 |
| Konvertiere die angegebenen Parameter von Strings in Integer–Variablen | 47–50 |
| Solange Daten vorhanden sind | 52–53 |
|     Falls Zeilennummer gefunden: Inkrementiere Vollbildzähler | 55–56 |
|     Verlasse die Schleife, falls das gewünschte Vollbild erreicht wurde | 57–58 |
| Fehlermeldung ausgeben, falls die Zeile nicht gefunden wurde, Programmende | 60–64 |
| Dateizeiger auf den Synchronimpuls der Zeile setzen + Offset | 65–66 |
| Lese die gewünschte Anzahl von Pixeln ein | 67 |
| Gib die interpolierten Pixel als ASCII–Datei aus | 68–74 |
| Schließe die Dateien | 76–78 |

Fig. 43: Flußdiagramm ASCII–Zeilenextraktion `zeil.c`

Fig. 44: Aufteilung der Datei in Blöcke

## Verarbeitung digitalisierter FBAS–Signale

Fig. 45